(19) Europäisches Patentamt
European Patent Office
Office européen des brevets

(11) EP 4 757 321 A1

(12) **EUROPEAN PATENT APPLICATION**
published in accordance with Art. 153(4) EPC

(43) Date of publication:
**10.06.2026 Bulletin 2026/24**

(21) Application number: **24848990.8**

(22) Date of filing: **23.07.2024**

(51) International Patent Classification (IPC):
***H04N 21/2662** (2011.01)* ***G06T 19/00** (2011.01)*
***H04N 21/24** (2011.01)* ***H04W 28/24** (2009.01)*

(52) Cooperative Patent Classification (CPC):
**G06T 19/00; H04N 21/24; H04N 21/2662; H04W 28/24**

(86) International application number:
**PCT/JP2024/026222**

(87) International publication number:
**WO 2025/028335 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023 JP 2023127293**

(71) Applicant: **Sony Group Corporation**
**Tokyo 108-0075 (JP)**

(72) Inventor: **TSUDA, Shinichiro**
**Tokyo 108-0075 (JP)**

(74) Representative: **Witte, Weller & Partner Patentanwälte mbB**
**Postfach 10 54 62**
**70047 Stuttgart (DE)**

# (54) INFORMATION PROCESSING APPARATUS AND INFORMATION PROCESSING METHOD

(57) An information processing apparatus includes: a specifying unit that specifies latency requirement information related to reflection of an operation of a user on moving image content of Extended Reality (XR); an acquisition unit that acquires acceptability information related to a transmission delay of a QoS flow assigned to a session established for an application related to the moving image content; and a decision unit that makes a decision related to generation of data regarding the moving image content to be transmitted to a terminal apparatus used by the user, based on the latency requirement information and the acceptability information.

FIG.1

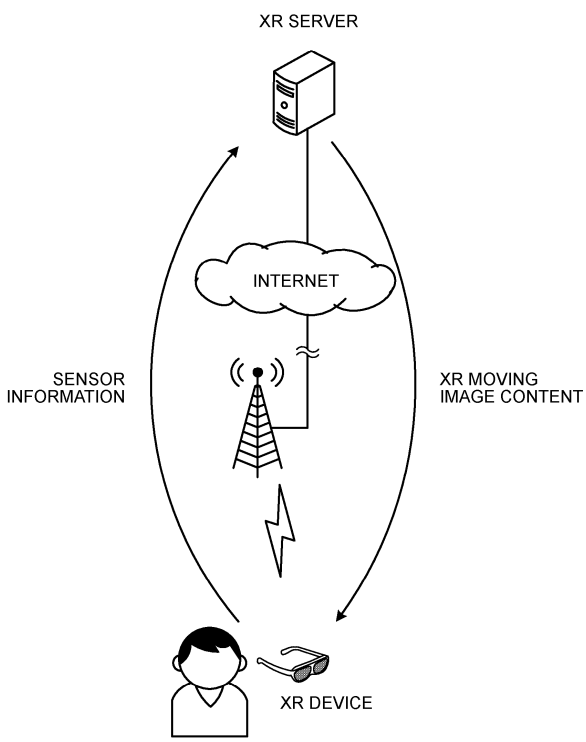


EP 4 757 321 A1

## Description

Field

The present disclosure relates to an information processing apparatus and an information processing method.

Background

Recent mobile networks (for example, a cellular network such as 5G) are required to achieve high communication performance (for example, connection stability, low latency, high reliability, high throughput, power saving, low processing load, etc.). Among these, achievement of stable low latency wireless transmission is a very important factor in implementing new communication services (for example, device control in IoT, real-time communication in a game or VR, etc.) emerging in recent years.

Citation List

Patent Literature

Patent Literature 1: JP 2021-100256 A

Summary

Technical Problem

However, it is difficult to provide the user with high-quality communication services just with conventional technologies. For example, one of recent research topics is wireless delivery of media for experiencing a high realistic feeling using the XR technology. The wireless delivery of such media needs achievement of stable low latency wireless transmission. However, it is difficult to implement stable low latency wireless transmission under a dynamically changing wireless environment. This makes it difficult to provide a high-quality communication service to the user, for example, in an aspect of delayed reflection of the user's operation onto the XR moving image content.

Therefore, the present disclosure proposes an information processing apparatus and an information processing method capable of providing high-quality communication services.

Note that the above-described problem or target is merely one of a plurality of problems or targets that can be solved or achieved by a plurality of embodiments disclosed in the present specification.

Solution to Problem

In order to solve the above problem, an information processing apparatus according to one embodiment of the present disclosure includes: a specifying unit that specifies latency requirement information related to reflection of an operation of a user on moving image content of Extended Reality (XR); an acquisition unit that acquires acceptability information related to a transmission delay of a Quality of Service (QoS) flow assigned to a session established for an application related to the moving image content; and a decision unit that makes a decision related to generation of data regarding the moving image content to be transmitted to a terminal apparatus used by the user, based on the latency requirement information and the acceptability information.

Brief Description of Drawings

FIG. 1 is a diagram illustrating outline of the present embodiment.
FIG. 2 is a diagram illustrating a configuration of a communication system according to the present embodiment.
FIG. 3 is a diagram illustrating a configuration example of a server according to an embodiment of the present disclosure.
FIG. 4 is a diagram illustrating a configuration of a management apparatus according to the present embodiment.
FIG. 5 is a diagram illustrating a configuration of a base station according to the present embodiment.
FIG. 6 is a diagram illustrating a configuration of a terminal apparatus according to the present embodiment.
FIG. 7 is a diagram illustrating a configuration example of 5GS architecture.
FIG. 8 is a diagram illustrating a configuration example of an XR architecture in 5G.

FIG. 9 is a diagram illustrating an example of a QoS architecture of 5GS.
FIG. 10 is a diagram illustrating standardized SST values.
FIG. 11 is a diagram illustrating an example of a connection procedure in 5GS.
FIG. 12A is a diagram illustrating an example of a PDU session establishment procedure.
FIG. 12B is a diagram illustrating an example of a PDU session establishment procedure.
FIG. 13 is a diagram illustrating an example of a procedure for reflecting an AF request in session routing.
FIG. 14 is a diagram illustrating an example of a procedure for reflecting an AF request targeted at an individual UE in a policy.
FIG. 15 is a diagram illustrating an example of a timing chart related to each procedure in Generalized XR Split Rendering.
FIG. 16 is a flowchart illustrating a session establishment procedure according to a first implementation example.
FIG. 17 is a flowchart illustrating a setup procedure according to the first implementation example.
FIG. 18 is a diagram illustrating an example of an image dividing method.
FIG. 19 is a diagram illustrating another example of an image dividing method.
FIG. 20 is a flowchart illustrating a setup procedure according to a second implementation example.
FIG. 21 is a diagram illustrating a range of data to be transmitted to a terminal apparatus.
FIG. 22 is a flowchart illustrating an example of a setup procedure according to a third implementation example.
FIG. 23 is a flowchart illustrating another example of the setup procedure according to the third implementation example.
FIG. 24 is a flowchart illustrating an example of an image region specifying procedure in consideration of a movement amount of a display region.
FIG. 25 is a flowchart illustrating an example of a setup procedure according to a fourth implementation example.
FIG. 26 is a flowchart illustrating an example of a transmission frequency control procedure for sensor information.
FIG. 27 is a diagram illustrating an example of a timing chart related to control for XR media display in a terminal apparatus.
FIG. 28 is a flowchart illustrating an example of a setup procedure according to a seventh implementation example.
FIG. 29 is a flowchart illustrating a setup procedure according to an eighth implementation example.
FIG. 30 is a flowchart illustrating a setup procedure according to a ninth implementation example.

Description of Embodiments

Embodiments of the present disclosure will be described below in detail with reference to the drawings. Note that, in each of the following embodiments, the same parts are denoted by the same reference symbols, and a redundant description will be omitted.

Moreover, in the present specification and the drawings, a plurality of components having substantially the same functional configuration will be distinguished by attaching different numbers after the same reference numerals. For example, a plurality of configurations having substantially the same functional configuration are distinguished as necessary, such as terminal apparatuses $40_1$, $40_2$, and $40_3$. However, when it is not particularly necessary to distinguish between the plurality of components having substantially the same functional configuration, only the same reference numeral is given. For example, in a case where it is not necessary to particularly distinguish the terminal apparatuses $40_1$, $40_2$, and $40_3$, they are simply referred to as the terminal apparatus 40.

One or a plurality of embodiments (including implementation examples and modifications) described below can each be implemented independently. On the other hand, at least some of the plurality of embodiments described below may be combined with at least some of other embodiments as appropriate. The plurality of embodiments may include novel features different from each other. Accordingly, the plurality of embodiments can contribute to achieving or solving different objects or problems, and can exhibit different effects.

<<1. Overview>>

The first standard of the fifth generation mobile communication system (typically abbreviated as 5G) was formulated in 2018 as Rel-15. The 5G is a radio access technology that can support various use cases including enhanced mobile broadband (eMBB), massive machine type communications (mMTC), and Ultra-Reliable and Low Latency Communications (URLLC).

The 5G enables new wireless communication services. For example, the 5G enables device control in IoT, achievement of real-time communication in games or VR, etc. There are also 4G wearable devices compatible with Virtual Reality (VR) mainly in a use case of games. However, in 4G, from the viewpoint of delay and throughput, it is not easy to deliver moving image content that requires real-time properties via radio.

There are discussions, in 5G, on technology extensions for enabling low latency and stable delivery of media referred to as XR. Here, XR stands for Extended Reality or Cross Reality. XR includes Augmented Reality (AR), Mixed Reality (MR), and Virtual Reality (VR). Extended Reality in the following description can be replaced with Cross Reality.

As a technique related to XR, for example, the cited document (JP 2021-100256 A) discloses a technique of setting a plurality of recommended viewports and designating regional information such as priority between the viewports when deciding a region to be used as a viewport of virtual reality video data including a subsection for a 360-degree view of a virtual environment.

However, it is difficult to provide the user with high-quality communication services just with conventional technologies. For example, here is an assumable case of a communication service that wirelessly delivers media for experiencing a high realistic feeling, such as XR. In order for the user to experience a high realistic feeling in such media (for example, XR moving image content), there is a need to implement stable low latency wireless transmission. However, it is difficult to implement stable low latency wireless transmission under a dynamically changing wireless environment. This makes it difficult to provide a high-quality communication service to the user, for example, in an aspect of delayed reflection of the user's operation onto the XR moving image content (VR moving image, for example).

In view of these, the present embodiment proposes to solve the above-described problem as follows.

FIG. 1 is a diagram illustrating outline of the present embodiment. The communication system of the present embodiment includes an XR server and an XR device.

The XR server is a server apparatus that delivers data regarding the XR media (for example, XR moving image content) to the XR device. The XR device is a terminal apparatus such as an AR device, a VR device, or an MR device.

The XR moving image content is not limited to XR moving images such as VR moving images. The XR moving image content may be an XR game such as a VR game. In addition, the XR moving image content may be a moving image content generated by performing computational operation on or processing 3D data (for example, 3D spatial data and/or 3D object data) based on viewpoint data of the user.

The XR server and the XR device of the present embodiment are connected via a radio access network such as 5G. In the example of FIG. 1, the XR device is an eyewear-type device, but may be a head-mounted device.

The XR server specifies latency requirement information related to reflection of the user's operation on the XR moving image content. The latency requirement information is a Pose to Render to Photon Latency (PRPL) requirement value or a Render to Photon Latency (RPL) requirement value. Note that the XR server may specify the latency requirement information in accordance with the application related to the moving image content. For example, the XR server may specify a requirement value selected from a plurality of requirement values of PRPL or RPL in accordance with an application related to the moving image content as the latency requirement information. The PRPL and the RPL will be described below.

Additionally, the XR server acquires acceptability information related to a transmission delay of a Quality of Service flow (QoS flow) assigned to a session established for an application related to the XR moving image content. The acceptability information related to the transmission delay (hereinafter, simply referred to as acceptability information) may include a Packet Delay Budget (PDB) of a QoS flow assigned to a session established for the application. For example, the acceptability information may include at least one of a PDB (hereinafter, referred to as a first PDB) of the uplink QoS flow assigned to the session established for the application and a PDB (hereinafter, referred to as a second PDB) of the downlink QoS flow assigned to the session established for the application.

In addition, based on the latency requirement information and the acceptability information, the XR server makes a decision related to generation of data regarding moving image content (hereinafter, referred to as XR media content) to be transmitted to the XR device. For example, the XR server makes a decision related to generation of the XR media content based on the latency requirement information and at least one of the first PDB and the second PDB. At this time, the decision related to the generation of the data related to the moving image content may be a decision related to at least one of the resolution and a codec for the XR media content to be transmitted to the XR device.

Note that the XR server may decide the image region to be transmitted to the XR device based on the acceptability information. At this time, the XR server may acquire sensor information from the sensor included in the XR device, and may decide the region of the image based on the sensor information and the acceptability information. Subsequently, the XR server may make a decision (for example, decision related to at least one of resolution and codec) related to generation of XR media content (decided image region) to be transmitted to the XR device based on the latency requirement information, the acceptability information, and the information on image region.

Subsequently, the XR server generates XR media content to be transmitted to the XR device in accordance with the decided information (for example, information of at least one of resolution and codec). Subsequently, the XR server transmits the generated XR media content to the XR device.

With this configuration, the XR server can selectively set a resolution and a codec suitable for each of a plurality of XR applications having different requirements for the PRPL or the RPL. As a result, the XR server can generate the XR media content corresponding to the QoS flow assigned to the session. This makes it possible for the XR server to provide high-quality communication services related to XR to the user (for example, to provide an XR service that stably and quickly follows the motion of the user.).

The outline of the present embodiment has been described above. Hereinafter, a communication system 1 of the present embodiment will be described in detail.

<<2. Configuration of communication system>>

First, a configuration of the communication system 1 will be described.

FIG. 2 is a diagram illustrating a configuration example of a communication system 1 according to the present embodiment. The communication system 1 includes a server 10, a management apparatus 20, a base station 30, and a terminal apparatus 40. With individual wireless communication apparatuses constituting the communication system 1 operating in cooperation with each other, the communication system 1 provides a user with a wireless network capable of mobile communication (mobile network).

The wireless network of the present embodiment may be, for example, a cellular network including a radio access network RAN and a core network CN. The mobile network may include a terminal apparatus 40. In the present embodiment, the wireless communication apparatus is an apparatus having a wireless communication function, and in the example of FIG. 2, the apparatus corresponds to the base station 30 and the terminal apparatus 40.

The communication system 1 may include a plurality of servers 10, a plurality of management apparatuses 20, a plurality of base stations 30, and a plurality of terminal apparatuses 40. In the example of FIG. 2, the communication system 1 includes a server $10_1$ and a server $10_2$ as the server 10, and includes a management apparatus $20_1$ and a management apparatus $20_2$ as the management apparatus 20. Furthermore, the communication system 1 includes a base station $30_1$, a base station $30_2$, and a base station $30_3$ as the base station 30, and includes a terminal apparatus $40_1$, a terminal apparatus $40_2$, and a terminal apparatus $40_3$ as the terminal apparatus 40. In the following description, an apparatus included in the communication system 1 may be referred to as a network apparatus.

The terminal apparatus 40 may be configured to connect to the network using a Radio Access Technology (RAT) such as Long Term Evolution (LTE), New Radio (NR), 6G, Wi-Fi, or Bluetooth (registered trademark). At this time, the terminal apparatus 40 may be configured to be able to use different radio access technologies (wireless communication method). For example, the terminal apparatus 40 may be configured to be able to use NR and Wi-Fi. Furthermore, the terminal apparatus 40 may be configured to be able to use different cellular communication technologies (for example, LTE and NR, or 6G). In the following description, the terminal apparatus 40 may be referred to as User Equipment (UE) 40.

LTE and NR are a type of cellular communication technology, and enable mobile communication of terminal apparatuses by using cellular arrangement of a plurality of areas covered by base stations. In addition, 6G can also be, as a type of cellular communication technology, a technology enabling mobile communication of terminal apparatuses by using cellular arrangement of a plurality of areas covered by base stations.

In the following, it is assumed that "LTE" includes LTE-advanced (LTE-A), LTE-Advanced Pro (LTE-A Pro), and Evolved Universal Terrestrial Radio Access (EUTRA). In addition, it is assumed that NR includes New Radio Access Technology (NRAT) and further EUTRA (FEUTRA). A single base station 30 may manage a plurality of cells. In the following, a cell corresponding to LTE may be referred to as an LTE cell, and a cell corresponding to NR may be referred to as an NR cell.

NR is the next generation (fifth generation) radio access technology subsequent to LTE (fourth generation communication including LTE-Advanced and LTE-Advanced Pro). The NR is a radio access technology that can support various use cases including Enhanced Mobile Broadband (eMBB), Massive Machine Type Communications (mMTC), and Ultra-Reliable and Low Latency Communications (URLLC). NR is standardized by Rel-15 of 3GPP (registered trademark) as a technical framework supporting a usage scenario, a requirement, a deployment scenario, and the like in these use cases. Furthermore, Beyond 5G and 6G are required to simultaneously achieve a plurality of axes of high speed and large capacity, low latency/high reliability, and multiple simultaneous connection.

6G is a cellular communication technology of a next generation, that is, next to the NR or 5G system (5GS) being the fifth generation mobile communication. 6G includes a radio access technology and a network technology between a base station, a core network, and a data network. In addition, the 6G includes a technology for sophistication (referred to as extreme connectivity) of each technology of eMBB, mMTC, and URLLC, which have been defined as a main use case or a requirement in the NR. The 6G also includes new technologies in new aspects. For example, 6G can include technologies related to artificial intelligence (Cognitive network, AI native Air Interface), sensing (Rader sensing, network as a sensor), and terahertz communication.

The wireless network may be compatible with at least one of the Radio Access Technology (RAT) such as Long Term Evolution (LTE), New Radio (NR) and 6G. Each of LTE, NR, and 6G is a type of cellular communication technology, and enable mobile communication of terminal apparatuses by using cellular arrangement of a plurality of areas covered by base stations. The radio access method used by the communication system 1 is not limited to LTE, NR, or 6G, and may be other radio access methods such as wideband code division multiple access (W-CDMA) and code division multiple access 2000 (cdma2000), for example.

The base station 30 may be a terrestrial station or a non-terrestrial station. The non-terrestrial station may be a satellite station or an aircraft station. When the non-terrestrial station is a satellite station, the wireless network may be a Bent-pipe (Transparent) mobile satellite communication system.

In the present embodiment, the terrestrial station (also referred to as a terrestrial base station) refers to a base station or a relay station installed on the terrestrial. The "ground" represents not only a land but also a terrestrial location in a broad sense including underground, above-water, and underwater. Note that, in the following description, the description of "terrestrial station" may be referred to as a "gateway".

The base station in LTE may be referred to as Evolved Node B (eNodeB) or eNB. NR base stations may be referred to as gNodeB or gNB. 6G base stations may be referred to as 6G NodeB (6GNB). In LTE, NR, and 6G, a terminal apparatus (also referred to as a mobile station, or terminal) may be referred to as User Equipment (UE). The terminal apparatus is a type of communication apparatus, and is also referred to as a mobile station or a terminal.

The terminal apparatus 40 may be connectable to the network using a radio access technology (wireless communication method) other than LTE, NR, 6G, Wi-Fi, or Bluetooth. For example, the terminal apparatus 40 may be connectable to the network by using Low Power Wide Area (LPWA) communication. Furthermore, the terminal apparatus 40 may be connectable to the network using wireless communication of a proprietary standard.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. The LPWA communication used by the terminal apparatus 40 may conform to the LPWA standard. The LPWA standard may be, for example, at least one of ELTRES, ZETA, SIGFOX, LoRaWAN, LTE-M, and NB-IoT. Naturally, the LPWA standard is not to be limited thereto, and may be other LPWA standards.

Each wireless communication apparatus in FIG. 2 may be considered as an apparatus in a logical sense. That is, a part of each wireless communication apparatus may be implemented by a Virtual Machine (VM), a container such as a docker, or the like, and they may be implemented on physically the same piece of hardware.

In the present embodiment, the concept of the "wireless communication apparatus" includes not only a portable mobile apparatus (terminal apparatus) such as a mobile terminal but also an apparatus installed in a structure or a mobile body. The structure or a mobile body itself may be regarded as a wireless communication apparatus. The wireless communication apparatus conceptually includes not only the terminal apparatus 40 but also the base station 30. The wireless communication apparatus is a type of processing apparatus or information processing apparatus. The wireless communication apparatus can be rephrased as a transmission apparatus or a reception apparatus.

Hereinafter, configurations of individual wireless communication apparatuses included in the communication system 1 will be specifically described. The configuration of each wireless communication apparatus illustrated below is just an example. The configuration of each wireless communication apparatus may differ from the configuration below.

<2-1. Configuration of server>

First, a configuration of the server 10 will be described.

The server 10 is an information processing apparatus (computer) that provides various services to the terminal apparatus 40. For example, the server 10 is an XR server that delivers XR media such as XR moving image content to the terminal apparatus 40. The server 10 may be an application server or a web server. The server 10 may be a PC server, a midrange server, or a mainframe server. The server 10 may be an information processing apparatus that performs data processing (edge processing) near the user or the terminal. For example, the server 10 may be an information processing apparatus (computer) provided close to or built in a base station. The server 10 may have a function as a core network. For example, the server 10 may be an apparatus that functions as the management apparatus 20. The server 10 may naturally be an information processing apparatus that performs cloud computing. The server 10 of the present embodiment can function as an application function.

The server 10 is connected to the management apparatus 20 via a network N. Although only one network N is illustrated in the example of FIG. 2, the network N may be provided in plurality. Here, the network N is a public network such as the Internet, for example. The network N is not limited to the Internet, but may be other networks such as a Local Area Network (LAN), a Wide Area Network (WAN), a cellular network, a fixed-line telephone network, and a regional Internet protocol (IP) network, for example. The network N may include a wired network or a wireless network.

FIG. 3 is a diagram illustrating a configuration example of the server 10 according to the embodiment of the present disclosure. The server 10 includes a communication unit 11, a storage unit 12, and a control unit 13. The configuration illustrated in FIG. 3 is a functional configuration, and the hardware configuration may be different from this. The functions of the server 10 may be implemented in a distributed manner in a plurality of physically separated configurations. For example, the server 10 may include a plurality of information processing apparatuses.

The communication unit 11 is a communication interface for communicating with other apparatuses. For example, the communication unit 11 is a network interface. An example of the communication unit 11 is a Local Area Network (LAN) interface such as a Network Interface Card (NIC). The communication unit 11 may be a wired interface, or may be a wireless interface. Under the control of the control unit 13, the communication unit 11 communicates with the management apparatus 20, the base station 30, the terminal apparatus 40, and another server 10.

The storage unit 12 is a data readable/writable storage device such as dynamic random access memory (DRAM), static random access memory (SRAM), flash memory, or a hard disk.

The control unit 13 is a controller that controls individual units of the server 10. The control unit 13 may be implemented by a processor such as a central processing unit (CPU) or a micro processing unit (MPU), for example. Specifically, the control unit 13 may be implemented by execution of various programs stored in the storage apparatus inside the management apparatus 20 by the processor using random access memory (RAM) or the like as a work area. The control unit 13 may be implemented by an integrated circuit such as an application specific integrated circuit (ASIC) or a field programmable gate array (FPGA). Furthermore, the control unit 13 may be implemented by a Graphics Processing Unit (GPU). The CPU, MPU, ASIC, FPGA, and GPU can all be regarded as controllers. The control unit 13 may include a plurality of physically separated objects. For example, the control unit 13 may include a plurality of semiconductor chips.

The control unit 13 includes a specifying unit 131, an acquisition unit 132, a decision unit 133, a division unit 134, a setting unit 135, a generation unit 136, a detection unit 137, a request unit 138, and a notification unit 139. Individual blocks (the specifying unit 131 to the notification unit 139) constituting the control unit 13 are functional blocks individually indicating functions of the control unit 13. These functional blocks may be software blocks or hardware blocks. For example, each of the functional blocks described above may be one software module implemented by software (including a microprogram) or one circuit block on a semiconductor chip (die). Needless to say, each of the functional blocks may be formed as one processor or one integrated circuit. Note that the control unit 13 may be configured in a functional unit different from the above-described functional block. The functional block may be configured by using any method.

<2-2. Configuration of management apparatus>

Next, a configuration of the management apparatus 20 will be described.

The management apparatus 20 is an information processing apparatus (computer) that manages a wireless network. For example, the management apparatus 20 is an information processing apparatus that manages communication of the base station 30.

The management apparatus 20 may be an apparatus constituting the core network CN. For example, the management apparatus 20 may be an apparatus having a function as a Mobility Management Entity (MME). The management apparatus 20 may be an apparatus having a function as an Access and Mobility Management Function (AMF) and/or a Session Management Function (SMF). The MME, the AMF, and the SMF are Control Plane Network Function nodes in the core network CN. The management apparatus 20 may be an apparatus having a function as a 6G Control Plane Network Function (6G CPNF). The 6G CPNF may include one or a plurality of logical nodes.

The functions of the management apparatus 20 are not to be limited to MME, AMF, SMF, or 6G CPNF. The management apparatus 20 may be an apparatus having a function as a Network Slice Selection Function (NSSF), an Authentication Server Function (AUSF), a Policy Control Function (PCF), or Unified Data Management (UDM). Furthermore, the management apparatus 20 may be an apparatus having a function as a Home Subscriber Server (HSS).

The management apparatus 20 may have a function of a gateway. For example, the management apparatus 20 may have a function as a Serving Gateway (S-GW) or a Packet Data Network Gateway (P-GW). The management apparatus 20 may have a function as a User Plane Function (UPF). At this time, the management apparatus 20 may have a plurality of UPFs. The management apparatus 20 may be an apparatus having a function as a 6G User Plane Network Function (6G UPNF).

The core network CN includes a plurality of Network Functions. Each Network Function may be integrated into one physical apparatus or distributed to a plurality of physical apparatuses. That is, the management apparatus 20 can be disposed as a plurality of apparatuses in a distributed arrangement. Furthermore, this distributed arrangement may be controlled to be executed dynamically. The base station 30 and the management apparatus 20 constitute one network, and provide a wireless communication service to the terminal apparatus 40. The management apparatus 20 is connected to the Internet, and the terminal apparatus 40 can use various services provided over the Internet via the base station 30.

The management apparatus 20 need not be an apparatus constituting the core network CN. For example, it is assumed that the core network CN is a core network of Wideband Code Division Multiple Access (W-CDMA) or Code Division Multiple Access 2000 (cdma2000). At this time, the management apparatus 20 may be an apparatus that functions as a Radio Network Controller (RNC).

FIG. 4 is a diagram illustrating a configuration example of the management apparatus 20 according to the present embodiment. The management apparatus 20 includes a communication unit 21, a storage unit 22, and a control unit 23. The configuration illustrated in FIG. 4 is a functional configuration, and the hardware configuration may be different from this. The functions of the management apparatus 20 may be implemented in a statically or dynamically distributed form in a plurality of physically separated configurations. The management apparatus 20 may be constituted with a plurality of server apparatuses.

The communication unit 21 is a communication interface for communicating with a wireless communication apparatus (for example, the base station 30). The communication unit 21 may be a network interface or a device connection interface. The communication unit 21 may be a Local Area Network (LAN) interface such as a Network Interface Card (NIC), or may be a Universal Serial Bus (USB) interface including a USB host controller, a USB port, and the like. The communication unit 21 may be a wired interface, or may be a wireless interface. The communication unit 21 is controlled by the control unit 23.

The storage unit 22 is a readable/writable storage device such as DRAM, SRAM, flash memory, or a hard disk. The storage unit 22 stores, for example, a connection state of the terminal apparatus 40. The storage unit 22 stores a Radio Resource Control (RRC) state or an EPS Connection Management (ECM) state or a 5G System Connection Management (CM) state of the terminal apparatus 40. The storage unit 22 may function as a unit referred to as home memory that stores location information of the terminal apparatus 40.

The control unit 23 is a controller that controls individual parts of the management apparatus 20. The control unit 23 may be implemented by, for example, a processor such as a CPU or an MPU. For example, the control unit 23 is implemented by the processor executing various programs stored in the storage apparatus inside the management apparatus 20 using RAM or the like as a work area. The control unit 23 may be implemented by an integrated circuit such as an ASIC or an FPGA. The control unit 23 may be implemented by a GPU. The CPU, MPU, ASIC, FPGA, and GPU can all be regarded as controllers. The control unit 23 may include a plurality of physically separated objects. For example, the control unit 23 may include a plurality of semiconductor chips.

<2-3. Configuration of base station>

Next, a configuration of the base station 30 will be described.

The base station 30 is a wireless communication apparatus that performs wireless communication with other wireless communication apparatuses (for example, the terminal apparatus 40 or another base station 30). The base station 30 may wirelessly communicate with the terminal apparatus 40 via a relay station, or may directly wirelessly communicate with the terminal apparatus 40.

The base station 30 is an apparatus corresponding to a radio base station (Base Station, Node B, eNB, gNB, or 6GNB, etc.) or a radio Access Point. The base station 30 may be a radio relay station. The base station 30 may be an optical extension apparatus referred to as a Remote Radio Head (RRH). Furthermore, the base station 30 may be a receiving station such as a Field Pickup Unit (FPU). The base station 30 may be an Integrated Access and Backhaul (IAB) donor node or an IAB relay node that provides a radio access channel and a radio backhaul channel by using time division multiplexing, frequency division multiplexing, or space division multiplexing.

The radio access technology used by the base station 30 may be a cellular communication technology. The radio access technology used by the base station 30 may be a wireless LAN technology. For example, the radio access technology used by the base station 30 may be a Low Power Wide Area (LPWA) communication technology. Note that the radio access technology used by the base station 30 is not limited thereto, and may be other radio access technologies. The wireless communication used by the base station 30 may be wireless communication using a millimeter wave or wireless communication using a terahertz wave (THz wave). The wireless communication used by the base station 30 may be wireless communication using radio waves or wireless communication (optical wireless communication) using infrared rays or visible light. The base station 30 may be capable of Non-Orthogonal Multiple Access (NOMA) communication with the terminal apparatus 40. Here, NOMA communication refers to communication (transmission, reception, or both) using non-orthogonal resources. The base station 30 may be capable of performing NOMA communication with another base station 30.

The base station 30 may be capable of performing mutual communication with the core network via a base station-core network interface (for example, NG Interface, S1 Interface, or the like). This interface may be implemented as wired or wireless interface. Furthermore, the base stations may be capable of performing mutual communication with another base station by an inter-base station interface (for example, Xn Interface, X2 Interface, F1 Interface, or the like). This interface may be implemented as wired or wireless interface.

The base station (also referred to as a "base station apparatus") conceptually includes not only a donor base station but also a relay base station (also referred to as a "relay station"). The relay base station may be any one of RF Repeater, Smart Repeater, and Intelligent Surface. A base station conceptually includes not only a structure having a function of a base station but also a device installed in the structure.

Examples of the structure include a building such as a high-rise building, a house, a steel tower, a station facility, an airport facility, a harbor facility, an office building, a school building, a hospital, a factory, a commercial facility, or a stadium. The structure conceptually includes not only buildings but also non-building structures such as tunnels, bridges, dams, fences, and steel columns, as well as facilities such as cranes, gates, and windmills. The structure conceptually includes not only land-based (ground-based, in a narrow sense) structures or underground structures but also structures on the water, such as a jetty or a mega-float, and underwater structures such as an ocean observation facility. The base station can also be rephrased as an information processing apparatus.

The base station 30 may be a donor station or a relay station. The base station 30 may be a fixed station or a mobile station. The mobile station is a wireless communication apparatus (for example, a base station) configured to be movable. At this time, the base station 30 may be an apparatus installed on a mobile body, or may be a mobile body itself. For example, a relay station having mobility can be regarded as the base station 30 as a mobile station. In addition, an apparatus designed to have mobility, such as an Unmanned Aerial Vehicle (UAV) represented by a drone, or a smartphone, and having a function of a base station (at least a part of the function of a base station) also corresponds to the base station 30 as a mobile station.

Here, the mobile body may be a mobile terminal such as a smartphone or a mobile phone. The mobile body may be a mobile body that moves on the land (ground in a narrow sense) (for example, a vehicle such as an automobile, bicycle, a bus, a truck, a motorbike, a train, or a linear motor car), or a mobile body (for example, subway) that moves under the ground (for example, through a tunnel). The mobile body may be a mobile body that moves on the water (for example, a ship such as a passenger ship, a cargo ship, or a hovercraft), or a mobile body that moves underwater (for example, a submersible ship such as a submersible boat, a submarine, or an unmanned submarine). The mobile body may be a mobile body that moves in the atmosphere (for example, an aircraft such as an airplane, an airship, or a drone).

The base station 30 may be a terrestrial base station (terrestrial station) installed on the ground. The base station 30 may be a base station disposed on a structure on the ground, or may be a base station installed in a mobile body moving on the ground. The base station 30 may be an antenna installed in a structure such as a building and a signal processing apparatus connected to the antenna. The base station 30 may be a structure or a mobile body itself. The "ground" represents not only a land (ground in a narrow sense) but also a terrestrial location in a broad sense including underground, above-water, and underwater. The base station 30 is not limited to a terrestrial base station. In a case where the communication system 1 is a satellite communication system, the base station 30 may be an aircraft station. From the perspective of a satellite station, an aircraft station located on the earth is a terrestrial station.

The base station 30 is not limited to a terrestrial station. The base station 30 may be a non-terrestrial base station (non-terrestrial station) capable of floating in the air or space. The base station 30 may be an aircraft station or a satellite station.

The satellite station is a satellite station capable of floating outside the atmosphere. The satellite station may be an apparatus mounted on a space mobile body such as an artificial satellite, or may be a space mobile body itself. A space mobile body is a mobile body that moves outside the atmosphere. The space mobile body may be at least one of a satellite, a spacecraft, a space station, and a probe. Needless to say, the space mobile body may be an artificial celestial body other than these. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. The satellite station may be an apparatus mounted on a low earth orbiting satellite, a medium earth orbiting satellite, a geostationary earth orbiting satellite, or a highly elliptical orbiting satellite.

The aircraft station is a wireless communication apparatus capable of floating in the atmosphere, such as an aircraft. The aircraft station may be an apparatus mounted on an aircraft or the like, or may be an aircraft itself. The aircraft conceptually includes not only heavy aircraft such as an airplane or a glider but also light aircraft such as a balloon or an airship. The aircraft conceptually includes not only a heavy aircraft or a light aircraft but also a rotorcraft such as a helicopter or an auto-gyro. The aircraft station or an aircraft equipped with an aircraft station may be an unmanned aircraft such as a drone.

The unmanned aircraft conceptually includes an Unmanned Aircraft System (UAS) and a tethered UAS. The unmanned aircraft conceptually includes also a Lighter-than-Air (LTA) unmanned aircraft system (UAS) and a Heavier-than-Air (HTA) unmanned aircraft system (UAS). The unmanned aircraft conceptually includes also High Altitude unmanned aircraft system (UAS) Platforms (HAPs).

The magnitude of the coverage of the base station 30 may be relatively large such as a macro cell or relatively small such as a pico cell. The magnitude of the coverage of the base station 30 may be extremely small such as a femto cell. The base station 30 may have a beamforming function. In this case, the base station 30 may form a cell or a service area for each beam. Furthermore or alternatively, the base station 30 may have a function of delivering a desired wave to a predetermined pinpoint target position by an additional consideration of distance information from an antenna of the base station 30 in addition to beamforming that provides directivity to a beam. This function may be referred to as beam focusing or point forming.

FIG. 5 is a diagram illustrating a configuration example of the base station 30 according to the present embodiment. The base station 30 includes a wireless communication unit 31, a storage unit 32, and a control unit 33. The configuration illustrated in FIG. 5 is a functional configuration, and the hardware configuration may be different from this. Furthermore, the functions of the base station 30 may be implemented in a distributed form in a plurality of physically separated configurations.

The wireless communication unit 31 is a signal processing unit for performing wireless communication with other wireless communication apparatuses (for example, the terminal apparatus 40 or another base station 30). The wireless communication unit 31 is controlled by the control unit 33. The wireless communication unit 31 may support one or a plurality of radio access methods. The wireless communication unit 31 may support at least one of NR, LTE, and 6G. The wireless communication unit 31 may support W-CDMA, cdma2000, and the like in addition to NR, LTE, and 6G. The wireless communication unit 31 may support an automatic retransmission technology such as Hybrid Automatic Repeat reQuest (HARQ).

The wireless communication unit 31 includes a transmission processing unit 311, a reception processing unit 312, and an antenna 313. The wireless communication unit 31 may include a plurality of the transmission processing units 311, a plurality of the reception processing units 312, and a plurality of the antennas 313. In a case where the wireless communication unit 31 supports a plurality of radio access methods, individual portions of the wireless communication unit 31 can be configured separately for each of the radio access methods. The transmission processing unit 311 and the reception processing unit 312 may be configured separately for LTE, NR, and 6G. The antenna 313 may include a plurality of antenna elements, for example, a plurality of patch antennas. The wireless communication unit 31 may have a beamforming function. For example, the wireless communication unit 31 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The transmission processing unit 311 performs transmission processing of downlink control information and downlink data. The transmission processing unit 311 codes the downlink control information and the downlink data input from the control unit 33 by using a coding scheme such as block coding, convolutional coding, or turbo coding. The coding may perform coding using a Polar Code or a Low Density Parity Check (LDPC) code. The transmission processing unit 311 modulates the coded bits by a predetermined modulation scheme such as BPSK, QPSK, 16 QAM, 64 QAM, or 256 QAM. In this case, the signal points on the constellation do not necessarily have to be equidistant. The constellation may be a non-uniform constellation (NUC). The transmission processing unit 311 multiplexes the modulation symbol of each of channels and the downlink reference signal and allocates the multiplexed signals on a predetermined resource element. Subsequently, the transmission processing unit 311 performs various types of signal processing on the multiplexed signal. For example, the transmission processing unit 311 performs processing such as conversion to the frequency domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 311 is transmitted from the antenna 313.

The reception processing unit 312 processes an uplink signal received via the antenna 313. For example, the reception processing unit 312 performs processing on the uplink signal, such as down-conversion, removal of unnecessary frequency components, amplification level control, orthogonal demodulation, conversion to digital signal, removal of guard interval (cyclic prefix), and frequency domain signal extraction using fast Fourier transform. The reception processing unit 312 subsequently demultiplexes an uplink channel such as a Physical Uplink Shared Channel (PUSCH) or a Physical Uplink Control Channel (PUCCH) and an uplink reference signal from the signal that has undergone these processing procedures. Subsequently, the reception processing unit 312 demodulates a received signal using a modulation scheme such as binary phase shift keying (BPSK) or quadrature phase shift keying (QPSK) for the modulation symbol of the uplink channel. The modulation scheme used in the demodulation may be 16 quadrature amplitude modulation (QAM), 64 QAM, or 256 QAM. In this case, the signal points on the constellation do not necessarily have to be equidistant. The constellation may be a non-uniform constellation (NUC). Subsequently, the reception processing unit 312 performs decoding processing on the coded bits of the demodulated uplink channel. The decoded uplink data and uplink control information are output to the control unit 33.

The antenna 313 is an antenna apparatus that performs mutual conversion of a current and a radio wave. The antenna 313 may be configured by one antenna element, for example, one patch antenna. Furthermore, the antenna 313 may include a plurality of antenna elements (for example, a plurality of patch antennas). In a case where the antenna 313 includes a plurality of antenna elements, the wireless communication unit 31 may have a beamforming function. The wireless communication unit 31 may control the directivity of a radio signal using a plurality of antenna elements to generate a directional beam. The antenna 313 may be a dual polarized antenna. In a case where the antenna 313 is a dual polarized antenna, the wireless communication unit 31 may use, in radio signal transmission, vertically polarized waves (V-polarized waves) and horizontally polarized waves (H-polarized waves) (or dual polarized waves in polarization direction at 45 degrees and -45 degrees with the vertical direction). The wireless communication unit 31 may control directivity of a radio signal transmitted using vertically polarized waves and horizontally polarized waves (or dual polarization in polarization direction at 45 degrees and -45 degrees with vertical direction). Furthermore, the wireless communication unit 31 may transmit and receive spatially multiplexed signals via a plurality of layers including a plurality of antenna elements.

The storage unit 32 is a readable/writable storage device such as DRAM, SRAM, flash memory, or a hard disk.

The control unit 33 is a controller that controls individual parts of the base station 30. The control unit 33 controls the wireless communication unit to perform wireless communication with another wireless communication apparatus (for example, the terminal apparatus 40 or another base station 30). The control unit 33 may be implemented by a processor such as a CPU or an MPU. Specifically, the control unit 33 is implemented by a processor executing various programs stored in a storage device inside the base station 30 using RAM or the like as a work area. The control unit 33 may be implemented by an integrated circuit such as an ASIC or an FPGA. The control unit 33 may be implemented by a GPU. The CPU, MPU, ASIC, FPGA, and GPU can all be regarded as controllers. The control unit 33 may include a plurality of physically separated objects. For example, the control unit 33 may include a plurality of semiconductor chips.

In some embodiments, the base station 30 may be configured by a set of a plurality of physical or logical apparatuses. As an example, the base station 30 in the present embodiment may be classified into a plurality of apparatuses such as a Baseband Unit (BBU) and a Radio Unit (RU). The base station 30 may be construed as a set of the plurality of apparatuses. In addition, the base station may be either one or both of the BBU and the RU. The BBU and the RU may be connected to each other via a predetermined interface (for example, an enhanced Common Public Radio Interface (eCPRI)).

The RU may be referred to as a Remote Radio Unit (RRU) or a Radio DoT (RD). The RU may support a gNB Distributed Unit (gNB-DU) described below. The BBU may support a gNB Central Unit (gNB-CU) described below. The RU may be an apparatus integrally formed with an antenna. An antenna of the base station 30, for example, an antenna integrally formed with an RU, may employ an Advanced Antenna System and support MIMO (for example, FD-MIMO) or beamforming. For example, the antenna of the base station 30 may include 64 transmitting antenna ports and 64 receiving antenna ports.

The antenna mounted on the RU may be an antenna panel including one or more antenna elements, and the RU may include one or more antenna panels. The RU may be equipped with two types of antenna panels: a horizontally polarized antenna panel and a vertically polarized antenna panel. The RU may be equipped with two types of antenna panels, that is, a right-handed circularly polarized antenna panel and a left-handed circularly polarized antenna panel, or an antenna panel with a polarization direction of 45 degrees with the vertical direction and an antenna panel with a polarization direction of -45 degrees with the vertical direction. A plurality of antennas having the plurality of polarization directions may be mounted on one antenna panel. The RU may form and control an independent beam for each antenna panel.

The plurality of base stations 30 may be connected to each other. One or the plurality of base stations 30 may be included in a Radio Access Network (RAN). That is, the base station 30 may be simply referred to as a RAN, a RAN node, an Access Network (AN), an node, or the like. RAN in LTE is sometimes referred to as Enhanced Universal Terrestrial RAN (EUTRAN). RAN in NR may be referred to as NGRAN. In addition, RAN in 6G may be referred to as 6GRAN. RAN in W-CDMA (UMTS) may be referred to as UTRAN.

The base station 30 in LTE may be referred to as Evolved Node B (eNodeB) or eNB. That is, EUTRAN includes one or a plurality of eNodeB (eNB). NR base stations 30 may be referred to as gNodeB or gNB. At this time, NGRAN contains one or a plurality of gNBs. A 6G base station may be referred to as a 6GNodeB, a 6gNodeB, a 6GNB, or a 6gNB. At this time, 6GRAN contains one or a plurality of 6GNBs. EUTRAN may include gNB (en-gNB) connected to the core network (EPC) in LTE communication systems (EPS). NGRAN may include an ng-eNB connected to the core network 5GC in a 5G communication system (5GS).

When the base station 30 is eNB, gNB, 6GNB or the like, the base station 30 may be referred to as 3GPP access. When the base station 30 is a radio access point, the base station 30 may be referred to as non-3GPP access. The base station 30 may be an optical extension apparatus referred to as a Remote Radio Head (RRH). Furthermore, in a case where the base station 30 is a gNB, the base station 30 may be a combination of the gNB-CU and the gNB-DU described above, or may be any of the gNB-CU and the gNB-DU.

Here, in order to have a communication with the UE, the gNB-CU hosts a plurality of upper layers (for example, Radio Resource Control (RRC), Service Data Adaptation Protocol (SDAP), and Packet Data Convergence Protocol (PDCP)) in an Access Stratum. On the other hand, the gNB-DU hosts a plurality of lower layers (for example, Radio Link Control (RLC), Medium Access Control (MAC), and Physical layer (PHY)) in an Access Stratum. That is, among messages/information to be described below, RRC signaling (semi-static notification) may be generated by the gNB-CU, while MAC CE and DCI (dynamic notification) may be generated by the gNB-DU. Alternatively, among the RRC configurations (semi-static notifications), some configurations such as IE: cellGroupConfig may be generated by the gNB-DU, while the remaining configurations may be generated by the gNB-CU, for example. These configurations may be transmitted and received via an F1 interface described below.

The base station 30 may be configured to be able to communicate with another base station. When the plurality of base stations 30 are eNBs or a combination of an eNB and an en-gNB, these base stations 30 may be connected by an X2 interface. When the plurality of base stations 30 are gNBs or a combination of a gn-eNB and a gNB, these base stations 30 may be connected by an Xn interface. When the plurality of base stations 30 are a combination of a gNB-CU and a gNB-DU, these base stations 30 may be interconnected by the F1 interface described above. A message/information (for example, RRC signaling, MAC Control Element (MAC CE), Downlink Control Information (DCI), or the like) to be described below may be transmitted among the plurality of base stations 30 via an interface such as an X2 interface, an Xn interface, an F1 interface, for example.

The cell provided by the base station 30 may be referred to as a Serving Cell. The Serving Cell conceptually includes a Primary Cell (PCell) and a Secondary Cell (SCell). When dual connectivity is provided to the terminal apparatus 40, the PCell provided by a Master Node (MN) and zero or one or more SCells may be referred to as a Master Cell Group. The dual connectivity may be at least one of the EUTRA-EUTRA Dual Connectivity, the EUTRA-NR dual connectivity (ENDC), the EUTRA-NR dual connectivity with 5GC, the NR-EUTRA dual connectivity (NEDC), the NR-NR dual connectivity, the NR-6G dual connectivity, and the 6G-NR dual connectivity. Needless to say, the dual connectivity is not limited thereto.

The Serving Cell may include a Primary Secondary Cell or Primary SCG Cell (PSCell). In a case where dual connectivity is provided to the terminal apparatus 40, the PSCell and the zero or one or more SCells provided by a Secondary Node (SN) may be referred to as Secondary Cell Group (SCG). Unless specially configured (for example, PUCCH on SCell), a Physical Uplink Control Channel (PUCCH) is transmitted by the PCell and the PSCell, but is not transmitted by the SCell. The Radio Link Failure is also detected by the PCell and the PSCell, but is not to be detected by the SCell (need not be detected). In this manner, since the PCell and the PSCell have a special role in the Serving Cell, these cells are also referred to as Special Cells (SpCells).

One cell may be associated with one downlink component carrier and one uplink component carrier. The system bandwidth corresponding to one cell may be divided into a plurality of Bandwidth Parts (BWPs). In this case, one or a plurality of BWPs may be configured for the terminal apparatus 40, and one BWP may be used for the terminal apparatus 40 as an Active BWP. Radio resources (for example, a frequency band, a numerology (subcarrier spacing), and a slot format (slot configuration)) usable by the terminal apparatus 40 may be different for each cell, each component carrier, or each BWP.

<2-4. Configuration of terminal apparatus>

Next, a configuration of the terminal apparatus 40 will be described.

The terminal apparatus 40 is a wireless communication apparatus (e.g., User Equipment (UE)) that performs wireless communication with another wireless communication apparatus (for example, the base station 30 or another terminal apparatus 40).

The terminal apparatus 40 is an XR device such as an Augmented Reality (AR) device, a Virtual Reality (VR) device, or a Mixed Reality (MR) device. At this time, the XR device may be an eyewear-type device such as AR glasses or MR glasses, or may be a head-mounted device such as a VR head-mounted display. In a case where the terminal apparatus 40 is an XR device, the terminal apparatus 40 may be a standalone device including only a portion worn on the user (for example, the eyewear portion). Furthermore, the terminal apparatus 40 may be a terminal-linked device including the portion worn on the user (for example, the eyeglass portion) and a terminal portion (for example, a smart device) linked with the portion worn on the user.

As described above, the terminal apparatus 40 is typically an XR device such as an AR device, a VR device, or an MR device. However, the terminal apparatus 40 is not limited to the XR device. The terminal apparatus 40 can be implemented by employing any form of information processing apparatus (computer). For example, the terminal apparatus 40 may be a mobile terminal such as a mobile phone, a smart device (smartphone or tablet), a Personal Digital Assistant (PDA), or a laptop PC. The terminal apparatus 40 may be an imaging apparatus (for example, a camcorder) having a communication function. The terminal apparatus 40 may be a motorcycle, a moving relay vehicle, or the like, equipped with a communication devices such as the Field Pickup Unit (FPU). The terminal apparatus 40 may be a Machine to Machine (M2M) device or an Internet of Things (IoT) device. The terminal apparatus 40 may be a wearable device such as a smart watch.

The terminal apparatus 40 may be capable of performing NOMA communication with the base station 30. The terminal apparatus 40 may be able to use an automatic retransmission technology such as HARQ when communicating with the base station 30. The terminal apparatus 40 may be capable of sidelink communication with another terminal apparatus 40. The terminal apparatus 40 may be capable of using an automatic retransmission technology such as HARQ when performing sidelink communication. The terminal apparatus 40 may be able to perform NOMA communication when performing sidelink communication with another terminal apparatus 40. The terminal apparatus 40 may be able to perform LPWA communication with another wireless communication apparatus such as the base station 30. The wireless communication used by the terminal apparatus 40 may be wireless communication using millimeter waves. The wireless communication (including sidelink communication) used by the terminal apparatus 40 may be wireless communication using radio waves or wireless communication using infrared rays or visible light, namely, optical wireless communication.

The terminal apparatus 40 may be a movable wireless communication apparatus, that is, a mobile apparatus. Furthermore, the terminal apparatus 40 may be a wireless communication apparatus installed on a mobile body, or may be the mobile body itself. The terminal apparatus 40 may be a vehicle that moves on a road, such as an automobile, a bus, a truck, or a motorcycle, or a vehicle of a train that travels on a track, or may be a wireless communication apparatus mounted on the vehicle. The mobile body may be a mobile terminal, or may be a mobile body that moves on land (on the ground in a narrow sense), in the ground, on water, or under water. The mobile body may be a mobile body that moves inside the atmosphere, such as an aircraft, airship, balloon, or a helicopter, or may be a mobile body that moves outside the atmosphere, such as an artificial satellite. The mobile body may be an unmanned aerial vehicle (UAV) such as a drone. The terminal apparatus 40 may be a wireless communication apparatus mounted on a mobile body.

The terminal apparatus 40 may be capable of performing communication while being simultaneously connected to a plurality of base stations 30 or a plurality of cells. For example, when one base station 30 supports a communication area via a plurality of cells (for example, pCell and sCell), it is possible to bundle the plurality of cells and communicate between the base station 30 and the terminal apparatus 40 by using a Carrier Aggregation (CA) technology, a Dual Connectivity (DC) Technology, Or A Multi-Connectivity (MC) technology. Alternatively, the terminal apparatus 40 and the plurality of base stations 30 can communicate with each other by a Coordinated MultiPoint Transmission and Reception (CoMP) technology via cells of different base stations 30.

The terminal apparatus 40 may be a relay terminal that relays communication to a remote terminal.

FIG. 6 is a diagram illustrating a configuration of the terminal apparatus 40 according to the present embodiment. The terminal apparatus 40 includes a wireless communication unit 41, a storage unit 42, a control unit 43, an input unit 44, an output unit 45, and a sensor unit 46. The configuration illustrated in FIG. 6 is a functional configuration, and the hardware configuration may be different from this. Furthermore, the functions of the terminal apparatus 40 may be implemented in a distributed manner in a plurality of physically separated configurations.

The wireless communication unit 41 is a signal processing unit for performing wireless communication with other wireless communication apparatuses (for example, the base station 30 or another terminal apparatus 40). The wireless communication unit 41 is controlled by the control unit 43. The wireless communication unit 41 supports one or a plurality of radio access schemes. The wireless communication unit 41 may support at least one of NR, LTE, and 6G. The wireless communication unit 41 may support W-CDMA, cdma2000, and the like in addition to NR, LTE, and 6G. The wireless communication unit 41 may support an automatic retransmission technology such as Hybrid Automatic Repeat reQuest (HARQ).

The wireless communication unit 41 includes a transmission processing unit 411, a reception processing unit 412, and an antenna 413. The wireless communication unit 41 may include a plurality of the transmission processing units 411, a plurality of the reception processing units 412, and a plurality of the antennas 413. In a case where the wireless communication unit 41 supports a plurality of radio access methods, individual portions of the wireless communication unit 41 may be configured separately for each of the radio access methods. The transmission processing unit 411 and the reception processing unit 412 may be configured separately for LTE, NR, and 6G. The antenna 413 may include a plurality of antenna elements, for example, a plurality of patch antennas. The wireless communication unit 41 may have a beamforming function. For example, the wireless communication unit 41 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The storage unit 42 is a readable/writable storage device such as DRAM, SRAM, flash memory, or a hard disk.

The control unit 43 is a controller that controls individual parts of the terminal apparatus 40. The control unit 43 controls the wireless communication unit to perform wireless communication with another wireless communication apparatus (for example, the base station 30 or another terminal apparatus 40). The control unit 43 may be implemented by a processor such as a CPU or an MPU. For example, the control unit 23 is implemented by the processor executing various programs stored in the storage device inside the terminal apparatus 40 using RAM or the like as a work area. The control unit 43 may be implemented by an integrated circuit such as an ASIC or an FPGA. The CPU, MPU, ASIC, and FPGA can all be regarded as controllers. The control unit 43 may be implemented by a GPU. The CPU, MPU, ASIC, FPGA, and GPU can all be regarded as controllers. The control unit 43 may include a plurality of physically separated objects. For example, the control unit 43 may include a plurality of semiconductor chips.

The control unit 43 includes a reception unit 431, a transmission unit 432, and a display control unit 433. Individual blocks (the reception unit 431 to the display control unit 433) constituting the control unit 43 are functional blocks individually indicating functions of the control unit 43. These functional blocks may be software blocks or hardware blocks. For example, each of the functional blocks described above may be one software module implemented by software (including a microprogram) or one circuit block on a semiconductor chip (die). Needless to say, each of the functional blocks may be formed as one processor or one integrated circuit. Note that the control unit 43 may be configured in a functional unit different from the above-described functional block. The functional block may be configured by using any method.

The input unit 44 is an input apparatus that receives various inputs from the outside. For example, the input unit 44 is an operation apparatus for the user to perform various operations, including apparatuses such as a keyboard, a mouse, operation keys and a voice input apparatus. In a case where a touch panel is employed as the terminal apparatus 40, the touch panel is also included in the input unit 44. In this case, the user performs various operations by touching the screen with a finger or a stylus.

The output unit 45 is an apparatus that performs various outputs such as sound, light, vibration, and an image to the outside. The output unit 45 includes a display unit 451 that displays various types of information. The display unit 451 is implemented by a display apparatus such as a liquid crystal display and an organic electro-luminescence (EL) display, for example. In a case where a touch panel is employed as the terminal apparatus 40, the display unit 451 may be integrated with the input unit 44. In a case where the terminal apparatus 40 is an XR device, the device may be a transmission type device that projects an image on glass, or may be a retina projection type device that directly projects an image on the retina of the user. The output unit 45 performs various outputs to the user under the control of the control unit 43.

The sensor unit 46 is a sensor that acquires information related to the position or attitude of the terminal apparatus 40. For example, the sensor unit 46 is an acceleration sensor and/or a gyro sensor. For example, the sensor unit may be a Six degrees of freedom (6DoF) sensor or a Three degrees of freedom (3DoF) sensor. The sensor unit 46 is not limited to the acceleration sensor and/or the gyro sensor. The sensor unit 46 may be an Inertial Measurement Unit (IMU), a geomagnetic sensor, an illuminance sensor, a Time of Flight (ToF) sensor, or an image sensor. For example, the sensor unit 46 may be a Global Navigation Satellite System (GNSS) sensor. The GNSS sensor may be a Global Positioning System (GPS) sensor, a GLONASS sensor, a Galileo sensor, or a Quasi-Zenith Satellite System (QZSS) sensor. In addition, the sensor unit 46 may be a camera (for example, an infrared camera or a light-field camera), a Light Detection And Ranging (LiDAR), or a millimeter wave radar. Furthermore, the sensor unit 46 may be a combination of a plurality of these sensors.

<<3. Configuration example of communication system in 5G>>

The configuration of the communication system 1 has been described above. Next, a specific configuration example of the communication system 1 of the present embodiment will be described.

The following will describe a configuration of a fifth generation mobile communication system (5G) as a specific configuration example of the communication system 1, but the communication system 1 is not limited to the fifth generation mobile communication system. The communication system 1 may be a fourth generation mobile communication system (4G) or a sixth generation mobile communication system (6G). Needless to say, the communication system 1 may be a wireless communication system other than these.

<3-1. Network architecture of 5GS>

First, a network architecture applicable to the communication system 1 of the present embodiment will be described. Here, a 5G system (5GS) architecture will be described as an example of the architecture of the communication system 1.

FIG. 7 is a diagram illustrating a configuration example of 5GS architecture. The core network CN of 5G is also referred to as 5G Core (5GC)/Next Generation Core (NGC). The core network CN of the present embodiment includes, for example, one or a plurality of management apparatuses 20. Hereinafter, the core network CN of 5G is also referred to as a 5GC/NGC. The core network CN is connected to User Equipment (UE) 40 via a radio access network (RAN)/access network (AN) 510 (RAN/AN 510). An example of the UE 40 is the terminal apparatus 40 in the communication system 1.

An application server (AS) 10 that performs processing related to the application is connected to the 5GS via the Internet. An example of the application server 10 is the server 10 in the communication system 1. With this configuration, the UE 40 can use the application via the 5G service.

In a case where an entity providing the application has a subscription such as a Service Level Agreement (SLA) with a Public Land Mobile Network (PLMN) operator providing the 5G service, the application server 10 can be located in the core network CN as a DN 530. The application server 10 may be provided in a form of an edge server.

A control plane function group 540 includes a plurality of Network Functions (NFs). The plurality of NFs included in the control plane function group 540 includes, for example, an Access and Mobility Management Function (AMF) 541, a Network Exposure Function (NEF) 542, a Network Repository Function (NRF) 543, a Network Slice Selection Function (NSSF) 544, a Policy Control Function (PCF) 545, a Session Management Function (SMF) 546, a Unified Data Management (UDM) 547, an Application Function (AF) 548, an Authentication Server Function (AUSF) 549, a UE radio Capability Management Function (UCMF) 550, a Time Sensitive Communication and Time Synchronization Function (TSCTSF) 551, and a Binding Support Function (BSF) 552.

The UDM 547 includes a Unified Data Repository (UDR) that holds and manages subscription information, and a Front End (FE) portion that processes the subscription information. The AMF 541 performs mobility management. The SMF 546 performs session management.

The UCMF 550 holds UE Radio Capability Information corresponding to all UE Radio Capability IDs in the Public Land Mobile Network (PLMN). The UCMF 550 is responsible for assigning each PLMN-assigned UE Radio Capability ID. The TSCTSF 551 and the BSF 552 will be described below.

Functions and services provided by the core network CN can be used via the AF 548 prepared for the application.

However, in the case of a third party application, it is necessary to have a Service Level Agreement (SLA) with an operator being a management entity of the core network CN so as to be regarded as a trusted AF 548 for the core network CN.

In addition, regarding the third party AF 548 located outside the core network CN, it is typical to connect the third party AF 548 to the core network CN via the NEF 542 from the viewpoint of security.

The Namf is a service-based interface provided by the AMF 541. The Nsmf is a service-based interface provided by the SMF 546. Nnef is a service-based interface provided by the NEF 542. Npcf is a service-based interface provided by the PCF 545. Nudm is a service-based interface provided by the UDM 547. Naf is a service-based interface provided by the AF 548. Nnrf is a service-based interface provided by the NRF 543. Nnssf is a service-based interface provided by the NSSF 544. Nausf is a service-based interface provided by the AUSF 549. Nucmf is a service-based interface provided by the UCMF 550. Ntsctsf is a service-based interface provided by the TSCTSF 551. Nbsf is a service-based interface provided by the BSF 552. Each NF exchanges information with other NFs via each service-based interface.

By requesting or subscribing to the service provided by another Network Function, each NF can receive a response or notification from the service. That is, each NF exchanges information with another NF by means of request/response or subscribe/notification via each service-based interface.

A User Plane Function (UPF) 520 has a function of user plane processing. The Data Network (DN) 530 has a function of enabling connection to a service unique to a Mobile Network Operator (MNO), the Internet, and a third party service. The UPF 520 functions as a forwarding processing unit of user plane data processed by the application server 10. The UPF 520 also functions as a gateway connected to the RAN/AN 510.

Here, each NF of the core network CN can be implemented by virtualization and a container. Each NF can be implemented on a cloud server. In 5GS, each NF can be dynamically set so as to be re-configurable by using a Software Defined Network (SDN).

The RAN/AN 510 has a function of enabling connection to the RAN and connection to an other than the RAN. The RAN/AN 510 includes a base station referred to as a gNB or an ng-eNB. The RAN may also be referred to as a Next Generation-RAN (NG-RAN).

In addition, the functions of the RAN/AN 510 are divided into a Central Unit (CU) that processes L2/L3 functions of Packet Data Convergence Protocol (PDCP) sublayers and higher, and a Distributed Unit (DU) that processes L2/L1 functions of Radio Link Control (RLC) sublayers and lower. The functions of the RAN/AN 510 can be distributed and arranged via the F1 interface.

The DU function is divided into: a Radio Unit (RU) that processes a LOW PHY sublayer and a radio section (Radio); and DU that processes each sublayer of RLC, Medium Access Control (MAC) and HIGH PHY. The RU functions can be distributed and arranged, for example, via a fronthaul compliant with an evolved Common Public Radio Interface (eCPRI).

Functions of the CU and/or the DU can be implemented by virtualization or a container. Functions of the CU and/or the DU can be implemented on a cloud server. In the 5GS, the functions of the CU and/or the DU can be set dynamically so as to be reconfigurable by using SDN.

The UE 40 and the AMF 541 mutually exchange information via a reference point N1. Information is exchanged between the RAN/AN 510 and the AMF 541 via a reference point N2. Information is exchanged between the SMF 546 and the UPF 520 via a reference point N4.

The SMF 546 performs QoS control for each service data flow. The QoS control of the SMF 546 is applicable to both IP and Ethernet type service data flows. With QoS control performed for each service data flow, the SMF 546 provides QoS authorized for each specific service.

The SMF 546 may utilize indicators such as QoS subscription information in conjunction with service-based, subscription-based, or predefined PCF internal policy rules.

The SMF 546 uses a Policy and Charging Control (PCC) rule associated with a QoS flow, that is, a data flow under the QoS control so as to decide QoS to be authorized for a QoS flow.

In a case where the QoS flow is deleted, the SMF 546 can notify the PCF 545 that the QoS flow has been deleted. In addition, in a case where the bit rate guaranteed by the QoS flow, that is, a Guaranteed Flow Bit Rate (GFBR) cannot be obtained, the SMF 546 can notify the PCF 545 that the GFBR cannot be guaranteed.

A QoS reservation procedure of the QoS flow can include establishment of a UE-initiated QoS Flow. In addition, QoS downgrade or upgrade can be included as a part of QoS flow modification procedure.

<3-2. XR architecture in 5G>

FIG. 8 is a diagram illustrating a configuration example of an XR architecture in 5G. More specifically, FIG. 8 is a diagram illustrating a configuration of an architecture of a use case referred to as "Generalized XR Split Rendering" described in 3GPP TR 26.928" Extended Reality (XR) in 5G".

This architecture includes an XR server 60 and an XR device 70 (e.g., XR Capable UE). The XR server 60 corresponds to the server 10 described above. In the example of the network architecture in 5GS illustrated in FIG. 7, the XR server 60 corresponds to the DN 530 or the application server 10. The XR device 70 corresponds to the above-described terminal apparatus 40. In the example of the 5GS network architecture illustrated in FIG. 7, the XR device 70 corresponds to the UE 40.

<XR server>

The XR server 60 includes an XR media generation unit 61, an XR display region pre-rendering unit 62, a 2D/3D media encoding unit 63, an XR rendering metadata processing unit 64, an XR media content delivery unit 65, and a 5GS delivery unit 66.

The XR media generation unit 61 generates the XR media adapted to the display region in accordance with the tracking and sensor information received from the XR device 70.

The XR display region pre-rendering unit 62 executes rendering adapted to the display region in accordance with tracking and sensor information received from the XR device 70.

The 2D/3D media encoding unit 63 encodes 2D/3D media constituting the XR media.

The XR rendering metadata processing unit 64 generates metadata necessary for rendering XR media.

The XR media content delivery unit 65 delivers, via the 5GS delivery unit 66, XR media content including the encoded 2D/3D media and the metadata for rendering to the XR device 70

Furthermore, when delivering the XR media content, the XR media content delivery unit 65 can use a Real-Time Transport Protocol (RTP) represented by WebRTC. In general, RTP uses a User Datagram Protocol (UDP) as a protocol of a transport layer, and applies Forward Error Correction (FEC) in order to omit retransmission control used in a Transmission Control Protocol (TCP).

The XR media content delivery unit 65 or the 5GS delivery unit 66 may provide QoS control in accordance with the encoding format of the 2D/3D media or the position in the display region.

For example, the XR media content delivery unit 65 or the 5GS delivery unit 66 may transmit, for Foveated Rendering, data in a high-resolution format with a high priority and transmit data in a low-resolution format with low priority. Alternatively, the XR media content delivery unit 65 or the 5GS delivery unit 66 may transmit data in a central region of the display region with high priority, and may transmit data in a region away from the center of the display region with low priority. Foveated rendering is a technique that can reduce the necessary data size while minimizing visual degradation by maintaining a high resolution at the center of the field of view and decreasing the resolution toward outer side of the field of view.

<XR device>

The XR device 70 (e.g., XR Capable UE) includes a 3DOF/6DOF tracking and XR sensor unit 71 (DOF representing Degrees Of Freedom), an XR media content delivery unit 72, a 5GS delivery unit 73, a 2D/3D media decoding unit 74, an XR rendering metadata processing unit 75, an XR display region rendering unit 76, and a display unit 77.

The 3DOF/6DOF tracking and XR sensor unit 71 acquires pose information (posture information) of the user as tracking information for specifying a display region (Viewport). This pose information is included in the tracking and sensor information in the XR media content delivery unit 72 and provided to the XR server 60. For example, the tracking and sensor information can include inertial information acquired by 3DOF/6DOF tracking and XR sensor unit 71 in addition to or instead of the pose information. In the following description, the tracking and sensor information may be simply referred to as sensor information.

The 3DOF/6DOF tracking and XR sensor unit 71 includes, for example, a Global Navigation Satellite System (GNSS), a geomagnetic sensor, an acceleration sensor, a gyro sensor, an illuminance sensor, an infrared camera, a light field camera, Light Detection And Ranging (LiDAR), a camera (image sensor), a Time of Flight (ToF) sensor, a millimeter wave radar, etc. The 3DOF/6DOF tracking and XR sensor unit 71 corresponds to the sensor unit 46 of the terminal apparatus 40.

The XR media content delivery unit 72 receives the XR media content including the display region from the XR server 60 via the 5GS delivery unit 73. Here, the XR media content includes 2D/3D media and metadata for rendering the XR media.

The 2D/3D media decoding unit 74 decodes the 2D/3D media constituting the XR media content received via the 5GS delivery unit 73 and the XR media content delivery unit 72.

The XR rendering metadata processing unit 75 processes the metadata for rendering XR media constituting XR media content received via the 5GS delivery unit 73 and the XR media content delivery unit 72.

The metadata includes projection information, and a 3D mesh can be generated based on the projection information. The projection information is also used when the spherical image is mapped on a two-dimensional texture signal.

The 3D mesh is, for example, a polygon mesh of an aggregate of vertices, edges, and faces that define the shape of a polyhedral object in 3D computer graphics or solid modeling. Objects generated with polygon meshes are represented by various types of elements, for example, vertices, edges, faces, polygons, and surfaces.

In addition, 3D meshes are generated using point clouds that are used in three-dimensional modeling in various fields, such as medical images, construction, 3D printing, manufacturing, 3D gaming, XR applications, etc. A point cloud is a collection of data points defined in a predetermined coordinate system. For example, it is possible, in a three-dimensional coordinate system, to define the shape of an existing or created physical system by using a point cloud.

In addition, the scene description enables generation of various 3D scenes of the XR application. The scene description is also referred to as a Scene Graph. The scene description is a Directed Acyclic Graph (DAG) including the geometric arrangement of the scene layered on an object basis, and usually has a simple tree structure. A leaf node of the graph represents a geometric constituent unit for generating a figure such as a polygon. Each node of the graph holds a pointer to a child node, and the child node is a group of other nodes, a geometric element, a transformation matrix, etc. The spatial transformation is expressed as a node of a graph and is expressed by a transformation matrix. Nodes in other scene graphs include 3D objects or parts thereof, light sources, particle systems, display cameras, etc.

The XR display region rendering unit 76 renders the 2D/3D media decoded by the 2D/3D media decoding unit 74 in consideration of the metadata processed by the XR rendering metadata processing unit 75 and the latest pose information of the user acquired from the 3DOF/6DOF tracking and XR sensor unit 71.

The XR display region rendering unit 76 may have a function referred to as Timewarp. Timewarp is a function for reducing Motion to Photon Latency (MPL) that causes VR motion sickness. The XR device 70 using the function of the Timewarp specifies the latest display region (second display region) to be corrected from the current display region (first display region) based on latest inertial information acquired by the 3DOF/6DOF tracking and XR sensor unit 71, for example. Subsequently, the XR device 70 executes coordinate transformation of transforming the XR media adapted to the first display region into the XR media adapted to the second display region.

The display unit 77 displays the 2D/3D media rendered by the XR display region rendering unit 76. The display unit 77 corresponds to the display unit 451 of the terminal apparatus 40.

Note that each block constituting the XR device 70 and the XR server 60 illustrated in FIG. 8 represents a logical function. Therefore, these functions may be implemented in an aggregated manner or may be implemented in a divided manner into more subdivided functions. In addition, these functions may be statically or dynamically distributed and implemented in a plurality of apparatuses.

For example, the 5GS delivery unit 73 of the XR device 70 may be implemented by the function of the UE 40. Furthermore, the 5GS delivery unit 66 of the XR server 60 may be implemented by the functions of the RAN/AN 510 and the core network CN. In this manner, the service such as XR is required to handle data of a relatively small capacity, such as pose information and inertial information, and data of a large capacity, such as XR media. Furthermore, the service such as XR is desirably able to apply different QoS control in accordance with the type of data.

<3-3. QoS control in 5GS>

FIG. 9 is a diagram illustrating an example of a QoS architecture of 5GS (created based on 3GPP TS38.300). FIG. 9 is created based on 3GPP TS38.300. At a Non-Access Stratum (NAS) level, a QoS flow has the finest granularity in distinguishing different QoS in a Protocol Data Unit (PDU) session. Within the PDU session, QoS flows are identified by QoS Flow ID (QFI).

In addition, in an Extended Reality (XR) or a media service, a group of packets can be transmitted by using a payload of a PDU set. The PDU set includes one or more PDUs that carry a payload of a unit of information generated at the application level. The unit of information may be, for example, at least one of an image frame and a video slice of an XR or a media service. Furthermore, the unit of information may be at least one of an I frame, a P frame, and a B frame of moving image data in a Group of Picture (GOP) format. Furthermore, in a multimodal application that handles a plurality of types of mutually related data such as XR, each of the plurality of types of data (for example, pose information, audio information, moving image information, haptics, etc.) may be the unit of information. Needless to say, the unit of information is not limited to these.

That is, the packet in the PDU set is handled as a unit of data to be received and decoded within a certain duration. For example, only when all packets that transmit image frames or video slices, or a certain amount of packets, have been successfully received, the UE may decode these packets. For example, the UE may decode the image frames in the GOP only when all the image frames having the dependency relationship have been successfully received.

The 5GS can identify data at a finer granularity by a PDU set in a QoS flow with a finer granularity in terms of QoS control. The 5GS can apply PDU set level QoS control in addition to QoS flow level QoS control.

The PCF 545 can associate AF session information with the PDU session. The AF 548 may request establishment of a data session (for example, a PDU session) for the UE 40 as a session for a specific QoS (for example, low latency or low jitter) via an AF session with the PCF 545.

The SMF 546 associates the PCC rule with the QoS flow based on the QoS and the service request. The SMF 546 assigns QFI to the new QoS flow, and acquires the PCC rule and other information associated with the QoS flow from the PCF 545.

The SMF 546 acquires, from the PCC rule, a QoS profile of the QoS flow, an indication related to the corresponding UPF 520 (for example, N4 rules), and a QoS rule.

The base station (gNB) of the RAN/AN 510 can establish at least one Data Radio Bearer (DRB) with each UE 40 together with the PDU session. The DRB is a logical path for transmitting data.

The QoS model of 5G supports a Guaranteed flow Bit Rate (GBR) which can receive a bandwidth guarantee and a Non-Guaranteed flow Bit Rate (Non-GBR) which cannot receive the bandwidth guarantee. Furthermore, for a Time Sensitive Communication (TSC) QoS flow, Delay-critical GBR is supported.

The RAN/AN 510 and the core network CN ensure the Quality of Service by mapping each packet to an appropriate QoS flow and DRB. That is, mapping to be performed is two-step mapping, specifically, mapping between the IP flow and the QoS flow in the NAS and mapping between the QoS flow and the DRB in the AS.

At the NAS level, QoS flows are characterized by QoS profiles provided from the core network CN to the RAN/AN 510 and by QoS rules provided from the core network CN to the UE 40.

The QoS profile is used by the RAN/AN 510 to decide a processing method on the wireless interface. The QoS rule is used to indicate, to the UE 40, mapping of the traffic of the user plane in the uplink and the QoS flow.

Therefore, the QoS rule of the MBS QoS flow and the QoS parameter at the QoS flow level are not provided to the UE 40 for the Multicast/Broadcast Service (MBS) session.

The QoS profile is provided from the SMF 546 to the RAN/AN 510 via the AMF 541 and the reference point N2, or is preset in the RAN/AN 510.

In addition, the SMF 546 can provide one or more QoS rules and, if necessary, QoS parameters of QoS flow levels associated with the QoS rules to the UE 40 via the AMF 541 and the reference point N1.

In addition to or instead of this, Reflective QoS control can be applied to the UE 40. The Reflective QoS control is QoS control that monitors the QFI of downlink packets and applies the same mapping to uplink packets.

The QoS flow is a GBR QoS flow or a Non-GBR QoS flow depending on the QoS profile. The QoS profile of the QoS flow includes, for example, QoS parameters such as a 5G QoS Identifier (5QI) and an Allocation and Retention Priority (ARP).

The ARP includes information related to a priority level, a pre-emption capability, and a pre-emption vulnerability.

The priority level defines a relative importance level of QoS flows. The smallest value of the priority level indicates the highest priority.

The pre-emption capability is an index that defines whether one QoS flow can take resources already assigned to other QoS flows with lower priority levels. The pre-emption vulnerability is an index that defines whether a QoS flow is able to give over its assigned resources to other QoS flows with higher priority levels.

Either "enabled" or "disabled" is set as the pre-emption capability and the pre-emption vulnerability.

In addition, the QoS profile of the QoS flow can include PDU Set QoS Parameters.

In a GBR QoS flow, the QoS profile may include, for example, at least one of the following information:

- · Uplink and Downlink GFBR
- · Uplink and downlink Maximum Flow Bit Rate (MFBR)
- · Uplink and downlink Maximum Packet Loss Rate
- · Delay Critical Resource Type
- · Notification Control

In the Non-GBR QoS flow, the QoS profile may include at least one of a Reflective QoS Attribute (RQA) and Additional QoS Flow Information.

The notification control of the QoS parameter indicates whether notification from the RAN/AN 510 is requested when a certain QoS flow cannot satisfy GFBR. When the notification control is "enabled" and it is judged that GFBR cannot be satisfied for a GBR QoS flow, the RAN/AN 510 transmits a notification to that effect to the SMF 546.

At that time, the RAN/AN 510 needs to maintain the QoS flow unless the RAN/AN 510 is in a special state of requesting release of the RAN resource of the GBR QoS flow. The special state may be, for example, at least one of a Radio Link Failure and congestion inside the RAN (RAN Internal Congestion).

Subsequently, when it is judged that the GFBR is satisfied again for the QoS flow, the RAN/AN 510 transmits a new notification to that effect to the SMF 546.

In addition, an Alternative QoS Profile can be used for notification control of QoS parameters. The Alternative QoS Profile includes a set of Packet Delay Budget (PDB), Packet Error Rate (PER), Averaging Window, and GFBR. The Alternative QoS Profile for the Delay-critical GBR QoS flow can further include information of a Maximum Data Burst Volume (MDBV).

When the RAN/AN 510 transmits a notification to the SMF 546 that the QoS profile cannot be met, the RAN/AN 510 confirms whether there is currently an Alternative QoS Profile with a higher priority that can satisfy the QoS profile, based on the list of Alternative QoS Profiles. When there is a corresponding Alternative QoS Profile, the RAN/AN 510 indicates to the SMF 546 that there is currently an Alternative QoS Profile that can satisfy the QoS profile. To do so, the RAN/AN 510 includes information referring to its Alternative QoS Profile in the notification to be transmitted to the SMF 546. With this control, the SMF 546 can judge that even the lowest priority level Alternative QoS Profile cannot satisfy the QoS profile.

The Aggregate Maximum Bit Rate (AMBR) is related to the Session-AMBR of each PDU session and the UE-AMBR of the UE 40 of each PDU session. The Session-AMBR restricts the total bit rate (Aggregate Bit Rate) expected to be provided across all Non-GBR QoS flows for a specific PDU session. The Session-AMBR is managed by the UPF 520. In addition, the UE-AMBR restricts a total bit rate (Aggregate Bit Rate) expected to be provided over all Non-GBR QoS flows for a certain UE 40. The UE-AMBR is managed by the RAN/AN 510.

In addition, a Slice Maximum Bit Rate (S-MBR) related to a network slice (S-NSSAI) may be set in each UE 40. The S-MBR may be included in the subscription information as a Subscribed UE-Slice-MBR.

The UE-Slice-MBR restricts the total bit rate (Aggregate Bit Rate) expected to be provided across all the QoS flows of GBRs and Non-GBRs that belong to all PDU sessions established by the UE 40 for the same network slice (S-NSSAI).

The RAN/AN 510 receives the UE-Slice-MBR corresponding to the network slice (S-NSSAI) from the AMF 541. The RAN/AN 510 configures the Session-AMBR and the MFBR for the UE 40 so that a sum of Session-AMBR of all PDU sessions belonging to this network slice (S-NSSAI) and MFBR of GBR QoS flows is the UE-Slice-MBR.

The 5QI relates to features of QoS. The 5QI provides guidelines (policies) for setting node-specific parameters for each QoS flow. The communication apparatus can learn a standardized or preset 5G QoS feature from the 5QI. No explicit signaling is performed for standardized or preset 5G QoS features. QoS features to be signaled can be part of a QoS profile.

The QoS features may include information related to at least one of Resource Type, Priority, Packet Delay Budget, Packet Error Rate, Averaging Window, and Maximum Data Burst Volume.

The resource type is a GBR QoS flow, a Non-GBR QoS flow, or a Delay-critical GBR QoS flow. The Packet Delay Budget may include a Packet Delay Budget in the core network CN.

At the AS level, the DRB defines a packet processing method at the wireless interface (Uu interface). The DRB provides the same packet forwarding processing for any packet.

The RAN/AN 510 maps the QoS flow to the DRB based on the QFI and the QoS profile that is set to the QFI. The RAN/AN 510 can establish different DRBs for packets requesting different packet forwarding processing (refer to FIG. 9).

In addition, the RAN/AN 510 may multiplex a plurality of QoS flows belonging to the same PDU session into the same DRB (refer to FIG. 9).

On the uplink, the mapping of QoS flows to DRBs is controlled by a mapping rule. The mapping rule is signaled by two different methods.

One method is a method referred to as Reflective Mapping. In the Reflective Mapping, the UE 40 monitors the QFI of the downlink packet for each DRB and applies the same mapping to the uplink packet.

Another method is a method referred to as Explicit Configuration. In an Explicit Configuration, a mapping rule of a QoS flow to a DRB is explicitly signaled by Radio Resource Control (RRC).

In the downlink, the QFI is signaled on the Uu interface by the RAN/AN 510 for Reflective Quality of Service (RQoS). However, neither the RAN/AN 510 nor the NAS signal the QFI for a certain DRB on the Uu interface unless they use the Reflective Mapping for the QoS flow carried on that DRB.

On the uplink, the RAN/AN 510 can configure to signal the QFI on the Uu interface towards the UE 40. In addition, the RAN/AN 510 can set a default DRB for each PDU session. When the uplink packet is not adapted to either the Explicit Configuration or the Reflective Mapping, the UE 40 maps the packet to the default DRB of the PDU session.

For a Non-GBR QoS flow, the core network CN may transmit additional QoS flow information parameters associated with a certain QoS flow to the RAN/AN 510. This is performed to indicate an increase of the frequency of certain traffic relative to other Non-GBR QoS flows in the same PDU session.

How to map the plurality of QoS flows in a PDU session to one DRB depends on the RAN/AN 510. For example, the RAN/AN 510 may map the GBR QoS flow and the Non-GBR QoS flow to a same DRB or to separate DRBs. In addition, the RAN/AN 510 may map the plurality of GBR QoS flows to the same DRB or to separate DRBs.

In the 5G NR, a Service Data Adaptation Protocol (SDAP) sublayer has been newly introduced for QoS control via a QoS flow. By the SDAP sublayer, traffic of a QoS flow is mapped to an appropriate DRB. The SDAP sublayer can have a plurality of SDAP entities. The SDAP sublayer has an SDAP entity for each PDU session on the Uu interface. The SDAP entity is established or released by the RRC.

The QoS flow is identified by the QFI in the PDU session container included in a GPRS Tunneling Protocol (GTP)-U header. The PDU session is identified by a GTP-U Tunnel Endpoint ID (TEID). The SDAP sublayer maps each QoS flow to a specific DRB.

In addition, to support PDU set-based QoS control (PDU Set based QoS Handling), a PDU Session Anchor-UPF 520 (PSA-UPF 520) identifies PDUs belonging to a PDU set, decides PDU set information, and transmits the PDU set information to the RAN/AN 510 in the state of being included in a GTP-U header. The PDU set information is used for the RAN/AN 510 for PDU set-based QoS control (PDU Set based QoS Handling).

The PDU set information may include, for example, at least one of the following information items:

· PDU set sequence number
· Notification of End PDU of PDU set
· PDU sequence number in PDU set
· PDU set size in units of bytes
· Importance of PDU set

Here, by the importance of the PDU set, the RAN/AN 510 can identify the relative importance to other PDU sets in the QoS flow. In addition, information necessary for identifying the PDU set is provided from the SMF 546 to the PSA-UPF 520. This information is provided by using Protocol Description of Packet Detection Rule (PDR), which is one of N4 rules to be described below.

Having received the QoS monitoring request from the AF 548, the PCF 545 generates an authorized QoS monitoring policy and provides it to the SMF 546. Subsequently, the PCF 545 may include the QoS monitoring policy in the PCC rule. The AF 548 may include the QoS monitoring request in an AF request to be described below.

Here, as QoS monitoring, the AF 548 can request packet delay monitoring, congestion information monitoring, data rate monitoring, QoS notification monitoring, and the like.

The monitoring of the packet delay is measurement of an UpLink (UL) packet delay, a DownLink (DL) packet delay, or a Round Trip (RT) packet delay between the UE 40 and the PSA-UPF 520.

The monitoring of the congestion information is monitoring of the congestion information related to the QoS flow of the UL and/or DL provided by the RAN/AN 510.

Data rate monitoring is measurement of UL and/or DL data rates for each QoS flow.

The QoS notification monitoring is monitoring of notification control information of QoS parameters provided by the RAN/AN 510.

Furthermore, the PCF 545 is provided with information regarding a periodicity from the AF 548 as information regarding a traffic pattern for a TSC QoS flow. In this case, the PCF 545 can include information related to the periodicity in the PCC rule. Furthermore, in accordance with a local policy, the PCF 545 may include, in the PCC rule, an indication of executing traffic parameter measurements for detecting jitter occurring in the N6 and measurement of the UL periodicity and/or the DL periodicity. In addition, the PCF 545 may transmit the PCC rule including the indication to the SMF 546. 5GS can also handle these measurements as QoS monitoring.

The SMF 546 can activate delay measurements of end-to-end UL/DL/RT packets between the UE 40 and the PSA-UPF 520 for QoS flows. The SMF 546 can perform the activation during the PDU session establishment procedure or during the PDU session modification procedure.

The SMF 546 transmits a QoS monitoring request to the UPF 520 via the reference point N4. Subsequently, the SMF 546 then transmits N2 signaling to request QoS monitoring between the UPF 520 and the RAN/AN 510.

The SMF 546 requests QoS monitoring based on a QoS monitoring policy received from the PCF 545 or the authorized QoS monitoring policy that is locally configured in advance. The QoS monitoring request includes a monitoring variable decided by the SMF 546.

The RAN/AN 510 measures the delay of the UL/DL packet in the RAN/AN 510 portion. The RAN/AN 510 provides the measurement values to the UPF 520 via the reference point N3.

The UPF 520 calculates a delay of the UL/DL packet at the reference point N3 or N9. The UPF 520 transmits the QoS monitoring result to the SMF 546 based on a predetermined condition. Here, the predetermined condition is, for example, only once, periodically, or an event triggered base.

In addition, the UPF 520 may transmit the QoS monitoring result to the AF 548 via the locally arranged NEF 542. Here, the QoS monitoring result includes the following, for example.

· Measurement result of the bit rate (for example, the average bit rate and the maximum bit rate) of each GBR QoS flow in the target PDU session
· Measurement results of total bit rate of all Non-GBR QoS flows of the target PDU session
· Measurement result of Packet Error Rate of the target PDU session
· Measurement results of total bit rate of all Non-GBR QoS flows of the target UE 40
· Measurement result of Packet Error Rate of the target UE 40
· Measurement result of delay of UL/DL packet

In addition, the AF 548 may transmit a Packet Delay Variation monitoring and report request to the PCF 545 together with a packet delay measurement request. Here, the Packet Delay Variation is, for example, a variation of a packet delay measured between the UE 40 and the PSA-UPF 520. The Packet Delay Variation is one definition for evaluating jitter during packet transmission.

The request for Packet Delay Variation may include, for example, at least one of the following:

· Parameters of measured Packet Delay Variation (UL, DL, or Round Trip (RT) Packet Delay Variation)
· Frequency of reporting (event triggered basis or periodic)

In response to the request for monitoring the Packet Delay Variation from the AF 548, the PCF 545 launches a QoS monitoring procedure. The PCF 545 acquires a result of QoS monitoring of UL, DL, or Round Trip (RT) from the SMF 546. The PCF 545 derives a packet delay variation of 5GS (5GS Packet Delay Variation) based on the QoS monitoring result and reports the derived Packet Delay Variation to the AF 548.

The delay of the UL/DL packet is a delay including the delay of the UL/DL packet in the RAN/AN 510 portion acquired from the RAN/AN 510 and the delay of the UL/DL packet in the reference point N3 or N9.

In addition, when the PDU session is a session via a TSN bridge, the Packet Delay Budget for the TSC QoS flow is a sum of a 5G-AN Packet Delay Budget (PDB) and a Core Network (CN) PDB.

The above-described QoS monitoring mechanism can also be applied to the TSC QoS flow for measurement of a bit rate (for example, the average bit rate and the maximum bit rate) between the UE 40 and the PSA-UPF 520 and delay measurement of an end-to-end UL/DL packet.

The TSC QoS flow uses the Delay-critical GBR resource type and TSC Assistance Information. The TSC QoS flow can use a standardized 5QI value, a preset 5QI value, or a dynamically assigned 5QI value.

For a TSC QoS flow, it is required to transmit one data burst with a Maximum Data Burst Volume in the 5G-AN PDB. A TSC burst size is used to set a Maximum Data Burst Volume. The maximum TSC burst size is handled as the maximum amount of data within a duration equal to the value of the 5G-AN PDB for the 5QI. The maximum value of the TSC burst size is mapped to a 5QI with a Maximum Data Burst Volume equal to or greater than that.

PDU set QoS parameters (PDU Set QoS Parameters) are used to support PDU set-based QoS control (PDU Set based QoS Handling). The PDU set-specific QoS characteristics include at least one of the following:

· PDU Set Delay Budget (PSDB)
· PDU Set Error Rate (PSER)
· PDU Set Integrated Handling Information (PSIHI)

The PCF 545 decides PDU set QoS parameters in accordance with information provided from the AF 548 and/or local settings. The PDU set QoS parameter is transmitted to the SMF 546 as part of the PCC rule. The SMF 546 transmits PDU set QoS parameters to the RAN/AN 510 as part of the QoS profile.

The PDU Set Delay Budget defines an upper limit of a delay occurring at transmission of the PDU set between the UE 40 and a termination point of the N6 interface of the UPF 520. That is, the PDU Set Delay Budget is a time from when the first PDU of the PDU set is received until all the PDUs are successfully received. The PDU Set Delay Budget applies to the DL PDU set received at the PSA-UPF 520 via the N6 interface and the UL PDU set transmitted by the UE 40.

The PDU Set Error Rate defines an upper limit of a percentage of a PDU set not successfully received in an upper layer (for example, the PDCP sublayer of the RAN/AN 510) to a PDU set handled in a link layer (for example, the RLC sublayer of the RAN/AN 510). One QoS flow is associated with only one PDU Set Error Rate. The value of the Packet Error Rate is the same in UL and DL. When the PDU Set Error Rate is available, the use of the PDU Set Error Rate is prioritized over the Packet Error Rate.

The PDU Set Integrated Handling Information is information indicating whether all the PDUs of the PDU set are needed for an application layer on a receiving side using the PDU set.

Here, the notification control of the QoS parameter and the Alternative QoS Profile described above can also be applied to this PDU set QoS parameter.

<3-4. Network Slice Selection Assistance Information>

The network slice is a unit of service obtained by dividing the communication service provided by the 5G in accordance with a communication attribute (for example, data rate, delay, etc.) of each service.

Single Network Slice Selection Assistance Information (S-NSSAI) is assigned to each network slice as Network Slice Selection Assistance Information (NSSAI). The Network Slice Selection Assistance Information is information for assisting selection of a network slice. The S-NSSAI includes a set of mandatory Slice/Service Type (SST) formed with 8 bits for identifying a slice type and optional Slice Differentiator (SD) formed with 24 bits for distinguishing different slices in the same SST.

For S-NSSAI, a standardized SST or a non-standardized unique SST can be used. When the standardized S-NSSAI value is used, only the standardized SST is included, without the SD. On the other hand, when the non-standardized S-NSSAI value is used, only the standardized SST and SD, the non-standardized SST and SD, or the non-standardized SST is to be included. The non-standardized S-NSSAI value can only be used within the PLMN that is using it on its own, that is, within a telecom operator.

FIG. 10 is a diagram illustrating standardized SST values. The table illustrated in FIG 10 is based on the table illustrated in 3GPP TS23.501. The "case of using standardized S-NSSAI values" described above corresponds to a case of using S-NSSAI values including only these SST values (eMBB: 1, URLLC: 2, MIoT: 3, V2X: 4, HMTC: 5, HDLLC: 6). That is, non-standardized S-NSSAI values are used for other network slices, for example, network slices subdivided by the SD.

The network slice setting information includes one or more Configured NSSAI(s). A Serving Public Land Mobile Network (Serving PLMN) can set the Configured NSSAI applied for each PLMN in the UE 40. Alternatively, the Home PLMN (HPLMN) can set the Default Configured NSSAI in the UE 40. The UE 40 under the Serving PLMN can use the Default Configured NSSAI only when the Configured NSSAI for the Serving PLMN is not set in the UE 40.

Note that the Default Configured NSSAI may be pre-set in the UE 40. In addition, the UDM 547 of the HPLMN may provide or update the Default Configured NSSAI by using UE Parameters Update through the UDM Control Plane processing.

The Configured NSSAI includes one or more S-NSSAI(s).

Requested NSSAI is NSSAI provided from the UE 40 to the Serving PLMN during the registration procedure. Requested NSSAI is to be one of the following:

· Default Configured NSSAI
· Configured NSSAI
· Allowed NSSAI or a part thereof
· NSSAI obtained by adding one or more S-NSSAI included in the Configured NSSAI to the Allowed NSSAI or a part thereof

The Allowed NSSAI is, for example, NSSAI provided by the Serving PLMN to the UE 40 in the registration procedure. The Allowed NSSAI indicates a value of one or more S-NSSAI(s) available in the current Registration Area of the current Serving PLMN.

Rejected S-NSSAI indicates a value of S-NSSAI that is not allowed to be used in at least one tracking area in the current Registration Area of the current Serving PLMN, among one or more S-NSSAIs included in the Requested NSSAI.

Here, the tracking area is an area used for mobility management, and is identified by Tracking Area Identity (TAI). The network (PLMN) manages a position of the UE 40 within a range of a set of tracking areas to which the UE 40 camps on so as to be able to transmit a message or data to the UE 40 in the RRC_IDLE state. When the UE 40 is registered in the network, the AMF 541 assigns a set of tracking areas included in a TAI list as an area (Registration Area) in which the UE 40 is registered. That is, the network manages existence of the registered UE 40 in one of the tracking areas in the TAI list.

Having detected a more optimal cell in accordance with the cell reselection criteria, the UE 40 reselects the cell and camps on the reselected cell. At this time, in a case where the selected cell does not belong to any tracking area in the TAI list in which the UE 40 is registered, a position registration procedure, that is, a process of updating the TAI list is executed.

The subscribed S-NSSAI is S-NSSAI that can be used in the PLMN by the UE 40 in accordance with Subscription Information. The Subscription Information needs to include one or more Subscribed S-NSSAI, and needs to include at least one default S-NSSAI.

The UDM 547 transmits 16 pieces of subscribed S-NSSAI at maximum to the AMF 541. Therefore, the quantity of S-NSSAI that can be included in the Configured NSSAI is 16. The Subscription Information that the UDM 547 transmits to the AMF 541 needs to include at least one default S-NSSAI. The NSSF 544 decides Allowed NSSAI, Configured NSSAI, and decides an AMF Set, which is a list of candidates of the AMF 541. For example, the AMF 541 may be selected from the list of candidates in accordance with the network slice used by the UE 40 or other standard, and the UE 40 may be assigned to the selected AMF 541.

The one or more S-NSSAI(s) included in the Allowed NSSAI provided to the UE 40 can include values that are not part of the current network slice configuration information for the UE 40 with respect to the Serving PLMN. In this case, the network provides, in accordance with the Allowed NSSAI, a mapping between the individual S-NSSAI of the Allowed NSSAI and the corresponding S-NSSAI of the HPLMN. With the information regarding the mapping, the UE 40 can associate the application with the S-NSSAI of the HPLMN and the corresponding S-NSSAI of the Allowed NSSAI for each Network Slice Selection Policy (NSSP) of the UE Route Selection Policy (URSP) rule or for each local setting of the UE 40.

For example, when an HPLMN and/or a Visitor PLMN (VPLMN) uses a non-standardized S-NSSAI value, the UE 40 needs to provide, at the time of roaming, information regarding mapping between a value of S-NSSAI included in Requested NSSAI and a corresponding value of S-NSSAI used in the HPLMN. The UE 40 may preliminarily acquire the information regarding the mapping from the Serving PLMN as a mapping between a value of S-NSSAI included in the Configured NSSAI for the Serving PLMN and a corresponding value of S-NSSAI used in the HPLMN. Alternatively, the UE 40 may preliminarily acquire the information regarding the mapping from the Serving PLMN as a mapping between the value of S-NSSAI included in the Allowed NSSAI for the Serving PLMN and the access type and the corresponding value of S-NSSAI used in the HPLMN.

In addition, the UE 40 can support a subscription-based constraint function related to network slices that can be registered simultaneously. In a case of supporting this function, the UE 40 includes information indicating that the function is supported in a registration request message at the time of Initial Registration and Mobility Registration Update as a part of a UE5 GMM Core Network Capability.

The AMF 541 provides the Configured NSSAI to the UE 40 that has notified the support of the subscription-based constraint function related to the network slice that can be registered simultaneously. At this time, the AMF 541 provides information regarding a Network Slice Simultaneous Registration Group (NSSRG) associated with a network slice (S-NSSAI(s)) of the HPLMN.

The Subscription Information including the NSRRG information needs to include at least one default S-NSSAI. When plurality of default S-NSSAI are configured, the default S-NSSAI is associated with a same NSRRG. That is, the UE 40 is allowed to simultaneously register all the default S-NSSAI.

In addition to the default S-NSSAI, the HPLMN can transmit, as the Subscription Information, other subscribed S-NSSAI sharing all NSSRGs defined at least for the default S-NSSAI to the VPLMN. At this time, the HPLMN need not transmit the NSRRG information to the VPLMN.

The UE 40 that has received the NSSRG needs to include only the network slice (S-NSSAIs) assigned to one common NSSRG in the Requested NSSAI.

Furthermore, in a case where the boundary of the service area of the network slice does not match the boundary of the tracking area, the communication apparatus can define an additional constraint on the use of the network slice in the tracking area by using the network slice available location information (S-NSSAI location availability information). For example, here is an assumable case where S-NSSAI of the Configured NSSAI is not in a state of being available in some cells in a tracking area of a Registration Area. In this case, the network slice available location information including the location information (for example, a cell ID) of the cell in which the S-NSSAI is available among the plurality of cells in the tracking area, is provided to the UE 40.

The AMF 541 may decide Target NSSAI by itself or in cooperation with the NSSF 544. Target NSSAI is information used by the RAN/AN 510 (for example, NG-RAN) to redirect the UE 40 to a cell/tracking area of another frequency band supporting S-NSSAI of target NSSAI and another tracking area. In order to redirect the UE 40, the RAN/AN 510 uses the information in addition to the information such as the Allowed NSSAI and the RAT/Frequency Selection Priority (RFSP) for the Allowed NSSAI.

The Target NSSAI includes at least one S-NSSAI among the Requested NSSAI. For example, the Target NSSAI includes at least one S-NSSAI that is not available in the current tracking area but is available in another tracking area of another frequency band or is available in an area of another frequency band overlapping the current tracking area. Furthermore, at least one S-NSSAI among the Requested NSSAI can be added as an option to the Target NSSAI. The S-NSSAI added as an option is, for example, S-NSSAI that is not available in the current tracking area but is available in the same tracking area as the tracking area in which S-NSSAI included in the target NSSAI is available.

The AMF 541 acquires a RAT/Frequency Selection Priority Index (RFSP index) suitable for Target NSSAI from the PCF 545. Subsequently, the AMF 541 includes the RFSP index in the information to be transmitted to the RAN/AN 510 (for example, NG-RAN). When the PCF 545 is not installed, the AMF 541 decides the RFSP index in accordance with a locally set rule. The RAN/AN 510 maps the RFSP index to a locally defined configuration to apply a separate radio resource management policy that takes into account the available information. That is, the RAN/AN 510 can select a setting for a radio resource management policy suitable for Target NSSAI corresponding to the RFSP index.

When the RAN/AN 510 can redirect the UE 40 to a new tracking area supporting Target NSSAI or one S-NSSAI among Target NSSAI, the RFSP index associated with the Target NSSAI is taken into consideration. Otherwise, the RFSP index of the Allowed NSSAI is taken into consideration.

In addition, by setting Partially Allowed NSSAI and/or partially rejected S-NSSAI (S-NSSAIs rejected partially in the RA) in the Registration Area, a Partial Network Slice can be provided in the Registration Area.

The S-NSSAI of Allowed NSSAI is available in all tracking areas within the Registration Area. In contrast, S-NSSAI of Partially Allowed NSSAI is available only in a tracking area corresponding to a list of tracking areas associated with the S-NSSAI.

Here is an assumable case where the UE 40 corresponds to a partial network slice in the Registration Area. In this case, the AMF 541 sets the Registration Area for the UE 40 in consideration of the support status of the S-NSSAI of the Requested NSSAI in the current tracking area and the surrounding tracking area. Using a Registration Accept message or a UE Configuration Update Command message, the AMF 541 provides Partially Allowed NSSAI or S-NSSAI partially rejected within the Registration Area, to the UE 40.

The AMF 541 provides, for each S-NSSAI of Partially Allowed NSSAI, a list of tracking areas whose S-NSSAI is supported. Alternatively, AMF 541 may reject S-NSSAI with a rejection reason indicating "partially in the RA". The AMF 541 provides, for each S-NSSAI of the S-NSSAI partially rejected within the Registration Area, a list of tracking areas whose S-NSSAI is supported or not supported.

When S-NSSAI is unavailable or is a heavy load, a Network Slice Replacement function can be used to replace the S-NSSAI with Alternative S-NSSAI.

The AMF 541 may decide to exchange S-NSSAI with Alternative S-NSSAI based on notifications from the NSSF 544, the PCF 545, or Operations, Administration and Maintenance (OAM).

For roaming, to launch network slice replacement of S-NSSAI of the HPLMN, the V-AMF 541-2 can receive a notification of network slice availability of S-NSSAI of the HPLMN from the H-NSSF 544-1 of the HPLMN via the V-NSSF 544-2 of the VPLMN.

The AMF 541 decides Alternative S-NSSAI for the UE 40 that has registered S-NSSAI based on the notification from the NSSF 544 or the PCF 545 (based on local settings when the NSSF 544 or the PCF 545 does not provide Alternative S-NSSAI).

Alternative S-NSSAI needs to be supported within the Registration Area of the UE 40. For example, here is an assumable case where the AMF 541 cannot decide Alternative S-NSSAI for the S-NSSAI because the NSSF 544 or the PCF 545 does not provide Alternative S-NSSAI. In this case, the AMF 541 may further negotiate with the PCF 545 to decide Alternative S-NSSAI.

The UE 40 notifies the network of support for the Network Slice Replacement function during the registration procedure. The PDU session associated with the S-NSSAI that needs to be replaced supports the UE 40 in the connected mode (CM-CONNECTED mode) existing in the UE context. In order to enable this, the AMF 541 provides the UE 40 with Alternative S-NSSAI for this S-NSSAI included in the Allowed NSSAI and the Configured NSSAI. In addition, the AMF 541 may provide the UE 40 with mapping information of S-NSSAI and Alternative S-NSSAI by using a UE Configuration Update message.

After transmitting the mapping information to the UE 40, the AMF 541 launches a session management context update (Nsmf_PDUSession_UpdateSMContext) service for a current PDU session associated with S-NSSAI to be replaced with Alternative S-NSSAI. The AMF 541 then indicates, to the SMF 546, an update of the PDU session necessary for transition of the PDU session to Alternative S-NSSAI.

The UE 40 establishes a connection of Non-Access Stratum (NAS) signaling via a Service Request procedure or a UE registration procedure. At this time, it is assumed that the AMF 541 has decided to replace S-NSSAI in order to support the UE 40 in the idle state (CM-IDLE state). At this time, when a PDU session associated with the S-NSSAI exists in the UE context, the AMF 541 provides mapping information of S-NSSAI and Alternative S-NSSAI to the UE 40 by using a UE Configuration Update message or a Registration Accept message.

<<4. Basic operation of communication system>>

A specific configuration example of the communication system 1 has been described above. Before describing the operation of the communication system 1 to solve the problem of the present embodiment, the basic operation of the communication system 1 will be described.

In the following description, it is assumed that the communication system 1 is 5GS (for example, 5GS illustrated in FIGS. 7 to 10) as an example. However, the communication system 1 is not limited to 5GS. The communication system 1 may be 4GS or 6GS. Needless to say, the communication system 1 may be a wireless communication system other than these.

<4-1. Session establishment procedure>

First, the session establishment procedure will be described. FIG. 11 is a diagram illustrating an example of a connection procedure in 5GS.

The UE 40 transitions to the states of RRC_IDLE and CM-IDLE in the course of communication (step S101). The UE 40 in the RRC_IDLE and CM-IDLE states executes Cell Reselection (step S102), and camps on an appropriate cell that satisfies predetermined criteria.

The UE 40 decides the use of the S-NSSAI corresponding to the application to be used from among the Allowed NSSAI (step S103). Subsequently, the UE 40 transmits an RRC Setup Request message toward the RAN/AN 510 of the base station that manages the cell under camp-on (step S104).

Having received the message, the RAN/AN 510 transmits an RRC Setup message to the UE 40 (step S105). The UE 40 transitions to the state of RRC_CONNECTED and CM-IDLE (step S106), and returns an RRC Setup Complete message to the RAN/AN 510 (step S107). This completes the RRC setup procedure.

Next, the UE 40 transmits a PDU SESSION ESTABLISHMENT REQUEST message which is a NAS message to the AMF 541 (step S108). With this operation, the PDU session establishment procedure via the RAN/AN 510 and the UPF 520 is executed between the UE 40 and the DN 530 (step S109).

The UE 40 transitions to the RRC_CONNECTED and CM-CONNECTED states (step S110). Note that the PDU SESSION ESTABLISHMENT REQUEST message can include S-NSSAI selected by the UE 40.

The AMF 541 transmits an INITIAL CONTEXT SETUP REQUEST message to the RAN/AN 510 (step S111). The INITIAL CONTEXT SETUP REQUEST message may include at least one of a PDU session context, a security key, a UE radio capability, and a UE security capability. In addition, the INITIAL CONTEXT SETUP REQUEST message may include Allowed NSSAI. In addition, the INITIAL CONTEXT SETUP REQUEST message may further include S-NSSAI for each PDU session.

The RAN/AN 510 configures the UE context of the UE 40 and transmits a SecurityModeCommand message to the UE 40 (step S112). The SecurityModeCommand message includes an Integrity Algorithm selected by the RAN/AN 510.

By verifying the integrity of the received SecurityModeCommand message, the UE 40 confirms the validity of the message, and returns a SecurityModeComplete message to the RAN/AN 510 (step S113).

The RAN/AN 510 transmits an RRCReconfiguration message to the UE 40 in order to configure a Signaling Radio Bearer (SRB) 2 and a data radio bearer (DRB) (step S114). Having received this message, the UE 40 returns an RRCReconfigurationComplete message to the RAN/AN 510 (step S115). This establishes the SRB 2 and the DRB between the UE 40 and the RAN/AN 510.

The RAN/AN 510 transmits an INITIAL CONTEXT SETUP REQUEST RESPONSE message to the AMF 541 to notify that the UE context setup procedure is completed (step S116).

FIGS. 12A and 12B are diagrams illustrating an example of PDU session establishment procedure. Specifically, FIGS. 12A and 12B are diagrams illustrating an example of the PDU session establishment procedure in step S109 of FIG. 11 launched by the PDU SESSION ESTABLISHMENT REQUEST message.

Having received the PDU session establishment request message from the UE 40 (step S108 illustrated in FIGS. 11 and 12A), the AMF 541 executes SMF Selection (step S201 illustrated in FIG. 12A).

The AMF 541 transmits an Nsmf_PDUSession_Create_SMContext Request message toward the selected SMF 546 (step S202). The Nsmf_PDUSession_Create_SMContext Request message includes a Subscription Permanent Identifier (SUPI), S-NSSAI, and a UE Requested DNN or DNN.

When the session management subscription information (Session Management Subscription Data) corresponding to the SUPI, the S-NSSAI, and the DNN is not available, the SMF 546 acquires the session management subscription information from the UDM 547 by using a Nudm_SDM_Get message. In addition, the SMF 546 makes a registration in the UDM 547 using the Nudm_SDM_Subscribe message in order to be notified at the time of update of the session management subscription information.

Having received the Nsmf_PDUSession_Create_SMContext Request message, the SMF 546 generates an SM context when the message can be handled. The SMF 546 returns an Nsmf_PDUSession_Create_SMContext Response message including the SM context ID to the AMF 541 (step S203).

In a case where second authentication and authorization processing by a DN-AAA server needs to be executed during the PDU session establishment procedure, the SMF 546 launches PDU Session Authentication/Authorization (step S204).

When Dynamic Policy and Charging Control (PCC) is applied to the PDU session to be established, the SMF 546 executes PCF Selection (step S205). Alternatively, the SMF 546 may apply a local policy.

The SMF 546 may also execute an SM Policy Association Establishment Procedure to establish an SM Policy Association with the PCF 545 and to acquire a default PCC rule for the PDU session (step S206). With this configuration, the PCC rule can be acquired before selecting the UPF 520.

The SMF 546 executes UPF Selection in accordance with a preset rule or the PCC rule acquired in the above-described step S206 (step S207). With this configuration, the SMF 546 selects one or more UPFs 520. The SMF 546 transmits an N4 Session Establishment Request message to the selected UPF 520 (step S208).

Setup of an N4 rule for controlling uplink and downlink traffic in the UPF 520 is performed via the N4 Session Establishment Request message. The N4 rule is information regarding, for example, Packet Detection Rule (PDR), Forwarding Action Rule (FAR), QoS Enforcement Rule (QER), Usage Reporting Rule (URR), Buffering Action Rule (BAR), etc.

The PDR includes information necessary for classifying a packet in the UPF 520. The FAR includes information regarding a handling method for a specific packet, for example, forward, duplication, drop, buffer, or the like. QER includes information regarding an indication of QoS applied to traffic. The URR includes information necessary for traffic measurement and reporting. The BAR includes a duration and an amount of data buffering, and information regarding a notification method in the control plane.

In addition, the SMF 546 may transmit the above-described QoS monitoring request to the UPF 520 via an N4 Session Establishment Request message.

The SMF 546 may also transmit, to the UPF 520, a request for detection of the last PDU of each data burst for a TSC QoS flow in accordance with PCC rules and/or local policies. At this time, the SMF 546 may transmit the request via an N4 Session Establishment Request message. Note that details of the data burst will be described below.

Having received the request for detection of the last PDU, the UPF 520 detects the last PDU of each data burst and marks "End of Data burst" in the GTP-U header of the last PDU in the downlink.

Having received the N4 Session Establishment Request, the UPF 520 returns an N4 Session Establishment Response message to the SMF 546 (step S209). Note that, in step S207 described above, in a case where a plurality of UPFs 520 is selected for the PDU session, the N4 session establishment procedure is launched for each UPF 520.

The SMF 546 transmits a Namf_Communication_N1N2MessageTransfer message to the AMF 541 (step S210). The Namf_Communication_N1N2MessageTransfer message may include at least one of a PDU session ID, N2SM Information, CN tunnel information (CN Tunnel Info), S-NSSAI, and an N1SM container (N1 SM Container).

The N2SM information may include at least one of a PDU session ID, a QFI, and a QoS profile.

When plurality of UPFs 520 are used for the PDU session, the CN Tunnel Information includes tunnel information associated with these plurality of UPFs 520 terminating N3.

The N1SM Container includes a PDU Session Establishment Accept and a QoS rule that the AMF 541 needs to provide to the UE 40. The PDU Session Establishment Accept includes S-NSSAI.

The Namf_Communication_N1N2MessageTransfer message includes PDU session ID to clarify which access is to be used by the AMF 541 toward the UE 40.

Moving to FIG. 12B, the AMF 541 transmits an N2 PDU Session Request message to the RAN/AN 510 (step S211). The N2 PDU Session Request message includes a PDU session ID with the UE 40 as a destination, a NAS message including an N1SM Container, and N2SM information received from the SMF 546.

The RAN/AN 510 acquires the PDU session ID, the QFI, the QoS profile, etc. from the N2SM information included in the N2 PDU Session Request message. In addition, the RAN/AN 510 forwards the NAS message included in the N2 PDU Session Request message to the UE 40 (step S212). As described above, the NAS message includes the PDU session ID and the N1SM Container, and the N1SM container includes the PDU Session Establishment Accept and the QoS rule.

In addition, the RAN/AN 510 assigns AN tunnel information (AN Tunnel Info) to the PDU session. Here, the AN tunnel information includes a tunnel endpoint of each involved RAN/AN node and QFIs assigned to each tunnel endpoint. The RAN/AN 510 updates the N2SM information to notify the SMF 546. Here, the N2SM information may include at least one of a PDU session ID, AN tunnel information, a list of permitted or rejected QFI(s), and User Plane Enforcement Policy Notification.

The RAN/AN 510 returns an N2 PDU Session Response message including N2SM information to the AMF 541 (step S213).

The AMF 541 acquires N2SM information via the N2 PDU Session Response received from the RAN/AN 510. Subsequently, the AMF 541 forwards the Nsmf_PDUSession_UpdateSMContext Request message including the SM context ID and the acquired N2SM information to the SMF 546 (step S214).

The SMF 546 launches an N4 Session Modification Procedure with the UPF 520. Subsequently, the SMF 546 transmits an N4 Session Modification Request message to the UPF 520 (step S215). The SMF 546 provides the UPF 520 with the AN tunnel information in addition to the forwarding rule.

In addition, the SMF 546 may transmit the above-described QoS monitoring request to the UPF 520 via an N4 Session Modification request message.

The UPF 520 returns an N4 Session Modification Response message to the SMF 546 (step S216). Note that, when the UPF 520 is used in plurality in the PDU session, the above-described Session Modification procedure is performed on all the UPFs 520 that terminate N3.

With the above procedures, the PDU session establishment procedure illustrated in step S109 of FIG. 11 is completed.

<4-2. Association between AF request and PCF>

Next, association between the AF request and the PCF will be described.

The AF 548 can make a request related to routing of traffic from the application server 10 or traffic to the application server 10 to the 5GS by using an Application Function Request (AF request).

For example, the 5GS can consider the AF request in selecting/reselecting the UPF 520 and the SMF 546. The AF request is transmitted to the PCF 545 via the NEF 542. However, if AF 548 has direct access to PCF 545, the AF request is transmitted to PCF 545 via a reference point N5 defined between AF 548 and PCF 545. PCF 545 translates the received AF request into policies/rules applied to the PDU session.

The AF request needs to include a Traffic Description, a Target UE Identifier(s), and an AF Transaction Identifier, which are mandatory.

The Traffic Description is information for identifying traffic. The Traffic Description includes a set of Data Network Name (DNN) and S-NSSAI, and an Application Identifier or Traffic Filtering Information.

The DNN corresponds to an Access Point Name (APN) used in a system of 4G or earlier. The S-NSSAI is information (Network Slice Selection Assistance Information) for assisting selection of a network slice.

The Application Identifier is information for identifying an application that handles user plane traffic. The Application Identifier is used by the UPF 520 to identify traffic of the application. The Traffic Filtering Information is information for classifying traffic. The Traffic Filtering Information is a 5-Tuple having components of a source IP, a source port number, a destination IP, a destination port number, and a protocol number, for example

Furthermore, the AF request can include information regarding the location of a potential application depending on conditions. Here, the information regarding the location of the potential application is provided as a list including a Data Network Access Identifier (DNAI) for identifying user plane access to one or more DNs 530 that are candidates for implementation of the application.

Furthermore, the AF request may include, as an option, at least one piece of the following information:

· Spatial Validity Condition
· N6 Traffic Routing requirements
· Application Relocation Possibility
· UE IP address preservation indication
Temporary Validity Condition
Information related to AF subscription for SMF events
· Information for IP Replacement OF Edge Application Server (EAS) in core network CN
User Plane Latency Requirement
Information related to AF change
Indication for Edge Application Server Relocation (EAS Relocation)

Spatial Validity Condition is provided in the form of a valid area. In a case where the AF request is a request related to a decision of traffic routing in the SMF 546, the Spatial Validity Condition indicates that the routing is applied only to traffic of the UE 40 located in a specific location. In a case where the AF request is a request for registering a notification of an event of path management of the user plane, Spatial Validity Condition indicates that the notification is applied only to traffic of the UE 40 located at a specific location.

The information related to the N6 Traffic Routing requirements is information provided for each DNAI. The information related to the N6 Traffic Routing requirements can include a routing profile ID and N6 traffic routing information. Here, N6 is a reference point between the UPF 520 and the DN 530. The routing profile ID is identification information for referring to a policy related to routing having pre-consent between the AF 548 and the core network CN. The N6 traffic routing information includes information necessary for forwarding traffic to the DNAI.

The Application Relocation Possibility is information indicating whether the application can be relocated after the location of the application is selected by the core network CN.

The UE IP address preservation indication represents that the IP address of the UE 40 related to the traffic identified by the Traffic Description needs to be maintained. Having received this indication from AF 548, the core network CN maintains the IP address of UE 40 by avoiding reselection of UPF 520 after UPF 520 is selected.

The Temporary Validity Condition is provided in a format indicating a time interval or duration during which the AF request is applied. In a case where the AF request is a request related to decision of traffic routing in the SMF 546, the Temporary Validity Condition indicates when the routing is applied. In a case where the AF request is a request for registering a notification of an event of path management of the user plane, the Temporary Validity Condition indicates when the notification occurs.

An AF request that includes information associated with AF subscription to an SMF event is a request to register a notification of a change in a user plane path associated with traffic identified by the Traffic Description. This request includes a type of subscription, and a Notification Target Address for receiving an event notification, etc. When the type of subscription is Early Notification, the SMF 546 transmits a notification of path change before a new user plane path is configured. When the type of subscription is Late Notification, the SMF 546 transmits a notification of path change after a new user plane path is configured.

The information for IP replacement of the Edge Application Server is information indicating an identifier of a source Edge Application Server and an identifier of a target Edge Application Server for a service by edge computing. The identifier herein is, for example, IP addresses and port numbers of the Edge Application Servers of the source and the target.

The User Plane Latency Requirement is a latency in the user plane taken into consideration when the target Edge Application Server is relocated. The AF 548 can request the User Plane Latency Requirement to the core network CN via the AF request. This allows the SMF 546 to decide relocation of the PSA-UPF 520 based on the AF request in a network deployment in which an estimate of the delay in the user plane between the UE 40 and the candidate PSA-UPF 520 is known to the SMF 546.

The information related to the AF change is information related to the relocation of the AF 548. This information includes an AF ID which is information identifying the target AF 548 of the change destination. The indication for relocating the Edge Application Server is an indication of relocating the application.

When the PCF 545 is distributed in plurality under address management, a Network Function (for example, AF 548) that transmits a policy on traffic identified by an address of the UE 40 needs to access, via a reference point N5, the PCF 545 that holds information on a corresponding PDU session.

Accordingly, AF 548 may own at least one of the following information items (or information related to at least one of the following information items) for the corresponding PDU session:

· user identifier (user identity)
· DNN
· IP address or MAC address of the UE
· S-NSSAI
· Address of the selected PCF 545

For a PDU session in IP format, when an IP address is assigned to or released from the PDU session, AF 548 receives the corresponding information.

In an Ethernet format PDU session that supports association of AF requests based on MAC addresses, when a MAC address used by UE 40 in the PDU session is detected, AF 548 needs to receive the corresponding information. The detection of the MAC address is performed by the UPF 520 under the control of the SMF 546. In addition, when supporting TSC and time synchronization, the AF 548 receives a MAC address of a Device-Side Time Sensitive Networking (TSN) translator (DS-TT) port.

In addition, a Binding Support Function (BSF) 552 may be used for associating the AF request with the PCF 545.

The BSF 552 internally holds information related to the corresponding selected PCF 545.

The BSF 552 may internally hold at least one of the following information items (or information related to at least one of the following information items) for the corresponding PDU session:

· User identifier

· DNN

· IP address or MAC address of the UE

· S-NSSAI

· Address of the selected PCF 545

Furthermore, if available, the BSF 552 may internally hold at least one of the following information items (or information related to at least one of the following information items) for the corresponding PDU session:

· Identifier (ID) of the associated PCF instance
· PCF set identifier
· Level of association

The BSF 552 may internally hold at least one of the following information items (or information related to at least one of the following information items) for the corresponding UE 40:

· User identifier

· Address of the selected PCF 545

Furthermore, if available, the BSF 552 may internally hold at least one of the following information items (or information related to at least one of the following information items) for the corresponding UE 40:

· Identifier of the associated PCF instance

· PCF set identifier
· Level of association

Using the Nbsf management (Nbsf_Management) service, the PCF 545 registers, updates, or deletes the held information.
The PCF 545 updates the corresponding information for the corresponding PDU session each time an IP address is assigned or released.
Alternatively, for a PDU session of an Ethernet format that supports association of the AF request based on the MAC address, the PCF 545 updates the corresponding information each time a MAC address used by the UE 40 in the PDU session is detected, or each time it is detected that the UE 40 will not use the MAC address in the future.
Each time the AMF 541 selects a new PCF 545, the PCF 545 updates the corresponding information of the corresponding UE 40.
The AF request for an individual UE 40 by the address of the UE 40 is forwarded by the AF 548 or the NEF 542 to the PCF 545 specified using the BSF 552.
In addition, the AF request for the group of UEs 40 or the AF request for the UE 40 described below needs to be transmitted through the NEF 542.

· All UEs 40 having access to set of DNN and S-NSSAI
· UE 40 classified by one or more Generic Public Subscription Identifiers (GPSIs)
· UE 40 having an External Subscriber Category being a set of external group IDs

The NEF 542 holds the AF request information in the UDR of the UDM 547. When registered in the AF request information generation, update, or deletion service corresponding to UDR Data Keys/Data Sub-Keys, PCF 545 receives the corresponding notification.
When the AF 548 exchanges information with the PCF 545 via the NEF 542, the NEF 542 executes mapping as described below.
NEF 542 maps the AF-Service-Identifier to a set of DNN and S-NSSAI.
The NEF 542 maps the AF-Service-Identifier to a list of Data Network Access Identifier (DNAI) and routing profile IDs decided in a local configuration. The NEF 542 can provide this mapping only when the DNAI used by the application is statically defined. When the DNAI obtained by instantiating the application dynamically changes, AF 548 provides the AF request with the DNAI of interest along with either the routing profile ID or the N6 traffic routing information.
Here, the DNAI is identification information for identifying user plane access to the DN 530. The routing profile ID is identification information for referring to a policy related to routing having pre-consent between the AF 548 and the core network CN. The N6 traffic routing information includes information necessary for forwarding traffic to the DNAI.
The NEF 542 maps the GPSI included in the Target UE Identifier to the SUPI in accordance with the information received from the UDM 547.
The NEF 542 maps the External Group ID included in the Target UE Identifier to internal Group ID in accordance with the information received from the UDM 547.
The NEF 542 maps the External Subscriber Category and the UE 40, and the External Subscriber Category and External Group ID into internal group ID (Internal Group ID) or internal group ID and a Subscriber Category.
The NEF 542 maps a geographical region included in a Spatial Validity Condition to a valid region decided by a local setting.
FIG. 13 is a diagram illustrating an example of a procedure for reflecting an AF request in session routing.
The PCF 545 transmits a Nudr_DM_Subscribe message to the UDR in order to register the AF request change service of the UDR (step S301). Here, the Data Set is Application Data. The Data Subset is AF traffic influence request information. The Data Key is at least one of S-NSSAI, DNN, and Internal Group ID. The Data Key may be SUPI.
The AF 548 generates a new AF request (step S302). Subsequently, the AF 548 launches the Nnef_TrafficInfluence_Create service for the NEF 542. Alternatively, in order to change or delete the existing AF request, the AF 548 launches a Nnef_TrafficInfluence_Update service or a Nnef_TrafficInfluence_Delete service for the NEF 542 (step S303).
When the Nnef_TrafficInfluence_Create service or the Nnef_TrafficInfluence_Update service has been launched, the NEF 542 holds the AF request information in the UDR. When the Nnef_TrafficInfluence_Delete service has been launched, the NEF 542 deletes the AF request information from the UDR (step S304).
The NEF 542 responds to a request for the Nnef_TrafficInfluence_Create service, the Nnef_TrafficInfluence_Update service, or the Nnef_TrafficInfluence_Delete service from the AF 548 (step S305).
The PCF 545 registered in the AF request change service of the UDR receives, from the UDR, a notification of data change related to the AF request information (step S306).
The PCF 545 decides whether the current PDU session is to be influenced by the AF request. Subsequently, the PCF 545 launches the Npcf_SMPolicyControl_UpdateNotify service for each of the PDU sessions. Subsequently, the PCF 545 updates the SMF 546 with the information on the new policy corresponding to the PDU session (step S307).

Having received the updated policy information related to the PDU session from the PCF 545, the SMF 546 reconfigures the user plane of the PDU session in accordance with the updated policy information (step S308).

In addition, having received the updated policy information related to the PDU session from the PCF 545, the SMF 546 may perform procedures necessary for supporting discovery and re-discovery of the Edge Application Server (EAS) for the PDU session having a Session Breakout connection form.

Furthermore, in the case of N6-LAN Traffic Steering Control, the SMF 546 provides the UPF 520 with N6 traffic steering parameters.

The SMF 546 decides whether target DNAI information or common DNAI information needs to be transmitted to the AMF 541 in order to launch SMF/Intermediate SMF (I-SMF) reselection. Subsequently, the SMF 546 notifies the AMF 541 of the target DNAI information or the common DNAI information for the current PDU session or the next PDU session via the Nsmf_PDUSession_SMContextStatusNotify service (step S309).

FIG. 14 is a diagram illustrating an example of a procedure for reflecting an AF request targeted at the individual UE 40 in a policy.

The AF 548 transmits a Nnef_TrafficInfluence_Create/Update/Delete request message to the NEF 542 for the address of the individual UE 40 (step S401). The request message is a request message corresponding to an AF request for reflecting routing of traffic to a local network or Service Function Chaining (SFC).

Here, the Service Function Chaining is a chain of service functions constructed so that procedures by a Network Function can be executed in an appropriate order on a packet to be forwarded. The Network Functions can provide one or more Service Functions.

A network operator defines a policy for Service Function Chaining to forward traffic related to a certain application. The network operator can modify its policy to improve the Quality of Experience (QoE) of the user.

The Service Function for the 5G network includes, for example, a function of a firewall, Network Address Translation (NAT), an antivirus, parental control, Distributed Denial of Service (DDoS) protection, TCP proxy, a load balancer, KPI monitoring, and Edge Hosting Environment (EHE), etc.

The network operator can generate, modify, or delete one Service Function based on the Service Function Chaining policy. In addition, the network operator can generate, configure, or control a series of Service Functions including a plurality of Service Functions for each application and/or for each user based on a policy of the network operator or a request from a third party.

When the address of the PCF 545 is not available, the NEF 542 requests the BSF 552 to use the Nbsf_Management_Discovery service to discover the address of the associated PCF 545 (step S402). When the address of the PCF 545 is available, step S402 is skipped.

The NEF 542 receives the Nbsf_Management_Discovery response message including the address of the PCF 545 from the BSF 552 as a response to the Nbsf_Management_Discovery request message (step S403).

NEF 542 launches the Npcf_PolicyAuthorization service to reflect AF requests from AF 548 in policies. Subsequently, the NEF 542 transmits an Npcf_PolicyAuthorization_Create/Update/Delete message to the PCF 545 (step S404).

The PCF 545 determines whether to permit the AF request. When permitting the request, the PCF 545 launches the PCF initiated SM Policy Association Modification procedure. Subsequently, the PCF 545 updates the SMF 546 with the corresponding new PCC rule (step S405). When the PCF 545 does not permit the request, the AF request is rejected.

Having received the policy information from the PCF 545, the SMF 546 reconfigures the user plane of the PDU session in accordance with the received policy information.

By the above procedure, the AF request from the AF 548 can be reflected in the policy managed by the PCF 545 and the user plane handling of the PDU session managed by the SMF 546.

Note that the service, provided by the NEF 542, to reflect the AF request in the policy managed by the PCF 545 and in user plane handling of the PDU session managed by the SMF 546, is not limited to the Nnef_TrafficInfluence service. For example, AF 548 can use the Nnef_AF_request_for_QoS service to request the 5GS to provide a specific QoS for traffic flows for the UE 40 or a group of the UEs 40. This service can be used, for example, to support registration and notification of QoS monitoring for packet delay monitoring.

In addition, the AF 548 can use the Nnef_AfsessionWithQoS service to request QoS in a session for a specific UE 40. This service can be used to support registration and notification of QoS monitoring to achieve monitoring of packet delay, congestion information, data rates, and packet delay variations, for example. Furthermore, this service can be used to support registration and notification of a BAT offset described below so that the AF 548 can adjust burst transmission time from the XR server 60 based on feedback from the RAN/AN 510.

The service provided by the NEF 542 exemplified herein is an example, and the service for reflecting the AF request in the policy managed by the PCF 545 and the user plane handling of the PDU session managed by the SMF 546 may be other services.

<4-3. TSC Assistance Information>

Next, Time Sensitive Communication (TSC) Assistance Information will be described.

The TSCTSF 551 decides a TSC Assistance Container based on the traffic patterns provided from the AF 548 and provides the TSC Assistance Container to the PCF 545. Having received the TSC Assistance Container from the TSCTSF 551, the PCF 545 forwards the TSC Assistance Container to the SMF 546 as part of the PCC rule. The forwarding of the PCC rule including the TSC Assistance Container to the SMF 546 is performed in step S206 illustrated in FIG. 12A.

The SMF 546 associates a Policy and Charging Control (PCC) rule including the TSC Assistance Container with the QoS flow. The SMF 546 uses a TSC Assistance Container to derive TSC Assistance Information for the QoS flow. The SMF 546 transmits the derived TSC Assistance Information to the RAN/AN 510.

In accordance with the 5G clock, the SMF 546 defines Periodicity, Periodicity Range, a Burst Arrival Time (BAT), a BAT Window, and Survival Time, which are components of the TSC Assistance Information.

The Periodicity is a time interval between two Data Burst. Here, the Data Burst includes a plurality of PDUs generated and transmitted by the application in a short duration. For example, one or more PDU sets can be set or assigned to the plurality of PDUs constituting the data burst.

The Periodicity Range indicates a lower limit and an upper limit of the periodicity as an acceptable Periodicity Range. AF 548 can adjust the periodicity within this range.

The Burst Arrival Time is defined as the latest possible time at which the first packet of a downlink data burst (Data Burst) arrives at an input terminal of the RAN/AN 510 or the first packet of an uplink data burst arrives at an output terminal of the UE 40. For example, a time obtained by adding the CN PDB to the Burst Arrival Time set at the input terminal of the UPF 520 can be set as the downlink Burst Arrival Time.

The BAT window indicates an acceptable earliest arrival time and an acceptable latest arrival time of the first packet of the data burst.

The Survival Time indicates a duration during which an application can continue operation without receiving a data burst. The Survival Time is set in either the maximum number of messages equivalent to all packets in the data burst or a unit of time. When only one data burst is assumed in a single duration, the Survival Time corresponds to a periodicity. In addition, the PCF 545 may set the PDU Set Delay Budget based on the Survival Time.

Furthermore, the TSCTSF 551 can designate the flow direction (for example, uplink or downlink) of the TSC flow with the TSC Assistance Container and the TSC Assistance Information. The TSC flow is also referred to as a TSC QoS flow.

When the traffic pattern provided from AF 548 is updated, TSCTSF 551 updates the TSC Assistance Container. When the TSC Assistance Container is updated, the PCF 545 forwards the PCC rules including the updated TSC Assistance Container to the SMF 546. The SMF 546 updates the TSC Assistance Information based on the updated TSC Assistance Container. The updated TSC Assistance Information is transmitted to the RAN/AN 510.

When receiving, for a QoS flow, TSC Assistance Information including a BAT window or the capability of adaptive control of Burst Arrival Time (Capability for BAT adaptation), the RAN/AN 510 can decide a BAT offset to match the arrival of a data burst to the next scheduled transmission opportunity.

When receiving, for a QoS flow, TSC Assistance Information including a Periodicity Range, the RAN/AN 510 can decide a periodicity to be adjusted, along with the BAT offset specified above, to match the periodicity of the data burst to an expected time interval between subsequent transmission opportunities.

For adaptive control of the BAT and the periodicity, the BAT offset and the adjusted periodicity are sent as feedback to the SMF 546 as part of the QoS flow establishment or modification procedure.

<4-4. MPL, PRPL, and RPL in XR architecture>

Next, Motion to Photon Latency (MPL), Render to Photon Latency (RPL), and Pose to Render to Photon Latency (PRPL) in the XR architecture will be described.

In accordance with the architecture of FIG. 8, the sum of the processing time when not taking the function of the Timewarp in the XR display region rendering unit 76 into consideration can be estimated as follows.

First, the 3DOF/6DOF tracking and XR sensor unit 71 detects the user's pose information in the processing duration $PT_{Sense}$.

The 5GS delivery unit 73 transmits the tracking and sensor information detected by the XR device 70 to the 5GS delivery unit 66 within the duration of $PDB_{UL}$ using the uplink QoS flow via the RAN/AN 510. Here, the tracking and sensor information is information including, for example, pose information and/or inertial information.

The XR media generation unit 61, the XR display region pre-rendering unit 62, the 2D/3D media encoding unit 63, and the XR rendering metadata processing unit 64 generate the XR media content to be transmitted to the XR device 70 at the processing time $PT_{Server}$.

The 5GS delivery unit 66 transmits the XR media content delivered by the XR media content delivery unit 65 to the 5GS delivery unit 73 within the duration of $PDB_{DL}$ using the downlink QoS flow via the RAN/AN 510.

The 2D/3D media decoding unit 74, the XR rendering metadata processing unit 75, and the XR display region rendering unit 76 display the XR media on the display unit 77 at the processing time $PT_{Display}$.

That is, time required from the start of the detection of the movement of the XR device 70 by the 3DOF/6DOF tracking and XR sensor unit 71 to the display of the XR media on the display unit 77 is time T represented by the following Formula (1).

$$T = PT_{Sense} + PDB_{UL} + PT_{Server} + PDB_{DL} + PT_{Display} \quad (1)$$

According to 3GPP TR26.928 "Extended Reality (XR) in 5G", Motion to Photon Latency (MPL) of 20 ms or less is required as Quality-of-Experience (QoE) for XR. For example, in data prepared as a TSC QoS flow for motion tracking data, the PDB is 5 ms at 5QI: 87 and the PDB is 10 ms at 5QI: 88. In data which is prepared as TSC QoS flows for moving image content for cloud, edge server, or split rendering, the PDB is 15 ms at 5QI: 89, and the PDB is 20 ms at 5QI: 90. It can be seen that it is difficult to satisfy the MPL of 20 ms or less even when these PDBs are substituted into the above-described Formula (1).

Therefore, the sum of the processing times in a case where the function of Timewarp in the XR display region rendering unit 76 is considered can be estimated as follows.

FIG. 15 is a diagram illustrating an example of a timing chart related to each procedure in Generalized XR Split Rendering.

The tracking and sensor information #1 detected by the 3DOF/6DOF tracking and XR sensor unit 71 is transmitted to the 5GS delivery unit 66 within the duration of $PDB_{UL}$#1.

The XR server 60 generates XR media content #1 within a duration of processing time $PT_{Server}$#1. The XR media content #1 is transmitted to the 5GS delivery unit 73 within the duration of $PDB_{DL}$#1.

The XR display region rendering unit 76 generates the XR media #1 by executing a Timewarp procedure using the latest tracking and sensor information #2 detected by the 3DOF/6DOF tracking and XR sensor unit 71 in a rendering procedure for the received XR media content #1.

The display unit 77 displays the XR media #1 generated by the XR display region rendering unit 76 at frame timing #1. The frame periodicity is, for example, 16.7 ms when the frame periodicity is 60 fps.

Here, the XR media content #1 displayed at the frame timing #1 has a second display region based on the tracking and sensor information #2 instead of the first display region based on the tracking and sensor information #1. Therefore, the starting point of the MPL will be the tracking and sensor information #2, instead of the tracking and sensor information #1. This makes it possible to reduce the MPL.

However, XR media content #1 needs to be data including not only the first display region based on tracking and sensor information #1 but also the second display region based on tracking and sensor information #2. Otherwise, the display image cannot be corrected only with the coordinate transformation by the Timewarp. That is, the effect of the Timewarp cannot be applied to the XR media content based on older tracking and sensor information.

Therefore, in 3GPP TR26.928 "Extended Reality (XR) in 5G" requires a Render to Photon Latency (RPL) of 50 ms or less as QoE for XR. The RPL is based on a requirement for Interaction Delay, which is a delay caused by interaction, and/or a requirement for Age of Content, which is a valid duration of content. The RPL also depends on the application. For example, an assumed Interaction Delay includes 50 ms, 100 ms, 200 ms, or 200 ms or more depending on the application.

In the processing in the architecture illustrated in FIG. 8, Pose to Render to Photon Latency (PRPL) can be regarded as a time from when tracking and sensor information is detected until the XR device 70 displays the XR media content generated by the XR server 60 based on the tracking and sensor information, on the display unit 77 without performing Timewarp. For example, the PRPL can be regarded as a time from when the 3DOF/6DOF tracking and XR sensor unit 71 of the XR device 70 has detected the tracking and sensor information to when the XR media content generated by the XR server 60 based on the tracking and sensor information is displayed on the display unit 77 by the XR device 70 without Timewarp. For example, PRPL is a time calculated by the above-described Formula (1).

In addition, RPL can be regarded as a time from when XR server 60 starts generating XR media content (or after the XR server 60 acquires the tracking and sensor information,) until XR device 70 displays the XR media content received from XR server 60 on display unit 77 without performing Timewarp.

For example, in a case of Viewport-independent delivery, a requirement value of the RPL may be set as latency requirement information related to reflection of the operation of the user on the moving image content. Furthermore, in the case of the Viewport-dependent delivery, a PRPL requirement value may be set as the latency requirement information related to the reflection of the operation of the user on the moving image content.

Furthermore, in a game application, the 3DOF/6DOF tracking and XR sensor unit 71 may be a game controller for inputting an operation. In this case, the PRPL may be the Click to Photon Latency.

Similarly, tracking and sensor information #2 and tracking and sensor information #3 detected by 3DOF/6DOF tracking and XR sensor unit 71 are transmitted to XR server 60, XR media content #2 and XR media content #3 are generated by XR server 60, and XR media #2 and XR media #3 are displayed on the display unit 77 at individual timings of frame timing #2 and frame timing #3.

<<5. Operation of communication system>>

Based on the above, the operation of the communication system 1 will be described.

Note that, in the following description, XR media is assumed to be XR moving image content. The XR moving image content is, for example, an XR moving image such as a VR moving image. Note that the XR moving image content is not limited to the XR moving image. The XR moving image content may be an XR game such as a VR game. In addition, the XR moving image content may be a moving image content generated by performing computational operation on or processing 3D data (for example, 3D spatial data and/or 3D object data) based on viewpoint data of the user.

<5-1. Outline of XR media delivery procedure>

There is a demand for obtaining a realistic feeling from XR media. Therefore, an information processing apparatus (for example, the server 10/the terminal apparatus 40) that handles XR media is expected to handle moving image information with higher resolution.

However, the high-resolution moving image information has a large data amount. Therefore, in a case where the server 10 (the XR server 60 in the example of FIG. 8) handles XR media, there is a concern of an increase in processing time (the processing time in the XR media generation unit 61 and the XR display region pre-rendering unit 62 in the example of FIG. 8 ) related to generation of XR media. Furthermore, in order for the server 10 to transmit data related to XR media in a TSC QoS flow (for example, 5QI: 89 or 5QI: 90) for moving image content for cloud, edge server, or split rendering, there is a need to compress the data related to XR media (for example, 2D/3D media related to XR media content) at a higher compression rate. There is also a concern of an increased in the processing time (the processing time in the 2D/3D media encoding unit 63 in the example of FIG. 8) related to encoding. In addition, it is also conceivable that, in the future, a 5QI having a larger Maximum Data Burst Volume is newly defined. In this case, from the relationship between 5QI: 89 and 5QI: 90, it is assumed that the PDB will increase for the larger Maximum Data Burst Volume.

On the other hand, the XR media is required to reflect the user's operation on the XR media. In order for the user to enjoy the XR media without feeling uncomfortable (for example, in order for the user to enjoy the VR moving image without VR motion sickness), it is desirable that the operation of the user is quickly reflected in the XR media. In the present embodiment, the server 10 delivers data (for example, XR media content) related to XR media via a wireless network. Therefore, in order to quickly reflect the user's operation on the XR media, it is necessary to realize stable low latency wireless transmission. However, it is difficult to implement stable low latency wireless transmission under a dynamically changing wireless environment. In this case, the user cannot enjoy the XR media without feeling uncomfortable.

Therefore, the communication system 1 according to the present embodiment can provide a high-quality communication service related to XR to the user (for example, providing XR moving image content that stably follows user's movement) by executing the following procedures.

First, the server 10 of the present embodiment specifies latency requirement information related to reflection of a user's operation on XR media. For example, the server 10 specifies, as the latency requirement information, an appropriate Pose to Render to Photon Latency (PRPL) requirement value or an appropriate Render to Photon Latency (RPL) requirement value in accordance with the XR application. At this time, the server 10 may specify a requirement value selected in accordance with the XR application from among a plurality of requirement values of the PRPL or the RPL as the latency requirement information.

Subsequently, the server 10 acquires acceptability information related to the transmission delay of the QoS flow assigned to the session established for the XR application. At this time, the acceptability information (hereinafter, simply referred to as acceptability information) related to the transmission delay may include a Packet Delay Budget (PDB) of a QoS flow assigned to a session established for the XR application. For example, the acceptability information may include at least one of a PDB (hereinafter, referred to as a first PDB) of the uplink QoS flow assigned to the session established for the XR application and a PDB (hereinafter, referred to as a second PDB) of the downlink QoS flow assigned to the session established for the XR application.

Subsequently, the server 10 makes a decision related to generation of data (for example, 2D/3D media related to XR media content) to be delivered to the terminal apparatus 40 (the XR device 70 in the example of FIG. 8) based on the latency requirement information and the acceptability information. For example, the server 10 makes a decision related to generation of data related to XR media based on the latency requirement information and the PDB (at least one of the first PDB and the second PDB). At this time, the decision related to the generation of the data related to the XR media may be a decision related to at least one of the resolution and the codec of the XR media (for example, 2D/3D media related to XR media content).

Subsequently, the server 10 generates data (for example, XR media content) related to the XR media in accordance with the decided information (for example, information of at least one of resolution and codec). Subsequently, the server 10 transmits the generated data to the terminal apparatus 40.

With this configuration, the server 10 can adaptively deliver the XR media (for example, an XR moving image) with higher resolution to the terminal apparatus 40 within a range of satisfying the latency requirement (PRPL or RPL requirement) in accordance with the dynamically changing wireless communication quality. As a result, the user can enjoy high-quality XR media without feeling uncomfortable.

<5-2. First implementation example>

The outline of the XR media delivery procedure has been described above. Next, a specific example of the XR media delivery procedure will be described.

The XR media delivery procedure is divided into a session establishment procedure and a setup procedure. The session establishment procedure is a procedure in which the terminal apparatus 40 (the XR device 70 in the example of FIG. 8) requests the core network CN to establish a session in accordance with the launch of the XR application. The setup procedure is a procedure in which the server 10 (the XR device 70 in the example of FIG. 8) performs setup for XR media creation. After the end of the setup procedure, the server 10 creates data (XR media content) related to the XR media in accordance with the setting in the setup procedure, and delivers the data to the terminal apparatus 40.

In the following description, the core network CN is assumed to have one or a plurality of network functions (for example, PCF 545, SMF 546, AF 548, TSCTSF 551, UPF 520, etc.) illustrated in FIG. 7.

Hereinafter, the XR media delivery procedure (session establishment procedure and setup procedure) will be described. The XR media delivery procedure is executed by the control unit 13 (the specifying unit 131 to the notification unit 139) of the server 10.

<Session establishment procedure>

First, the session establishment procedure will be described. FIG. 16 is a flowchart illustrating a session establishment procedure according to a first implementation example.

The terminal apparatus 40 specifies an XR application to be used from among a plurality of XR applications (step S501). Furthermore, the terminal apparatus 40 specifies a network slice corresponding to the specified XR application (step S502). Here, specifying the network slice includes selecting one piece of S-NSSAI from one or more pieces of S-NSSAI included in the Allowed NSSAI. Alternatively, specifying the network slice includes selecting one piece of S-NSSAI allowed in the current tracking area from among partial network slices within the Registration Area.

The terminal apparatus 40 requests the core network CN to establish a session for the specified network slice (step S503). The session establishment process is performed in step S108 in FIGS. 11 and 12A, for example. Here, the PDU Session Establishment Request message includes the set of S-NSSAI and DNN selected in step S502. As described above, the core network CN has one or a plurality of network functions (for example, PCF 545, SMF 546, AF 548, TSCTSF 551, UPF 520, etc.) illustrated in FIG. 7.

Having received the Nsmf_PDUSession_Create_SMContext Request message launched by the PDU Session Establishment Request message from the terminal apparatus 40, the SMF 546 acquires the PCC rule for the S-NSSAI selected in step S502. The procedure of acquiring the PCC rule is executed, for example, in step S206 of the PDU session establishment procedure illustrated in FIG. 12A. This S-NSSAI is a network slice for a multi- modal (multi-modal) service, and the PCF 545 provides the SMF 546 with a PCC rule including QoS profiles of plurality of QoS flows for one established PDU session.

The plurality of QoS flows include at least an uplink (UL) QoS flow for transmitting the sensor information detected by the sensor unit 46 of the terminal apparatus 40 to the server 10, and a downlink (DL) QoS flow for transmitting the XR media content generated by the server 10 to the terminal apparatus 40. Here, the sensor unit 46 of the terminal apparatus 40 corresponds to 3DOF/6DOF tracking and XR sensor unit 71 of the XR device 70 illustrated in FIG. 8. The sensor information corresponds to the tracking and sensor information illustrated in FIG. 8.

The AF 548 may request the core network CN to provide a multi-modal service for an application handled between the terminal apparatus 40 serving as the XR device and the server 10 serving as the XR server. The AF 548 may provide Multi-modal Service ID to the PCF 545 by using a service provided by the NEF 542, for example, the Nnef_AfsessionWithQoS service, to explicitly notify that the traffic of the application relates to the multi-modal service.

The AF 548 may provide, directly or via the NEF 542, the PCF 545 with QoS monitoring requirement information for data flows associated with the multi-modal services.

In the case of a multi-modal service for one terminal apparatus 40, in order to correctly deliver data of a multimodal application, data flows closely associated with each other that are required to be adjusted in the application are expected to be transmitted in one PDU session.

Furthermore, in the case of a multi-modal service for a plurality of terminal apparatuses 40, the same set of DNN and S-NSSAI needs to be selected, and thus, the same DNN/S-NSSAI is selected by an evaluation framework of the URSP rule. The AF 548 can assign the same multi-modal service ID to the PDU sessions of all the terminal apparatuses 40 constituting the multi-modal service. When handling the respective PDU sessions independently, the PCF 545 takes the assigned multi-modal service ID into consideration in order to assign a specific QoS profile, for example.

Furthermore, the AF 548 may provide the PCF 545 with Round Trip (RT) delay requirement information regarding an interactive media service such as XR. Based on the RT delay requirement information, the PCF 545 divides the RT delay into two Packet Delay Budgets (PDB) for PCC rules corresponding to uplink QoS flows and downlink QoS flows for transmitting uplink (UL) traffic and downlink (DL) traffic, respectively.

The two PDBs, namely, the PDB of the uplink QoS flow (hereinafter, referred to as $PDB_{UL}$) and the PDB of the downlink QoS flow (hereinafter, referred to as $PDB_{DL}$), may be equal. However, the values of the two PDBs are set so that the sum of the two PDBs does not exceed the delay of RT.

The RT delay requested from the server 10 to the PCF 545 via the AF 548 is set based on a requirement value for Pose to Render to Photon Latency (PRPL)/Render to Photon Latency (RPL) in accordance with the XR application.

In order to track a state of the RT delay, the PCF 545 generates the above-described QoS monitoring policy for two associated QoS flows. When the QoS monitoring result is reported to the PCF 545, the PCF 545 adds up the QoS monitoring report results for uplink and downlink packet delays to generate an RT delay result. Based on this result, the PCF 545 confirms whether the requirement for a delay of RT is satisfied.

The PCF 545 may adjust, in accordance with the status, the PDBs of the two PCC rules by using SM Policy Association Modification Procedure.

The services such as Nnef_AFsessionWithQoS_Create provided by NEF 542 can include a multi-modal service request as an option. The multi-modal service request includes, for example, information regarding a plurality of data flows handled in a multimodal application.

Here, the information regarding the plurality of data flows may include a flow direction for each data flow, that is, uplink or downlink information. Furthermore, the information regarding the plurality of data flows may include a quantity of data flows for each flow direction.

The information regarding the plurality of data flows may include information of QoS ID requested for each data flow, for example, 5QI.

The information regarding the plurality of data flows may include a requirement for the RT delay regarding the designated uplink and downlink data flows.

The information regarding the plurality of data flows may include a request regarding time synchronization between the plurality of uplink data flows.

The information regarding the plurality of data flows may include a request regarding time synchronization between the plurality of downlink data flows. With this configuration, for example, in a case where the terminal apparatus 40 is a glass-type wearable device, in order for the server 10 to transmit two different moving images for the left and right eyes to the terminal apparatus 40, the communication apparatus (for example, the server 10, the management apparatus 20, the base station 30, or the terminal apparatus 40) can request setting of two data flows for which time synchronization has been achieved.

The communication apparatus may assign a TSC flow to a plurality of uplink or downlink data flows. In this case, in order to request the time synchronization between the TSC flows, the communication apparatus may include an indication to apply the TSC Assistance Information formed with the same parameter to the plurality of data flows, in the information regarding the plurality of data flows. Alternatively, the communication apparatus may set a group or a set including a plurality of TSC flows that need time synchronization. In this case, the communication apparatus may apply one piece of TSC Assistance Information to this group or set.

For example, when delivering XR media content in the downlink, metadata for rendering 2D/3D media and XR media can be assigned to different TSC flows, and the different TSC flows can be set to one group or set. Here, by assigning different priorities to different TSC flows, for example, it is possible, in each data burst based on the same TSC Assistance Information, to perform control such that a TSC flow to which metadata for rendering is assigned is transmitted in preference to a TSC flow to which 2D/3D media is assigned.

The information regarding the plurality of data flows may include a Setup Request for a PDU set for the data flow whose QoS ID indicates the TSC flow. Furthermore, the Setup Request for the PDU set may include information regarding the quantity of PDU sets that are set up for one data burst for each data flow. The information regarding the quantity of PDU sets may be, for example, the quantity of PDU sets whose setup is requested, or may be information for identifying the type of data to be assigned to a PDU in one data burst. When setup of a plurality of PDU sets is required for one data burst, the Setup Request for the PDU sets may include information on a relative priority of each PDU set. Here, one data burst is a data burst of each periodicity defined by one piece of TSC Assistance Information.

For example, in the Foveated Rendering described below, in one frame image, the resolution changes in some cases in accordance with the distance from the central position of gaze. For this reason, for example, there is a need in Foveated Rendering to transmit data of different resolutions as one frame image. At that time, when the communication apparatus preferentially delivers data close to the central position of gaze (for example, data having a resolution higher than a predetermined threshold), there is a need for a mechanism that makes it possible to identify data having different priorities in one data burst to which one frame image is assigned. Therefore, the communication apparatus sets a plurality of PDU sets having different priorities in the PDU of one data burst. The communication apparatus may assign data having different priorities to each PDU of a plurality of PDU sets having different priorities in accordance with the priorities. This makes it possible to preferentially deliver data with high resolution in one data burst.

In a case where the communication apparatus requests a plurality of uplink or downlink data flows to set a plurality of PDU sets, the communication apparatus may request a relative acceptable delay time between PDU sets as a request regarding the time synchronization.

Furthermore, in a case where the communication apparatus requests the setup of a PDU set, the communication apparatus may request measurement of a delay of the PDU set as a request regarding QoS monitoring. In a case where the setup of a plurality of PDU sets is requested, the communication apparatus may request measurement of a delay for each PDU set. Furthermore, the communication apparatus may designate two PDU sets to request measurement of a relative delay between the PDU sets.

One of the PDU set QoS parameters is a PDU Set Delay Budget. A standard of the PDU Set Delay Budget is timing of receiving the first PDU of the PDU set. The reception timing of the periodically received PDU set is assumed to have jitter. That is, in a case where the communication apparatus estimates the timing of completing the reception of all the PDUs of the PDU set in consideration of the PDU Set Delay Budget, the timing of completing the reception of the PDUs in each periodicity varies depending on the jitter. On the other hand, in a case where the data sent by using the payload of the PDU set is a moving image of XR media, the terminal apparatus 40 needs to receive the data by a periodic reception deadline regardless of jitter and start decoding and the rendering procedure in order to display the data at a periodic frame rate. Therefore, the PDU set Setup Request information may include a PDU Set Delivery Deadline (PSDD) Setup Request instead of the PDU Set Delay Budget as the PDU set QoS parameter.

Having received the PDU Set Delivery Deadline Setup Request, the PCF 545 includes an indication indicating that the PDU Set Delivery Deadline is set up instead of the PDU Set Delay Budget as the PDU set QoS parameter in the PDU set Setup Request information.

Here, here is an assumable case where the base station 30 (the RAN/AN 510 in the example of FIG. 7) has received a PDU set QoS parameter including an indication indicating to set up a PDU Set Delivery Deadline instead of the PDU Set Delay Budget. In this case, the base station 30 sets the time obtained by adding the Survival Time to the Burst Arrival Time in each periodicity as the PDU Set Delivery Deadline based on the Burst Arrival Time of the TSC Assistance Information, for example. With this PDU Set Delivery Deadline, the base station 30 can grasp a timing at which transmission of all PDUs of the PDU set needs to be completed without being affected by jitter during reception of the PDU set.

When both the PDU Set Delay Budget and the PDU Set Delivery Deadline are set as the PDU set QoS parameter, the base station 30 may prioritize the PDU Set Delivery Deadline.

The information regarding the plurality of data flows may include Transaction Reference ID of the Ntsctsf_QoSandTSCAssistance_Create service for the TSCTSF 551. Here, the AF 548 may provide information regarding the traffic pattern of each data flow (for example, the flow direction, the Burst Arrival Time, the periodicity, the Time domain, the Survival Time, the BAT window, or capability for Burst Arrival Time adaptive control, the Periodicity Range) by using the Ntsctsf_QoSandTSCAssistance_Create service. This allows the AF 548 to request TSC Assistance Container generation from TSCTSF 551. The Transaction Reference ID is ID acquired as a response to the request.

Furthermore, the AF 548 may include information regarding a traffic pattern of each data flow in information regarding a plurality of data flows. In addition, instead of the AF 548, the PCF 545 may request TSC Assistance Container generation from TSCTSF 551.

<Setup procedure>

Next, a setup procedure according to the first implementation example will be described. FIG. 17 is a flowchart illustrating a setup procedure according to the first implementation example.

When the session is established in accordance with the request from the terminal apparatus 40, the server 10 specifies latency requirement information for the XR application to be used. For example, the server 10 specifies Pose to Render to Photon Latency (PRPL)/Render to Photon Latency (RPL) requirement values as the latency requirement information (step S601). For example, it is assumed that the latency requirement information is a PRPL requirement value. In this case, the PRPL requirement value is, for example, 50 ms or less, 100 ms or less, 200 ms or less, or other (for example, 500 ms or less) depending on the XR application to be used.

Here, the server 10 may set the frame rate of the XR media in accordance with the XR application to be used, together with the specification of the latency requirement information (for example, the PRPL requirement value). For example, the server 10 sets 60 fps for a normal XR application, and sets 90 fps or 120 fps for an XR application that requests a Motion to Photon Latency (MPL) higher than a predetermined standard.

In the following description, the latency requirement information is assumed to be the PRPL requirement value. Note that the latency requirement information is not limited to the requirement value of the PRPL. The description of "PRPL requirement value" appearing in the following description can be replaced with, for example, "latency requirement information" or "RPL requirement value". In addition, the description of "PRPL" can be replaced with "RPL", for example.

The server 10 acquires information related to the QoS flow assigned to the session for XR media delivery of the XR application to be used from the core network CN (for example, NEF 542) via the AF 548 (step S602). Here, the AF 548 may request acquisition of information related to the QoS flow assigned to the session for XR media delivery via the AF request.

The server 10 specifies acceptability information (for example, Packet Delay Budget (PDB)) related to the transmission delay from the acquired information related to the QoS flow.

For example, the server 10 specifies the $PDB_{UL}$ from the acquired information related to the QoS flow (for example, information on a 5QI assigned to the uplink (UL)) (step S603). Note that, in a case where the PDU set is set in the uplink QoS flow, the server 10 may further add a PDU Set Delay Budget (or the time calculated based on the PDU Set Delay Budget) to the $PDB_{UL}$. Alternatively, the server 10 may further add a time based on the Survival Time (or time calculated based on Survival Time) to the $PDB_{UL}$.

In addition, the server 10 specifies the $PDB_{DL}$ from the acquired information related to the QoS flow (for example, information on a 5QI assigned to the downlink (DL)) (step S604). Note that, in a case where the PDU set is set in the downlink QoS flow, the server 10 may further add a PDU Set Delay Budget (or the time calculated based on the PDU Set Delay Budget) to the $PDB_{DL}$. Alternatively, the server 10 may further add a time based on the Survival Time (or time calculated based on Survival Time) to the $PDB_{DL}$.

The server 10 selects a resolution and a codec as setting candidates. Here, the codec to be the setting candidate may be, for example, a codec selected from a plurality of selection candidates including at least one of AVC/H.264, HEVC/H.265, and VVC/H.266. Note that the plurality of codecs as selection candidates may include codecs other than these codecs. Furthermore, the server 10 may select a resolution and a codec that are equal to or less than the Maximum Data Burst Volume specified based on the 5QI information assigned to the DL as the resolution and the codec to be the setting candidate. Note that the server 10 may select only one of the resolution and the codec as the setting candidate.

The server 10 calculates a processing time $PT_{Server}$ for the resolution and/or codec determined as a setting candidate (step S605). The server 10 calculates the PRPL based on the specified PDB (for example, at least one of $PDB_{UL}$ and $PDB_{DL}$) and the calculated $PT_{Server}$ (step S606).

The server 10 determines whether the calculated PRPL is a requirement value for the XR application or less (step S607). In a case where the calculated PRPL is the requirement value for the XR application or less (step S607: Yes), the server 10 sets the resolution and codec as the setting candidate as the resolution and codec to be used for generating the XR media content (step S608). Note that the server 10 may set only one of the resolution and the codec. When the setup is completed, the server 10 ends the setup procedure.

In contrast, when the calculated PRPL exceeds the requirement value for the XR application (step S607: No), the server 10 lowers the resolution to be the setting candidate by one step (step S609). For example, the server 10 lowers the resolution as a setting candidate from 4K to 2K. Subsequently, the server 10 executes the processes of step S605 and subsequent steps again.

Through the above processes, the server 10 can set appropriate resolution and/or codec for each of the plurality of XR applications having different requirements for PRPL/RPL. As a result, the server 10 can generate the XR media content according to the QoS flow assigned to the session.

<Modifications>

The PCF 545 may transmit a confirmation of permission for a change to an Alternative QoS Profile for a designated QoS flow to the AF 548 in accordance with notification control of a QoS parameter notified from the SMF 546.

The AF 548 may permit the change to the Alternative QoS Profile when the designated QoS flow cannot satisfy the parameters of the current QoS profile.

When the AF 548 has permitted the change to the Alternative QoS Profile and has acquired information on an Alternative QoS Profile that can currently be satisfied, the PDB (at least one of the $PDB_{UL}$ and the $PDB_{DL}$) can be updated with the Packet Delay Budget included in the Alternative QoS Profile. Subsequently, the server 10 may execute the processes in and after step S603 based on the updated PDB (at least one of the $PDB_{UL}$ and the $PDB_{DL}$) . Furthermore, in a case where the designated QoS flow is a downlink QoS flow and the Maximum Data Burst Volume included in the Alternative QoS Profile is changed, the server 10 selects a resolution and/or codec that is equal to or less than the updated Maximum Data Burst Volume as the resolution and/or codec to be the setting candidate in step S605.

Furthermore, in a case where the frame periodicity of the XR media is not an integral multiple of the minimum unit of the radio resource assigned by the base station 30 (for example, 60 fps), a cumulative error of the fractional part causes an offset of the Burst Arrival Time in the base station 30. Therefore, the SMF 546 may update the TSC Assistance Information for the target QoS flow by utilizing the BAT offset obtained as feedback from the base station 30. For example, if the BAT offset exceeds a threshold, the SMF 546 may change the Burst Arrival Time of the TSC Assistance Information to correct the BAT offset. The SMF 546 provides the updated TSC Assistance Information to the base station 30 and indicates update of the TSC Assistance Information.

Here, the SMF 546 may acquire, from the AF 548, the upper limit value of the jitter or the Packet Delay Variation required for the specific QoS flow. In addition, the SMF 546 may set a threshold for an event in which the base station 30 launches feedback of the BAT offset in the base station 30 based on the upper limit value of the jitter or the Packet Delay Variation. For example, the SMF 546 may set a value of 75% of the upper limit value of the jitter or the Packet Delay Variation as the threshold. The base station 30 may send the BAT offset as feedback to the SMF 546 when the BAT offset exceeds this threshold.

Having received the indication to update the TSC Assistance Information, the base station 30 may update the TSC Assistance Information for the target QoS flow. When the PDU set has been set in the target QoS flow, the base station 30 may further update the PDU Set Delivery Deadline.

Here, lowering the resolution can include selecting a format with a lower bit rate required for delivery. That is, assigning higher resolution data to a higher priority PDU set in Foveated Rendering corresponds to assigning a higher bit rate format to a higher priority PDU set.

Furthermore, in step S609, instead of lowering the resolution by one step, the server 10 may divide the image related to the XR media content into a plurality of images obtained by thinning out the number of pixels, and assign different priorities to the divided images. For example, the server 10 may divide the 4K-equivalent image into four 2K-equivalent images in terms of the number of pixels. FIG. 18 is a diagram illustrating an example of an image dividing method. In the example of FIG. 18, the server 10 divides a 4K-equivalent image into four 2K-equivalent images for each region. The server 10 can provide a plurality of divided images with different priorities (transmission priorities) and transmit the images to the terminal apparatus 40.

The server 10(for example, the XR display region pre-rendering unit 62 of the XR server 60) may estimate a central position of gaze based on the sensor information acquired from the terminal apparatus 40. Subsequently, the server 10 specifies an image including the estimated central position of gaze in the region from among the plurality of divided images constituting the display region. The central position of gaze can be detected by a technique referred to as eye tracking. Subsequently, the highest priority is assigned to the specified image. For other 2K-equivalent images, the server 10 assigns the priority such that the more distant from the central position of gaze, the lower the priority will be assigned.

In a case where the terminal apparatus 40 has successfully received only the 2K-equivalent image having the highest priority from the server 10 in the duration of $PDB_{DL}$, the terminal apparatus 40 can display a 2K-equivalent image. In a case where the terminal apparatus 40 has successfully received two images, namely, a 2K-equivalent image with the highest priority and a 2K-equivalent image with the second highest priority, from the server 10 in the duration of $PDB_{DL}$, the terminal apparatus 40 can display 1/2 of the region of the 4K-equivalent image. In a case where the terminal apparatus 40 has successfully received a 2K-equivalent image with the highest priority, a 2K-equivalent image with the second highest priority, and a 2K-equivalent image with the third highest priority from the server 10 in the duration of $PDB_{DL}$, the terminal apparatus 40 can display 3/4 of the region of the 4K-equivalent image. In a case where the terminal apparatus 40 has successfully received four 2K-equivalent images from the server 10 in the duration of $PDB_{DL}$, the terminal apparatus 40 can display a 4K-equivalent image.

Using a service provided by the NEF 542, for example, the Nnef_AfsessionWithQoS service, the server 10 may provide, to the core network CN, information regarding setting of a PDU set including information regarding the quantity of PDU sets to be set for a plurality of PDUs constituting each data burst and relative priority between PDU sets. Here, the server 10 may provide information for identifying the quantity of divisions of the image or the data of the image to be divided as the information regarding the quantity of PDU sets to be set for the plurality of PDUs constituting each data burst. That is, the server 10 may transmit, under the PDU set-based QoS control (PDU Set based QoS Handling), a plurality of divided images with different priorities by using a plurality of PDU sets with different priorities assigned to one data burst.

The PCF 545 may provide the TSC Assistance Container and Assistance Information related thereto (information regarding PDU setup) to the SMF 546. The SMF 546 may generate the TSC Assistance Information based on these pieces of information. Furthermore, the SMF 546 may generate the Protocol Description of the PDR included in the N4 rule provided to the PSA-UPF 520 based on the Assistance Information (information regarding the PDU setup).

The PSA-UPF 520 may identify each of the packets related to the plurality of images divided with different priorities in accordance with the Protocol Description of the PDR. The packets related to the identified respective images are assigned to PDU sets having different priorities in accordance with the priorities of the packets.

Furthermore, the PSA-UPF 520 may decide the PDU set information in accordance with the Protocol Description of the PDR. The PSA-UPF 520 transmits the PDU set information to the base station 30 (RAN/AN 510) in the state of being included in the GTP-U header.

Here, the SMF 546 sets the N4 rule to PSA-UPF 520. The N4 rule is, for example, information for forwarding packets assigned to PDU sets having different priorities in one data burst in accordance with the priority. For example, the N4 rule is a gate control list for a Hold and Forward mechanism.

The Hold and Forward mechanism is a mechanism of priority control of traffic using a maximum of eight queues in which a protected window is configured. The gate control list is a list that configures a duration of each time slot and whether data of each queue for each time slot is to be passed through the gate or blocked by the gate.

By configuring the time slot that passes a specific queue (for example, a PDU of a PDU set) as a protected window, the specific queue can be preferentially forwarded. Here, the same duration as the Survival Time or a shorter duration is set as the duration of the protected window, for example.

The PCF 545 may set the PDU Set Delay Budget based on the duration of the protected window. In addition, the PCF 545 may provide, instead of the PDU Set Delay Budget, the duration of the protected window to the base station 30 when requesting the setting of the PDU Set Delivery Deadline. With this operation, the PCF 545 may indicate the base station 30 to set the PDU Set Delivery Deadline based on the duration of the protected window.

The base station 30 assigns radio resources in accordance with the priority of the PDU set, and transmits the PDU set to the terminal apparatus 40. That is, the base station 30 preferentially assigns radio resources to a PDU set with high priority. Here, the base station 30 may decide the timing of the head of the PDU set assigned to each data burst based on the Burst Arrival Time (BAT) of the TSC Assistance Information.

The above procedure makes it possible for the terminal apparatus 40 to display an image with a better resolution in the vicinity of the gaze. Here, an example in which an 4K-equivalent image is divided into 2K-equivalent images has been described, but the present implementation example is not limited to this example. For example, an 2K-equivalent image may be divided into four images corresponding to full High Definition (HD), or an 4K-equivalent image may be divided into 16 full HD-equivalent images. In addition, a 4K-equivalent image may be divided into 2K-equivalent images, and at least one 2K-equivalent image among four 2K-equivalent images may be divided into four full HD-equivalent images.

Note that the method of dividing the image is not limited to the method of classifying the regions as illustrated in FIG. 18. FIG. 19 is a diagram illustrating another example of an image dividing method. The server 10 may divide an image related to XR media content into a plurality of images having reduced resolution and having substantially the same constituents. For example, as illustrated in FIG. 19, the server 10 divides a 4K-equivalent image into a plurality of blocks each including four pixels. Subsequently, the server 10 divides the image into four 2K-equivalent images, namely, an image 1 being a 2K-equivalent image formed with a pixel 1 being an upper left pixel of each block, an image 2 being 2K-equivalent image formed with a pixel 2 being an upper right pixel of each block, an image 3 being a 2K-equivalent image formed with a pixel 3 being a lower left pixel of each block, and an image 4 being a 2K-equivalent image formed with a pixel 4 being a lower right pixel of each block. That is, the server 10 can divide the image related to the XR media content into four images thinned out to half the number of pixels in the vertical direction and the horizontal direction.

Furthermore, the server 10(for example, the XR display region pre-rendering unit 62 of the XR server 60) may use a combination of the method illustrated in FIG. 18 and the method illustrated in FIG. 19 for Foveated Rendering. For example, the server 10 may divide the image related to the R media content into four 2K-equivalent images for each region in accordance with the method illustrated in FIG. 18, and may thin out the 2K-equivalent image away from the central position of gaze into four full HD-equivalent images in accordance with the method illustrated in FIG. 19. Subsequently, the server 10 may assign a lower priority to the four full HD-equivalent images than the 2K-equivalent images including the estimated central position of gaze in the region.

With this configuration, the terminal apparatus 40 can preferentially receive a high-resolution image including the central position of gaze in the region during the duration of $PDB_{DL}$. Furthermore, when one full HD-equivalent image can be received among the four full HD-equivalent images with low priority, the terminal apparatus 40 can display a full HD-equivalent image from which the number of pixels is thinned out in a region away from the central position of gaze. At this time, in a case where the full HD-equivalent image 1 including the pixel 1 being the upper left pixel is received, the terminal apparatus 40 may copy and interpolate the information on the pixel 1 to the pixel 2 being the upper right pixel, the pixel 3 being the lower left pixel, and the pixel 4 being the lower right pixel, and then display the interpolated image.

Note that the above-described image dividing method is merely an example. The number of divisions of the image is not limited to four. For example, the number of divisions may be another number of divisions such as 2 divisions, 9 divisions, and 16 divisions. Furthermore, the regions to be divided also need not be equal, and the server 10 may divide the image into regions of different areas. Note that 2K and full HD described in the above-described example are examples of the resolution. Other resolutions may be applied, such as 4K, 8K, etc.

Furthermore, the server 10 may deliver data of different moving images by unicast to a plurality of terminal apparatuses 40 that can use the 5GC shared MBS traffic delivery method. In this case, in step S609, instead of lowering the resolution by one step, the server 10 may transmit first data (multicast transmission data), which is a data portion of the same moving image in the moving image data delivered to each terminal apparatus 40, to the plurality of terminal apparatuses 40 by multicast transmission via the shared transport. Subsequently, the server 10 may transmit the second data (unicast transmission data), which is another data portion in each piece of moving image data, to the plurality of terminal apparatuses 40 by unicast transmission via individual PDU sessions. The server 10 may execute this control only in a case where the base station 30 can support Point-to-Multipoint (PTM) transmission.

Here, the plurality of terminal apparatuses 40 may be terminal apparatuses 40 included in a terminal apparatus group set in advance or dynamically. The information regarding the terminal apparatus group may be provided from the AF 548 to the core network CN.

The server 10 may set one resolution for one piece of multicast transmission data for a plurality of terminal apparatuses 40 and set the same resolution or different resolutions for a plurality of pieces of unicast transmission data.

The server 10 may set one codec for one piece of multicast transmission data for a plurality of terminal apparatuses 40, and may set the same codec or different codecs for a plurality of pieces of unicast transmission data.

Here, the core network CN may assign different QoS flows to the multicast transmission data and the unicast transmission data.

For example, the core network CN may assign a Multicast/Broadcast Service (MBS) QoS flow to the multicast transmission data. In this case, for example, the same data is transmitted as multicast transmission data to the terminal apparatuses 40 of a plurality of users who use a multiplayer game. On the other hand, different pieces of data are transmitted as unicast transmission data to the terminal apparatuses 40 of the plurality of users who use the multiplayer game.

The core network CN may acquire one copy of the multicast transmission data. Subsequently, the core network CN may transmit one copy of the multicast transmission data to the base station 30 via the shared transport by using a 5GC shared MBS traffic delivery method.

The core network CN may transmit the individual unicast transmission data of the terminal apparatuses 40 of the plurality of users to the base station 30 via the individual PDU sessions established with the terminal apparatuses 40 of the plurality of users.

Here, the core network CN may synchronize, in accordance with a request from the AF 548, a data flow assigned to individual PDU sessions established with the terminal apparatuses 40 of a plurality of users with a data flow (MBS QoS flow) assigned to the shared transport for the 5GC Shared MBS traffic delivery method. For example, the core network CN may set a periodic data burst having the same setting as the data flow assigned to the shared transport in the data flow assigned to the individual PDU session.

More specifically, the core network CN may assign the TSC flows to the data flows assigned to the shared transport and the data flows assigned to the individual PDU sessions in accordance with a request from the AF 548, and apply the TSC Assistance Information configured with the same parameters to these TSC flows.

In addition, the core network CN may assign PDU sets having different priorities to the multicast transmission data and the unicast transmission data, each of which being a periodic data burst. For example, the core network CN may assign a PDU set having a higher priority to the multicast transmission data rather than the unicast transmission data.

Furthermore, the core network CN may assign PDU sets having different priorities to individual unicast transmission data for the terminal apparatuses 40 of a plurality of users.

The base station 30 may assign radio resources in accordance with the priority of the PDU sets. For example, the base station 30 may preferentially assign radio resources to multicast transmission data to which a PDU set with high priority is assigned. Alternatively, radio resources may be preferentially assigned to individual unicast transmission data for the terminal apparatus 40 to which a PDU set with high priority is assigned.

Note that the transmission method (METHOD OF SEPARATING USER PLANE DATA INTO MULTICAST TRANSMISSION DATA AND UNICAST TRANSMISSION DATA AND TRANSMITTING) described here is also applicable to XR applications other than multiplayer games.

Here, a method of extracting information of the same moving image from different moving images may be a method using an (Artificial Intelligence)/Machine Learning (ML) model to be described below, for example. The server 10 may input the information of the pixel of the moving image to the input layer of the AI/ML model and acquire the multicast transmission data and the unicast transmission data from the output layer.

In addition, the base station 30 may further take the PDU Set Integrated Handling Information of the PDU set QoS parameter into consideration when deciding radio resource assignment corresponding to the priority of the PDU set. For example, here is an assumable case where PDU Set Integrated Handling Information needs X% (for example, 75%) of PDUs among all PDUs of the PDU set. In this case, the base station 30 decides to assign radio resources only to the PDUs corresponding to X% of the PDU set and discard the remaining PDUs for the terminal apparatus 40 whose communication quality with the base station 30 is a threshold or more. Here, the communication quality may be, for example, Synchronization Signal (SS)-Reference Signal Received Quality (RSRQ) or may be Channel State Information (CSI)-RSRQ.

In addition, when using Forward Error Correction (FEC), the server 10 may provide, via the AF 548, a percentage of necessary PDUs in all PDUs of a PDU set for PDU Set Integrated Handling Information to the core network CN.

Here, the percentage of required PDUs among all PDUs of the PDU set may vary depending on the Forward Error Correction method used. The communication apparatus may select the Forward Error Correction method in accordance with the contribution of the processing time necessary for the Forward Error Correction to the PRPL/RPL requirement value.

The PCF 545 may decide PDU set QoS parameters in accordance with information provided from the AF 548 and/or local settings. For example, the PCF 545 may decide PDU Set Integrated Handling Information indicating that X% (for example, 75%) of PDUs are needed among all the PDUs of the PDU set.

The SMF 546 may set, as part of the N4 rule, a percentage of required PDUs in all PDUs of the PDU set indicated by the PDU Set Integrated Handling Information to the PSA-UPF 520.

The PSA-UPF 520 may attach a priority higher than a predetermined threshold to X% of the PDUs among all the PDUs of the PDU set and attach a priority lower than the predetermined threshold to other PDUs.

The base station 30 may decide radio resource assignment in accordance with the priority of the PDU included in the PDU set. That is, the base station assigns radio resources preferentially to a PDU to which a higher priority is attached. Furthermore, the base station decides to discard a PDU to which a lower priority has been attached in a case of congestion.

By the procedures using the PDU Set Integrated Handling Information described above, utilization of Forward Error Correction and improvement of transmission efficiency can be expected.

<5-3. Second implementation example>

Next, an XR media delivery procedure of a second implementation example will be described. As described above, the XR media delivery procedure is divided into a session establishment procedure and a setup procedure. The session establishment procedure is the same as the session establishment procedure according to the first implementation example, and thus, the description thereof will be omitted. Hereinafter, a setup procedure according to the second implementation example will be described.

FIG. 20 is a flowchart illustrating a setup procedure according to the second implementation example. Since the procedure from step S601 to step S607 and the procedure in step S608 are the same as the setup procedure according to the first implementation example illustrated in FIG. 17, the description thereof will be omitted.

When it is determined that the Pose to Render to Photon Latency (PRPL) calculated in step S606 exceeds the requirement value for the XR application (step S607: No), the server 10 specifies a Maximum Data Burst Volume (MDBV) from the information related to the QoS flow acquired in step S602. For example, the server 10 specifies $MDBV_{DL}$ from 5QI information assigned to the downlink (UL) (step S701). As described above, the description of "PRPL requirement value" can be replaced with "latency requirement information" or "RPL requirement value".

The server 10 specifies a codec having a small processing delay (that is, a codec having a low compression rate) as a codec to be the setting candidate (step S702). For example, the server 10 specifies a codec having the smallest processing delay (that is, a codec having the lowest compression rate) from among a plurality of codecs to be the selection candidates. Subsequently, the server 10 calculates the data size to be obtained after being subjected to compression based on the information on the specified codec (step S703).

The server 10 determines whether the calculated data size is equal to or smaller than the value of $MDBV_{DL}$ (step S704). When the calculated data size is the value of $MDBV_{DL}$ or less (step S704: Yes), the server 10 executes the process of step S608 and ends the setup procedure.

In contrast, in a case where the calculated data size exceeds the value of $MDBV_{DL}$ (step S704: No), the server 10 specifies a codec (that is, a codec having a high compression rate) having a processing delay larger than that of the codec specified in step S702 (or the codec specified in the previous step S704) (step S705). At this time, the server 10 may lower the resolution as a setting candidate by one step (step S609). Subsequently, the server 10 executes the processes of step S605 and subsequent steps again.

Through the above procedures, the server 10 can adaptively set the resolution and/or the codec in accordance with the Maximum Data Burst Volume of the assigned QoS flow.

Furthermore, in a case where a plurality of PDU sets is set for one data burst, the server 10 may execute the above-described procedure (for example, the procedure from step S702 to step S609) on moving image data transmitted using the payload of at least one PDU set.

In executing the above-described processing (for example, the processing from step S702 to step S609), the server 10 may select at least one PDU set. At this time, for example, the server 10 may select, from among a plurality of PDU sets, one or a plurality of PDU sets to which a priority lower than a predetermined priority is assigned. Furthermore, in step S703, the server 10 may calculate the sum of the sizes of the data transmitted using the payloads of the plurality of PDU sets as the data size to be obtained after compression.

In a case where the server 10 executes the procedures from step S702 to step S609 on the PDU set with the lower priority and then executes the procedures from step S702 to step S609, the server may select, in step S705, the PDU set having the next lower priority.

That is, in a case where a frame image of one piece of moving image data is divided and transmitted using payloads of a plurality of PDU sets, the server 10 may set the resolution and/or codec for each frame image divided in accordance with the Maximum Data Burst Volume of the assigned QoS flow. For example, with respect to the plurality of divided frame images, the server 10 assigns a higher resolution to the frame image including the central position of gaze in the region, and assigns a lower resolution to the divided frame image in accordance with the distance from the central position of gaze. Furthermore, the server 10 may assign a higher priority to the frame image including the central position of gaze in the region to the plurality of divided frame images. Subsequently, the server 10 may assign a lower priority to the divided frame images in accordance with the distance from the central position of gaze. This achieves wireless transmission using payloads of a plurality of PDU sets suitable for Foveated Rendering.

<5-4. Third implementation example>

Next, an XR media delivery procedure of a third implementation example will be described. As described above, the XR media delivery procedure is divided into a session establishment procedure and a setup procedure. The session establishment procedure is the same as the session establishment procedure according to the first implementation example, and thus, the description thereof will be omitted. Hereinafter, a setup procedure according to the third implementation example will be described.

FIG. 21 is a diagram illustrating a range of data to be transmitted to the terminal apparatus 40. As described above, the terminal apparatus 40 using the function of the Timewarp specifies the latest display region (second display region) to be corrected based on the latest inertial information from the current display region (first display region). Subsequently, the terminal apparatus 40 performs coordinate transformation of the XR media adapted to the first display region into the XR media adapted to the second display region. That is, in a case where the function of the Timewarp is used, an increase in the movement range of the display region will increase the amount of data that the server 10 needs to transmit to the terminal apparatus 40. In addition, an increase in the PRPL/RPL increases the movement range of the display region. Therefore, the server 10 needs to take the movement range of the display region in consideration in the setting of the resolution and/or the codec.

FIG. 22 is a flowchart illustrating an example of a setup procedure according to the third implementation example. Since the procedure from step S601 to step S605 is the same as the setup procedure according to the first implementation example illustrated in FIG. 17, the description thereof will be omitted.

The server 10 specifies the region of the image in consideration of the movement amount of the display region by the PDB (for example, at least one of $PDB_{UL}$ and $PDB_{DL}$) included in the Pose to Render to Photon Latency (PRPL) (step S801). The server 10 calculates the PRPL for the transmission data of the specified image region (step S802). For example, the server 10 calculates the PRPL based on the transmission data size of the specified image region. The description of "PRPL" appearing in the present implementation example can be replaced with "RPL".

Since step S607 and the subsequent steps are the same as the procedure of FIG. 17, the description thereof will be omitted.

Through the above procedure, the server 10 can calculate the value of the PRPL in consideration of movement of the display region during the duration of the PDB (for example, at least one of $PDB_{UL}$ and $PDB_{DL}$). As a result, the server 10 can set a suitable resolution and/or codec based on a more accurate PRPL value.

FIG. 23 is a flowchart illustrating another example of the setup procedure according to the third implementation example. Since the procedure from step S601 to step S801 is the same as the setup procedure illustrated in FIG. 22, the description thereof will be omitted.

The server 10 calculates the transmission data size of the image region specified in step S801 (step S901). The server 10 specifies a Maximum Data Burst Volume (MDBV) from the information related to the QoS flow acquired in step S602. For example, the server 10 specifies $MDBV_{DL}$ from 5QI information assigned to downlink (UL) (step S902). As described above, the description of "PRPL requirement value" can be replaced with "latency requirement information" or "RPL requirement value".

The server 10 determines whether the calculated transmission data size of the image region is the value of $MDBV_{DL}$ or less (step S903). Subsequently, in a case where the value is equal to or less than the value of $MDBV_{DL}$ (step S903: Yes), the server 10 calculates PRPL for the transmission data of the specified image region (step S802). Subsequently, the server 10 executes the procedures of step S607 and subsequent steps. Since the procedure from step S607 to step S609 is the same as the setup procedure according to the first implementation example illustrated in FIG. 17, the description thereof will be omitted.

On the other hand, when the calculated transmission data size of the image region exceeds the value of $MDBV_{DL}$ (step S903: No), the server 10 specifies a codec with a large processing delay (that is, a codec with a high compression rate) (step S904). For example, the server 10 may specify a codec having a larger processing delay (that is, a codec having a higher compression rate) than the codec selected in the previous step S904 from among a plurality of codecs to be selection candidates. For example, in the case where HEVC/H.265 has been selected in the previous step S904, the server 10 may select VVC/H.266 as a codec having a high compression rate. Subsequently, the server 10 executes the procedure of step S605 and subsequent steps again.

Through the above procedure, the server 10 can further set an appropriate resolution and/or codec in accordance with the Maximum Data Burst Volume of the downlink.

FIG. 24 is a flowchart illustrating an example of an image region specifying procedure in consideration of a movement amount of a display region.

The server 10 acquires sensor information (step S1001). Here, the sensor information corresponds to the tracking and sensor information illustrated in FIG. 8, for example. Subsequently, based on the history of the sensor information, the server 10 specifies the magnitude of the change in the movement amount or the movement vector of the image region (step S1002).

The server 10 specifies the region of the image based on the magnitude of the change or the movement vector of the XR media content and the movement amount of the display region by the PDB (at least one of the $PDB_{UL}$ and the $PDB_{DL}$) (step S1003). When the specification is completed, the server 10 ends the specifying procedure.

In the procedure of step S1002, the server 10 may acquire a trained Artificial Intelligence (AI)/Machine Learning (ML) model (AI/ML model) generated based on the history of the sensor information. The server 10 may generate the trained AI/ML model based on the history of the sensor information. Subsequently, in step S1002, the server 10 may input the sensor information acquired in step S1001 to the trained AI/ML model to specify the magnitude of the change in the movement amount or the movement vector of the image region.

Here, as the AI/ML model may be implemented by using a neural network model obtained by Machine Learning or a deep neural network obtained by Deep Learning.

The neural network includes an input layer, a hidden layer (or the intermediate layer), and a layer referred to as an output layer. Each of the layers includes at least one node. The individual nodes are connected to each other via an edge. Each layer has a function referred to as an activation function, and each edge is weighted.

The machine learning is one of methods of artificial intelligence that allows a computer to perform recognition, judgment, or estimation similar to human. The procedures performed by machine learning include two procedures including a learning procedure and a determination procedure for recognition, judgment, or estimation.

In the learning procedure, a device (not illustrated) that performs learning trains a neural network model using learning data. In the course of learning, the weighting factor of each edge is optimized. The model extracted as a result of the learning process is to be a trained model.

In the determination process, a device (not illustrated) that performs determination inputs data (for example, sensor information) related to unknown data (for example, the magnitude of the change in the movement amount or the movement vector of the image region) to the trained model. The trained model outputs a result of recognition, judgment, or estimation for unknown data as a result of computational operation.

The deep neural network model includes a plurality of hidden layers. In machine learning, the quantity of hidden layers of a neural network model is limited due to a limit of computing capability of a computer. On the other hand, in Deep Learning, a Deep Neural Network (DNN) model having a larger number of hidden layers is used due to improvement in computing capability of a computer. The use of a trained DNN model that has been trained using vast amounts of data improves the accuracy of recognition, judgment, or estimation.

Examples of typical algorithms used in Deep Learning include the following.

- Convolution Neural Network (CNN)
- Recurrent Neural Network (RNN)
- Fully-connected neural network
- Long Short-Term Memory (LSTM)
- Autoencoder

In CNN, a hidden layer includes individual layers each referred to as a Convolution Layer and a Pooling Layer. In the convolution layer, filtering by a convolution operation is performed to extract data referred to as a feature map. In the pooling layer, information of the feature map output from the convolution layer is compressed to implement down-sampling.

The RNN has a network structure in which the value of the hidden layer is recursively input to the hidden layer. The RNN processes time-series data of a short duration, for example.

In the fully connected neural network, all the intermediate layers are fully connected layers (all the nodes between the layers are connected to each other). The fully-connected neural network has been mainly applied in the field of voice recognition.

In the LSTM, a parameter that holds the state of the intermediate layer referred to as a memory cell is introduced into the intermediate layer output of the RNN. With this configuration, the LSTM can hold the influence of the far past output. That is, the LSTM processes time-series data of a longer duration than the RNN.

The autoencoder extracts a low-dimensional feature capable of reproducing input data by unsupervised learning. The autoencoder is effective for noise removal, dimensionality reduction, and the like.

As described above, the server 10 uses the AI/ML model generated based on the history of the sensor information to specify the change in the movement amount of the image region. With this configuration, the server 10 can accurately estimate the dynamic change in the movement amount of the image region.

Note that the terminal apparatus 40 may include information regarding eye tracking in the sensor information. The server 10 may estimate the change in the gaze line using the AI/ML model generated based on the history of the sensor information.

In the above-described example, the server 10 performs computational operation of the trained AI/ML model for estimating the change in the movement amount of the image region. However, the present implementation example is not limited thereto.

For example, the server 10 may provide the trained AI/ML model to the terminal apparatus 40. In addition, the terminal apparatus 40 may perform computational operation of the trained AI/ML model in order to estimate the change in the movement amount of the image region.

The terminal apparatus 40 may transmit a result of the computational operation of the trained AI/ML model (for example, the magnitude of the change in the movement amount of the image region or the information of the movement vector) to the server 10 as a part of the sensor information.

Furthermore, the server 10 may provide a part of the trained AI/ML model to the terminal apparatus 40, and perform computational operation of the trained AI/ML model in a distributed manner between the terminal apparatus 40 and the server 10.

The server 10 decides the division point of the trained AI/ML model in consideration of at least one of the communication quality between the terminal apparatus 40 and the base station 30, the type of the uplink target QoS flow assigned for transmission of the result of the computational operation of the trained AI/ML model, for example, 5QI, the QoS monitoring result related to the target QoS flow notified from the core network CN, or the quality of the QoS flow generated from the QoS monitoring result, the delay of the UL packet, for example.

The terminal apparatus 40 transmits the result of the computational operation of the intermediate layer of the divided trained AI/ML model to the server 10 as a part of sensor information. Note that the server 10 may be implemented by a method of first providing the trained AI/ML model to the terminal apparatus 40 and then notifying only the division point to the terminal apparatus 40. The terminal apparatus 40 can process only the layer in front of the notified division point, and transmit the result of the computational operation of the intermediate layer to the server 10. For example, in a case where the division point is dynamically changed, it is possible to reduce the burden of transmitting the divided trained AI/ML model to the terminal apparatus 40 each time of change.

<5-5. Fourth implementation example>

Next, an XR media delivery procedure of a fourth implementation example will be described. As described above, the XR media delivery procedure is divided into a session establishment procedure and a setup procedure. The session establishment procedure is the same as the session establishment procedure according to the first implementation example, and thus, the description thereof will be omitted. Hereinafter, a setup procedure according to the fourth implementation example will be described.

In each of the above-described procedures (for example, the procedures of FIGS. 17, 20, 22, and 23), the server 10 sets the resolution and/or codec suitable for the XR application when transmitting the XR media content to the XR device. At this time, the server 10 specifies latency requirement information (requirement value of Pose to Render to Photon Latency (PRPL) /Render to Photon Latency (RPL)) in accordance with the XR application. However, in practice, XR media content information changes from moment to moment over a duration of transmitting the XR media content. Depending on the magnitude of the change, the server 10 needs to change the PRPL/RPL requirement value. Accordingly, in the fourth implementation example, the server 10 performs setting in accordance with the magnitude of the change in the moving image.

FIG. 25 is a flowchart illustrating an example of a setup procedure according to the fourth implementation example. The setup procedure according to the fourth implementation example is executed a plurality of times, for example, during XR media content transmission of one XR media. For example, the setup procedure according to the fourth implementation example is executed at regular time intervals during XR media content transmission of one XR media. The setup procedure according to the fourth implementation example will be described below with reference to the flowchart of FIG. 25.

The server 10 specifies the magnitude or speed of the change in the moving image related to the XR media content (step S1101). Here, the magnitude or speed of the change in the moving image is the magnitude of the change or movement of a target object included in the moving image, on the moving image. Alternatively, the magnitude or speed of the change in the moving image is the magnitude of the change or movement of the 2D/3D content multiplexed in the moving image with respect to the moving image. Here, the server 10 may use the AI/ML model to acquire information of a change in the target object included in the moving image on the moving image or the magnitude of movement (hereinafter, referred to as change/movement information of the target object). For example, the server 10 may input the information of the pixel of the moving image to the input layer of the AI/ML model and acquire the information obtained from the output layer as the change/movement information of the target object. Furthermore, the server 10 may detect a change in the 2D/3D content multiplexed in the moving image with respect to the moving image or the magnitude of movement based on the sensor information acquired from the terminal apparatus 40.

The server 10 sets the PRPL requirement value in accordance with the magnitude/speed of the change in the moving image (step S1102). As described above, the description of the "PRPL requirement value" can be replaced with the "requirement information" or the "RPL requirement value". In a case where the magnitude/speed of the change in the moving image exceeds a first threshold, the server 10 sets the requirement value of the PRPL smaller than a predetermined threshold as the requirement value regarding the setup procedure. On the other hand, in a case where the magnitude/speed of the change in the moving image is a second threshold or less, the server 10 sets the requirement value of the PRPL larger than the predetermined threshold as the requirement value regarding the setup procedure.

The server 10 calculates a processing time $PT_{Server}$ for the resolution and/or codec determined as a setting candidate (step S605). The server 10 calculates the PRPL based on the specified PDB(for example, at least one of $PDB_{UL}$ and $PDB_{DL}$) and the calculated $PT_{Server}$ (step S606).

The server 10 determines whether the PRPL calculated in step S606 is the PRPL requirement value set in step S1102 or less (step S1103). In a case where the calculated PRPL is the requirement value set in step S1102 or less (step S1103: Yes), the server 10 sets the resolution and codec as the setting candidate as the resolution and codec to be used for generation of the XR media content (step S608). Note that the server 10 may set only one of the resolution and the codec. When the setup is completed, the server 10 ends the setup procedure.

On the other hand, when the calculated PRPL exceeds the requirement value set in step S1102 (step S1103: No), the server 10 lowers the resolution as a setting candidate by one step (step S609). Subsequently, the server 10 executes the processes of step S605 and subsequent steps again.

Through the above procedure, the server 10 can set an appropriate PRPL/RPL requirement value in accordance with the magnitude/speed of the change in the moving image, the change in the 2D/3D content multiplexed onto the moving image with respect to the moving image, or the magnitude of the movement. As a result, Motion to Photon Latency (MPL) necessary for satisfying Quality-of-Experience (QoE) of the user is achieved.

Furthermore, in step S1102, the server 10 may set the frame rate of the XR media in accordance with the setting of the PRPL requirement value. For example, in a case where the magnitude/speed of the change in the moving image is the second threshold or less, the frame rate is set to 60 fps; in a case where the magnitude/speed of the change in the moving image exceeds the first threshold, the frame rate is set to 90 fps or 120 fps. That is, the server 10 may dynamically change the frame rate in accordance with the magnitude/speed of the change in the moving image.

In addition, it is assumed that XR media content related to XR media includes moving image data in a GOP format. The Group Of Picture (GOP) is a group including a plurality of consecutive frames (I frame, P frame, and/or B frame). At this time, in step S609, the server 10 may change the frequency of the I frame in accordance with the magnitude/speed of the change in the moving image instead of lowering the resolution by one step.

The I frame is also referred to as a key frame. A complete moving image is reproduced only with the I frame data. The P frame includes prediction data of how the next frame changes from the previous frame. In addition to the P frames, information on the previous frame is referenced to reproduce one moving image. The B frame includes data predicted from previous and subsequent frames. In addition to the B frames, information on the previous and subsequent frames is referenced to reproduce one moving image. In this manner, by using the moving image data in the GOP format, the data amount of the moving image data can be reduced, that is, compressed. One GOP includes one I frame as a key frame.

In a case where the magnitude/speed of the change in the moving image is smaller than a predetermined standard value, the server 10 (for example, the 2D/3D media encoding unit 63 of the XR server 60) sets the transmission frequency of the I frame to be lower than the threshold and sets the transmission frequency of the P frame and/or the B frame to be higher than the threshold. In contrast, in a case where the magnitude/speed of the change in the moving image is larger than the predetermined standard value, the server 10 sets the transmission frequency of the I frame to be higher than the threshold, and sets the transmission frequency of the P frame and/or the B frame to be lower than the threshold.

The communication apparatus (for example, the server 10) assigns a higher priority to the data of the I frame than the data of the P frame and the B frame, and assigns the data of each frame of the GOP to a PDU of a PDU set having a different priority in accordance with the priority. The base station 30 assigns radio resources in accordance with the priority of the PDU set and transmits the PDU set to the terminal apparatus 40. That is, the base station 30 assigns radio resources preferentially to the PDU of the PDU set with high priority.

With the above procedure, the server 10 can preferentially send data with a high importance level in accordance with the magnitude/speed of change in the moving image. In addition, the above procedure makes it possible for the server 10 to reduce the transmission data.

<5-6. Fifth implementation example>

Next, a fifth implementation example will be described. In the fifth implementation example, control of an acquisition frequency of sensor information (that is, the sensor information transmission frequency by the terminal apparatus 40) will be described.

In the XR media delivery procedure, the server 10 acquires the sensor information from the terminal apparatus 40. The server 10 may control the acquisition frequency (that is, the transmission frequency of the sensor information by the terminal apparatus 40) of the sensor information. The sensor information transmission frequency control procedure will be described below.

FIG. 26 is a flowchart illustrating an example of a transmission frequency control procedure for sensor information. The transmission frequency control procedure is executed in the XR media delivery procedure.

As described above, in step S1102 illustrated in FIG. 25, the server 10 sets the Pose to Render to Photon Latency (PRPL) requirement value in accordance with the magnitude/speed of the change in the moving image. The server 10 acquires the PRPL requirement value that has been set in step S1102. (Step S1201 in FIG. 26). As described above, the description of "PRPL requirement value" can be replaced with "latency requirement information" or "RPL requirement value".

The server 10 determines whether the PRPL requirement value acquired in step S1201 is the first threshold or less, or less than the first threshold (step S1202). When the PRPL requirement value is the first threshold or less, or less than the first threshold (step S1202: Yes), the server 10 transmits a request for increasing the transmission frequency of the sensor information to the terminal apparatus 40 (step S1203). The server 10 may specifically indicate, to the terminal apparatus 40, the transmission frequency of the sensor information. When the transmission is completed, the server 10 ends the transmission frequency control procedure.

On the other hand, in step S1202, when the PRPL requirement value acquired in step S1201 is larger than the first threshold, or is the first threshold or more (step S1202: No), the server 10 determines whether the PRPL requirement value acquired in step S1201 is the second threshold or more, or exceeds the second threshold (step S1204). In a case where the PRPL requirement value is the second threshold or more, or exceeds the second threshold (step S1204: Yes), a request for decreasing the transmission frequency of the sensor information is transmitted to the terminal apparatus 40 (step S1205). The server 10 may specifically indicate, to the terminal apparatus 40, the transmission frequency of the sensor information. When the transmission is completed, the server 10 ends the transmission frequency control procedure.

In contrast, when the PRPL requirement value is less than the second threshold, or the second threshold or less (step S1204: No), the server 10 ends the transmission frequency control procedure.

Here, the transmission frequency of the sensor information does not necessarily match the detection frequency of the sensor information of the sensor unit 46. For example, the transmission frequency of the sensor information to the server 10 may depend on the requirements for the PRPL/RPL, and the detection frequency of the sensor information in the sensor unit 46 may depend on the requirements for the Motion to Photon Latency (MPL). As described above, in order to provide the QoE necessary for the user in the service for the XR application, the Motion to Photon Latency (MPL) of 20 ms or less is required. Further, PRPL/RPL of, for example, about 50 ms to 200 ms is required in accordance with the type of XR application or XR media content to be handled. That is, the transmission frequency of the sensor information can be set to be lower than the detection frequency of the sensor information.

The server 10 may change the information regarding the traffic pattern of the uplink data flow in accordance with the transmission frequency increase request in step S1203. Subsequently, the server 10 may request the TSC Assistance Container change from the TSCTSF 551 via the AF 548 by using a service provided by the NEF 542, for example, the Nnef_AFsessionWithQoS_Update service.

Furthermore, the server 10 may request setting or updating of a Configured Grant (CG) having a periodicity corresponding to the transmission frequency regarding the increase request in accordance with the transmission frequency increase request in step S1203. At this time, the above periodicity may be a periodicity corresponding to a transmission frequency requested by the server 10 to the core network CN via the AF 548. For example, the changed TSC Assistance Container includes an indication of a request for setting or updating the CG having a periodicity corresponding to the transmission frequency regarding the increase request.

Furthermore, the server 10 may request setting or updating of the CG having a periodicity corresponding to the transmission frequency regarding the decrease request in accordance with the transmission frequency decrease request in step S1205. At this time, the above periodicity may be a periodicity corresponding to a transmission frequency requested by the server 10 to the core network CN via the AF 548. For example, the changed TSC Assistance Container includes an indication of a request for setting or updating the CG having a periodicity corresponding to the transmission frequency regarding the decrease request.

The server 10 can request setting or updating of the CG via policy control. For example, the server 10 requests the PCF 545 to create a policy for setting or updating the CG in accordance with the periodicity of the uplink data burst included in the TSC Assistance Information. At that time, the server 10 can use, via the AF 548, a service provided by the NEF 542 for launching the Npcf_UEPolicyControl_Create/Update service provided by the PCF 545.

Having received a request for setting or updating the CG from the AF 548, the core network CN indicates, to the base station 30, setup or update of the CG for the QoS flow (uplink QoS flow) assigned for transmission of the sensor information.

The base station 30 acquires information regarding the periodicity of the CG included in the indication to set or update the CG. Alternatively, the base station 30 acquires information regarding the periodicity of the CG from the TSC Assistance Information. Subsequently, the base station 30 assigns the CG of the periodicity to the terminal apparatus 40 being the XR device. The terminal apparatus 40 periodically transmits the sensor information to the server 10 using the CG assigned by the base station 30.

Furthermore, the base station 30 may set Discontinuous Transmission (DTX) in the terminal apparatus 40 in accordance with the periodicity of the CG. The base station 30 sets a duration including a resource in which the CG is set as an active duration and sets other durations as an inactive duration. That is, as the transmission frequency of the sensor information decreases, the inactive duration of DTX becomes longer. The server 10 may request the core network CN to set or update the DTX in addition to the setting or update of the CG. For example, the changed TSC Assistance Container includes an indication of a request for DTX setting or update according to the CG setting or update.

The server 10 can request configuration or updating of DTX via policy control. For example, the server 10 requests the PCF 545 to create a policy for setting or updating the DTX in accordance with the setting or update of the CG. At that time, the server 10 may use, via the AF 548, a service provided by the NEF 542 for launching the Npcf_UEPolicyControl_Create/Update service provided by the PCF 545.

Furthermore, in a case where the CG is not set, the base station 30 may set the DTX in the terminal apparatus 40 based on the TSC Assistance Information for the uplink QoS flow. The base station 30 may set DTX corresponding to a periodicity included in the TSC Assistance Information. With this configuration, the base station 30 can set the active duration of DTX based on the Survival Time included in the TSC Assistance Information.

The base station 30 assigns a resource to the terminal apparatus 40 so that packets of all PDUs included in each data burst can be transmitted within a duration of each data burst of the QoS flow.

The base station 30 sets DTX such that the duration of each data burst is included in the active duration. With this configuration, the base station 30 sets a duration other than the duration of each data burst as an inactive duration.

With the above procedure, the server 10 can acquire the sensor information at an appropriate frequency by controlling the transmission frequency of the sensor information in accordance with the magnitude/speed of the change in the moving image or the magnitude of the change or movement of the 2D/3D content multiplexed in the moving image with respect to the moving image. Furthermore, the server 10 can improve reliability in acquisition of the sensor information by assigning the CG having a periodicity corresponding to the transmission frequency. Furthermore, the server 10 can achieve low power consumption by controlling the inactive duration of DTX set in the terminal apparatus 40 in accordance with the control of the transmission frequency of the sensor information.

<5-7. Sixth implementation example>

Next, a sixth implementation example will be described. The sixth implementation example will describe the control of sensor information update frequency (transmission frequency) and XR media content update frequency (reception frequency).

As described above, the transmission frequency of the sensor information to the server 10 depends on the requirement for the Pose to Render to Photon Latency (PRPL)/Render to Photon Latency (RPL), and the detection frequency of the sensor information in the sensor unit 46 depends on the requirement for the Motion to Photon Latency (MPL). Furthermore, the frame rate of XR media on the display unit 451 of the terminal apparatus 40 depends on the requirement for the Motion to Photon Latency (MPL). Therefore, for example, a frame rate of 60 frames per second (fps) is used for the requirement for the Motion to Photon Latency (MPL) of 20 ms or less. In the case of 60 fps, the time per frame is 16.7 ms (=1000 ms/60). The description of "PRPL" appearing in the present implementation example can be replaced with "RPL".

FIG. 27 is a diagram illustrating an example of a timing chart related to control for XR media display in the terminal apparatus 40. The server 10 makes a decision related to the update frequency of the XR media content to the terminal apparatus 40 based on the requirement for the PRPL. For example, if the requirement for the PRPL is 75 ms, a delay of four times the case of 60 fps (=16.67×4=66.67 ms) is accepted. In this case, server 10 sets the update frequency of the XR media content to terminal apparatus 40 to the periodicity being four times the case of 60 fps (=16.67×4=66.67 ms). Furthermore, the server 10 makes a decision related to the transmission frequency of the sensor information from the terminal apparatus 40 to the server 10 based on the requirement for the PRPL. For example, server 10 sets the transmission frequency of the sensor information from terminal apparatus 40 to server 10 to the same periodicity (four times the case of 60 fps) as the update frequency of the XR media content to terminal apparatus 40.

Here, as a request to the terminal apparatus 40, server 10 may notify the terminal apparatus 40 of the information on the update frequency (third periodicity) of the XR media content and the information on the transmission frequency (second periodicity) of the sensor information via AF 548. The server 10 may also notify the terminal apparatus 40 of information on the detection frequency (first periodicity) of the sensor information by the terminal apparatus 40.

In accordance with the request to the MPL, the terminal apparatus 40 sets the detection frequency of the sensor information in the sensor unit 46 to a periodicity that is equal to or less than the frame periodicity (for example, 16.67 ms) of the XR media in the display unit 451. For example, the terminal apparatus 40 may set the detection frequency of the sensor information in the sensor unit 46 to the same frequency (for example, 60 fps) as the frame rate of the XR media in the display unit 451. Note that the terminal apparatus 40 may set the detection frequency (first periodicity) of the sensor information in accordance with a request (notification) from the server 10 via the AF 548. At this time, the server 10 may decide the detection frequency (first periodicity) of the sensor information based on the frame periodicity information. Note that the terminal apparatus 40 may dynamically control the frame rate of the XR media. For example, the terminal apparatus 40 may control the detection frequency of the sensor information in the sensor unit 46 in accordance with the frame rate of the XR media.

The sensor unit 46 of the terminal apparatus 40 detects sensor information #1 at sensing timing #1. In addition, terminal apparatus 40 receives XR media content #1 from the server 10 at XR media content reception timing #1.

The terminal apparatus 40 (for example, the XR display region rendering unit 76 of the XR device 70) performs a display (rendering) procedure using Timewarp on the detected sensor information #1 and the received XR media content #1. Subsequently, the terminal apparatus 40 displays the image subjected to the rendering procedure, at the frame timing #1 of the XR media on the display unit 451.

Note that, in a case where the update frequency (third periodicity) of the XR media content is greater than the frame periodicity of the XR media content, the server 10 may notify the terminal apparatus 40 of an indication to generate a frame image for interpolating the XR media content at a predetermined timing of the frame periodicity.

At this time, the terminal apparatus 40 performs display (rendering) processing using Timewarp based on the detected sensor information #2 and the received XR media content #1. Subsequently, the terminal apparatus 40 displays the image subjected to the rendering procedure, at the frame timing #2 of the XR media on the display unit 451. That is, the terminal apparatus 40 interpolates the image to be displayed at the frame timing #2 by a display procedure using the Timewarp.

Similarly, the terminal apparatus 40 performs display (rendering) processing using Timewarp based on the detected sensor information #3 and #4 and the received XR media content #1. Subsequently, the terminal apparatus 40 displays the image subjected to the rendering procedure, at the frame timings #3 and #4 of the XR media on the display unit 451. That is, the terminal apparatus 40 interpolates the images to be displayed at the frame timings #3 and #4 by the display procedure using the Timewarp.

Needless to say, the terminal apparatus 40 may also interpolate the XR media content even in a case where there is no indication from the server 10.

Next, the sensor unit 46 of the terminal apparatus 40 detects sensor information #5 at sensing timing #5. Subsequently, the terminal apparatus 40 receives XR media content #2 from the server 10 at XR media content reception timing #2.

The terminal apparatus 40 (for example, the XR display region rendering unit 76 of the XR device 70) performs a display (rendering) procedure using Timewarp based on the detected sensor information #5 and the received XR media content #2. Subsequently, the terminal apparatus 40 displays the image subjected to the rendering procedure, at the frame timing #5 of the XR media on the display unit 451.

Here, the server 10 requests the TSCTSF 551 to generate the TSC Assistance Container by using a service provided by the NEF 542, for example, the Nnef_AFsessionWithQoS_Create service. At this time, the server 10 may use the Nnef_AFsessionWithQoS_Create service via the AF 548.

The TSCTSF 551 generates a TSC Assistance Container (hereinafter, also referred to as an uplink TSC Assistance Container) for the uplink QoS flow. At this time, the TSCTSF 551 generates an uplink TSC Assistance Container having a transmission frequency of the sensor information to the server 10 as a periodicity.

The TSCTSF 551 generates a TSC Assistance Container for downlink QoS flow (hereinafter, also referred to as a downlink TSC Assistance Container). At this time, the TSCTSF 551 generates the downlink TSC Assistance Container having the update frequency of the XR media content to the terminal apparatus 40 as the periodicity.

In addition, the SMF 546 updates the TSC Assistance Information for the target QoS flow by utilizing a Burst Arrival Time (BAT) offset sent as feedback from the base station 30.

As described above, the terminal apparatus 40 may control the detection frequency of the sensor information in accordance with the frame rate of the XR media. In this case, the communication apparatus may include, in the request, an indication to set the TSC Assistance Information for the QoS flow (uplink QoS flow) for transmission of the sensor information in accordance with the TSC Assistance Information for the QoS flow (downlink QoS flow) for updating the XR media content. For example, when updating the Burst Arrival Time of the TSC Assistance Information for the target downlink QoS flow by utilizing the BAT offset sent as feedback from the base station 30, the communication apparatus also updates the Burst Arrival Time of the TSC Assistance Information for the QoS flow for transmission of the sensor information (uplink QoS flow).

Furthermore, the server 10 may request the core network CN via the AF 548 to set or update the CG for the QoS flow (uplink QoS flow) assigned for transmission of the sensor information. For example, the updated TSC Assistance Information includes an indication of a request for setting or updating the CG in accordance with the updated Burst Arrival Time for the uplink QoS flow.

The server 10 can request setting or updating of the CG via policy control. For example, the PCF 545 is requested to create a policy for setting or updating the CG in accordance with the information (Burst Arrival Time and periodicity) regarding the uplink data burst included in the TSC Assistance Information. At that time, the server 10 can request the setting or update of the CG via the AF 548 using the service provided by the NEF 542 for launching the Npcf_UEPolicyControl_Create/Update service provided by the PCF 545.

Having received a request for setting or updating the CG from the AF 548, the core network CN indicates, to the base station 30, setup or update of the CG for the QoS flow (uplink QoS flow) assigned for transmitting the sensor information.

The base station 30 acquires information regarding the periodicity of the CG included in the indication to set or update the CG or information regarding the periodicity included in the TSC Assistance Information for the uplink QoS flow. Subsequently, the base station 30 assigns the CG of the periodicity to the terminal apparatus 40 being the XR device. Furthermore, the base station 30 may set the position of the head radio resource of the CG to be assigned in accordance with the Burst Arrival Time included in the TSC Assistance Information. In addition, for example, when the Burst Arrival Time of the TSC Assistance Information has been updated in accordance with the BAT offset sent as feedback from the base station 30, the base station 30 reconfigures the position of the head radio resource of the CG in accordance with the updated Burst Arrival Time.

Furthermore, the server 10 may request the core network CN via the AF 548 to set or update Configured Scheduling (CS) for the QoS flow (downlink QoS flow) assigned to the terminal apparatus 40 to receive the XR media content. This CS is also referred to as Semi-Persistent Scheduling (SPS). For example, the TSC Assistance Information includes an indication of a request to set or update the CS corresponding to the information (Burst Arrival Time and periodicity) regarding the data burst for the downlink QoS flow.

The server 10 can request setting or updating of the CS via policy control. For example, the PCF 545 is requested to create a policy for setting or updating the CS in accordance with the information (Burst Arrival Time and periodicity) regarding the downlink data burst included in the TSC Assistance Information. At that time, the server 10 can request the configuration or update of the CS via the AF 548 by using the service provided by the NEF 542 for launching the Npcf_UEPolicyControl_Create/Update service provided by the PCF 545.

Having received a request for setting or updating the CS from the AF 548, the core network CN indicates, to the base station 30, setting or update of the CS for the QoS flow (downlink QoS flow) assigned for the terminal apparatus 40 to receive the XR media content.

The base station 30 acquires information regarding the periodicity of the CS included in the indication to set or update the CS or information regarding the periodicity included in the TSC Assistance Information for the downlink QoS flow. Subsequently, in order to receive a part or all of the data flows of the QoS flow of the target terminal apparatus 40, the base station 30 assigns the CS of the periodicity to the QoS flow. Furthermore, the base station 30 may set the position of the head radio resource of the CS to be assigned in accordance with the Burst Arrival Time included in the TSC Assistance Information. In addition, for example, when the Burst Arrival Time of the TSC Assistance Information has been updated in accordance with the BAT offset sent as feedback from the base station 30, the base station 30 reconfigures the position of the head radio resource of the CS in accordance with the updated Burst Arrival Time.

Furthermore, as described above, in a case where the frame periodicity of the XR media is not an integral multiple of the minimum unit of radio resource assigned by the base station 30, a cumulative error occurs between the CG that is set in accordance with the frame periodicity and the transmission timing of uplink traffic including tracking and sensor information.

The terminal apparatus 40 may measure the cumulative error and notify the base station 30 of an indication to change the CG timing in a case where the cumulative error exceeds a preset threshold. The indication to change the timing of the CG may be notified to the base station 30 via Radio Resource Control (RRC) signaling, and an offset value for compensating for the cumulative error may be included in the indication.

Having received the offset value for compensating for the cumulative error from the terminal apparatus 40, the base station 30 reconfigures the radio resources to which the CG is assigned for compensating for the cumulative error.

Similarly, regarding the CS set in accordance with the frame periodicity, the terminal apparatus 40 may measure the cumulative error in the downlink and notify the base station 30 of an indication to change the timing of the CS in a case where the cumulative error exceeds a preset threshold.

With the above control, server 10 can set the update frequency (transmission frequency) of the sensor information and the update frequency (reception frequency) of the XR media content to a periodicity different from the frame periodicity of the XR media on the display unit 451. In a case where the requirement for the PRPL can be relaxed in accordance with the type of the XR application and/or the XR media content to be handled, the server 10 may decrease the update frequency (transmission frequency) of the sensor information and/or the update frequency (reception frequency) of the XR media content. For example, server 10 may set the update frequency (transmission frequency) of the sensor information and/or the update frequency (reception frequency) of the XR media content to be lower than a predetermined threshold. This makes it possible to reduce power consumption of the terminal apparatus 40.

Furthermore, the server 10 may request another network apparatus (for example, the base station 30/core network CN) to set Discontinuous Transmission (DTX) in the terminal apparatus 40. At this time, the server 10 may request another network apparatus to set a Configured Grant (CG) of a second periodicity for the QoS flow assigned for transmission of the sensor information.

The base station 30 may set DTX in the terminal apparatus 40 in accordance with a request from the server 10 via the AF 548. The base station 30 may set a duration including a resource in which the CG is set as an active duration and may set other periods as inactive durations. The server 10 may control the inactive duration of DTX in accordance with the transmission frequency (second periodicity) of the sensor information. For example, in a case where the transmission frequency of the sensor information can be made lower than a predetermined threshold, the inactive duration of DTX can be set to be longer than the predetermined threshold. This achieves further reduction in power consumption.

When the position of the head radio resource of the CG is reconfigured in accordance with the update of the Burst Arrival Time included in the TSC Assistance Information for the uplink QoS flow, the base station 30 may reconfigure the active duration of the DTX so as to include the reconfigured resource of the CG.

Furthermore, in a case where the CG is not set, the base station 30 may set the DTX in the terminal apparatus 40 based on the TSC Assistance Information for the uplink QoS flow. The base station 30 may set DTX corresponding to a periodicity included in the TSC Assistance Information. The base station 30 may set an active duration of the DTX based on the Survival Time included in the TSC Assistance Information.

The base station 30 may acquire the information on the Packet Delay Variation for the uplink QoS flow from the PCF 545. Subsequently, the base station 30 may set the active duration of the DTX based on the acquired information. Alternatively, the base station 30 may acquire the jitter information for the uplink QoS flow from the SMF 546 as a result of the Traffic Parameter Measurements. Subsequently, the base station 30 may set the active duration of the DTX based on the acquired information. Here, the setting of the active duration of DTX based on the acquired information is executed, for example, by changing the periodicity of DTX or adding a positive or negative offset to the start timing of the active duration of the DTX so as to correct the acquired Packet Delay Variation or jitter.

Furthermore, the server 10 may request another network apparatus (for example, the base station 30/core network CN) to set Discontinuous Reception (DRX) in the terminal apparatus 40. At this time, the base station 30 may set Discontinuous Reception (DRX) in the terminal apparatus 40 in accordance with a request from the server 10 via the AF 548. At this time, the server 10 may request another network apparatus to set Configured Scheduling (CS) of the third periodicity for the QoS flow assigned to receive the XR media content.

The base station 30 may set DRX in the terminal apparatus 40 based on the TSC Assistance Information for the downlink QoS flow. The base station 30 may set DRX corresponding to a periodicity included in the TSC Assistance Information. Furthermore, the base station 30 may set the active duration of DRX based on the Survival Time included in the TSC Assistance Information. Furthermore, the base station 30 may set the start timing of the active duration of DRX based on the Burst Arrival Time.

In addition, here is an assumable case where the base station 30 has received TSC Assistance Information in which the Burst Arrival Time is updated in accordance with the BAToffset as described in the first implementation example, for example. In this case, the base station 30 may change the setting of the active duration of DRX based on the changed Burst Arrival Time.

The base station 30 may acquire the Packet Delay Variation for the downlink QoS flow from the PCF 545. Subsequently, the base station 30 may set the active duration of the DRX based on the acquired information. Alternatively, the base station 30 may acquire the jitter information for the downlink QoS flow from the SMF 546 as a result of the Traffic Parameter Measurements. Subsequently, the base station 30 may set the active duration of the DRX based on the acquired information. Here, the setting of the active duration of DRX based on the acquired information is executed by changing the periodicity of DRX or adding a positive or negative offset to the start timing of the active duration of the DRX so as to correct the acquired Packet Delay Variation or jitter.

The base station 30 assigns a resource to the terminal apparatus 40 so as to enable transmission of packets of all PDUs included in each data burst within a duration of each data burst of the QoS flow.

The base station 30 sets DRX so that the duration of each data burst is included in the active duration. Subsequently, the base station 30 sets a duration other than the duration of each data burst as an inactive duration.

In a case where the CS has been set in order to transmit packets of some or all PDUs included in each data burst, the base station 30 sets a duration including a resource in which the CS has been set as the active duration. Subsequently, the base station 30 sets the other periods as inactive durations. The server 10 may control the inactive duration of DRX in accordance with the reception frequency (third periodicity) of the XR media content. For example, in a case where the reception frequency of the XR media content can be made lower than a predetermined threshold, the inactive duration of DRX can be set to be longer than the predetermined threshold. This achieves further reduction in power consumption.

In addition, as described above, in a case where the position of the head radio resource of the CS is reconfigured in accordance with the updated Burst Arrival Time, the base station 30 may reconfigure DRX such that the duration including the reconfigured resource of the CS is included in the active duration.

The server 10 may request the base station 30 to set DTX and DRX of the same periodicity in the terminal apparatus 40. Alternatively, the server 10 may request the base station 30 to independently set DTX and DRX of different periodicities in the terminal apparatus 40.

In addition, when requesting the base station 30 to set DTX and DRX of the same periodicity, the server 10 may provide the information on the offset duration between DTX and DRX to the base station 30/terminal apparatus 40.

At this time, the server 10 may set this offset duration in consideration of a Packet Delay Budget (PDB) assigned to the uplink QoS flow. In addition, the server 10 may set this offset duration in consideration of the PDB assigned to the downlink QoS flow. Alternatively, the server 10 may set this offset duration in consideration of the measurement result of the packet delay of the uplink QoS flow. In addition, the server 10 may set this offset duration in consideration of the measurement result of the packet delay of the downlink QoS flow. In addition, the server 10 may set this offset duration in accordance with the RPL.

That is, the server 10 may change this offset duration in accordance with the PDB assigned to the uplink QoS flow, the PDB assigned to the downlink QoS flow, the measurement result of the packet delay of the uplink QoS flow, the measurement result of the packet delay of the downlink QoS flow, or the change in the RPL.

In addition, here is an assumable case where the base station 30 has received a notification of End PDU of the PDU set included in the PDU set information. In this case, the base station 30 may transmit the notification of End PDU of the PDU set to the terminal apparatus 40 by using Downlink Control Information (DCI). Having received the notification of the End PDU of the PDU set, the terminal apparatus 40 may transition to the inactive duration in preference to the control of DRX. This control may be effective from the next DRX active duration to the timing of transition to the inactive duration. In this case, the terminal apparatus 40 may enter the active state at the timing of transition from the inactive duration to the active duration of the next DRX.

Alternatively, the base station 30 may transmit an early transition indication of DRX to the terminal apparatus 40 instead of the notification of End PDU of the PDU set by using the DCI. Having received the early transition indication of DRX, the terminal apparatus 40 may transition to the inactive duration prior to the timing of transition from the active duration to the inactive duration under the control of DRX.

In addition, as described in the above implementation example, the base station 30 may assign the radio resources only to the PDUs of X%(for example, 75%) of the PDU set among all the PDUs of the PDU set in accordance with the PDU Set Integrated Handling Information. When discarding the remaining PDUs, the base station 30 may transmit the early transition indication of DRX to the terminal apparatus 40 after transmitting all the PDUs to which the radio resources have been assigned.

With this control, the terminal apparatus 40 enables further low power consumption operation in accordance with the reception status of the burst data or the PDU set.

<5-8. Seventh implementation example>

Next, an XR media delivery procedure of the seventh implementation example will be described. As described above, the XR media delivery procedure is divided into a session establishment procedure and a setup procedure. The session establishment procedure is the same as the session establishment procedure according to the first implementation example, and thus, the description thereof will be omitted. Hereinafter, a setup procedure according to the seventh implementation example will be described.

FIG. 28 is a flowchart illustrating an example of a setup procedure according to the seventh implementation example. The setup procedure according to the seventh implementation example will be described below with reference to the flowchart of FIG. 28.

The server 10 requests another network apparatus (for example, the core network CN) via the AF 548 to set QoS monitoring including uplink (UL) and downlink (DL) packet delay measurements (step S1301). The server 10 receives a report including the UL and DL packet delay measurement result of the from another network apparatus (step S1302).

The server 10 increases the resolution by one step (step S1303). Subsequently, the server 10 calculates processing time $PT_{Server}$ for the resolution and/or codec to be setting candidates (step S1304).

Server 10 calculates Pose to Render to Photon Latency (PRPL) based on the measurement result of the UL packet delay, the measurement result of the DL packet delay, and calculated $PT_{Server}$ (step S1305). The description of "PRPL" appearing in the present implementation example can be replaced with "RPL".

The server 10 determines whether the calculated PRPL is a requirement value for the XR application or less (step S1306). When the calculated PRPL is the requirement value for the XR application or less (step S1306: Yes), the server 10 executes the procedure of step S1303 and subsequent steps again.

In contrast, when the calculated PRPL exceeds the requirement value for the XR application (step S1306: No), the server 10 decreases the resolution by one step (step S1307). Subsequently, the server 10 sets the resolution and codec to be the setting candidate as the resolution and codec to be used for generating the XR media content (step S1308). Note that the server 10 may set only one of the resolution and the codec. When the setup is completed, the server 10 ends the setup procedure.

Note that the UL and DL packet delay measurement results acquired in step S1302 may be measurement results of Round Trip (RT) packet delays. In step S1305, the server 10 may calculate the PRPL based on the packet delay of RT and the calculated $PT_{Server}$.

In the present implementation example, the resolution is set according to the actual UL and DL packet delays with respect to the resolution that has been set based on the $PDB_{UL}$ and the $PDB_{DL}$ which are the upper limits of the UL and DL packet delays illustrated in FIG. 17. This makes it possible to generate XR media with dynamically optimal resolution.

Note that an alternative method to step S609 described above can also be applied to step S1307.

<5-9. Eighth implementation example>

Next, an XR media delivery procedure according to an eighth implementation example will be described. The eighth implementation example will describe switching of a method of setting the resolution and/or codec at the time of handover.

When the base station 30 that provides the uplink and downlink QoS flows to the terminal apparatus 40 is switched by handover, there is a concern that discontinuity occurs in the packet delay. There is a possibility that a discontinuity occurs in calculated Pose to Render to Photon Latency (PRPL). Accordingly, the server 10 avoids the discontinuity of the PRPL before and after the base station 30 is switched by using a switching procedure described below.

FIG. 29 is a flowchart illustrating a setup procedure according to the eighth implementation example. The setup procedure according to the eighth implementation example will be described below with reference to the flowchart of FIG. 29.

The server 10 detects a start of a handover procedure for the terminal apparatus 40 (step S1401). At this time, the server 10 may detect the start of the handover procedure when a notification related to the handover procedure is received from the core network CN. Here, the notification related to the handover procedure is, for example, a notification from the core network CN that the terminal apparatus 40 has started a measurement report on an event triggered basis.

Having detected the start of the handover procedure, the server 10 switches the setting method of the resolution and/or codec related to the generation of the XR media content from the method of using the measurement result of the packet delay (hereinafter, referred to as a first method) to the method of using Packet Delay Budget (PDB) (hereinafter, referred to as a second method) (step S1402). Here, the first setting method is, for example, the method described with reference to FIG. 28. The second setting method is, for example, the method described with reference to FIGS. 17, 20, 22, 23, or 25.

The server 10 sets the resolution and the codec in accordance with the calculated PRPL and $MDBV_{DL}$ in accordance with the method using the PDB (second method) (step S1403). Note that the server 10 may set only one of the resolution and the codec. The description of "PRPL" appearing in the present implementation example can be replaced with "RPL".

Having detected that the handover procedure on the terminal apparatus 40 has ended (step S1404), the server 10 switches the setting method of the resolution and/or codec related to the generation of the XR media content from the method using the PDB (second method) to the method using the measurement result of the packet delay (first method) (step S1405). Thereafter, the server 10 sets the resolution and/or the codec in accordance with the first setting method until the next handover procedure. When the switching is completed, the server 10 ends the setup procedure.

With the above control, the server 10 can switch the method of calculating the PRPL to the method of calculating the PRPL using the PDB being the upper limit of the packet delay before the base station 30 is switched by the handover. As a result, the discontinuity of the PRPL before and after the base station 30 is switched can be avoided, making it possible for the server 10 to set an appropriate resolution and/or codec as the resolution and/or codec related to the generation of the XR media content.

<5-10. Ninth implementation example>

Next, an XR media delivery procedure of the ninth implementation example will be described. The ninth implementation example will describe a setup procedure of resolution and/or codec at the time of handover.

When a current source base station 30 providing uplink and downlink QoS flows to the terminal apparatus 40 is switched to a target base station 30, the target base station 30 may not be able to provide the same QoS flow as the source base station 30. For example, if the source base station 30 supports an edge server, whereas the target base station 30 does not support an edge server, it is difficult for the target base station 30 to provide the same QoS flow as the source base station 30. In this case, there is a possibility that a visual discontinuity occurs in a moving image displayed on the terminal apparatus 40 before and after the base station 30 is switched. Accordingly, the server 10 reduces the visual discontinuity of the moving image before and after the base station 30 is switched by using a switching procedure described below.

FIG. 30 is a flowchart illustrating a setup procedure according to the ninth implementation example. The setup procedure according to the ninth implementation example will be described below with reference to the flowchart of FIG. 30.

Having detected the start of a handover procedure for the terminal apparatus 40 which is the terminal apparatus 40 (step S1501), the server 10 switches from the method of using the measurement result of the packet delay (hereinafter, referred to as a first method) to the method of using Packet Delay Budget (PDB) (hereinafter, referred to as a second method) (step S1502). Here, the first setting method is, for example, the method described with reference to FIG. 28. The second setting method is, for example, the method described with reference to FIGS. 17, 20, 22, 23, or 25.

The server 10 acquires a Maximum Data Burst Volume (MDBV) and/or a PDB of the QoS flow at the handover destination to be provided to the terminal apparatus 40 (step S1503).

The server 10 calculates the upper limit value of the PRPL based on the PBD of the current QoS flow (hereinafter, referred to as a first PDB) and the PBD of the handover destination QoS flow (hereinafter, referred to as a second PDB) (step S1504). At this time, the server 10 may use a PDB having a larger delay between the first PBD and the second PBD to calculate the upper limit value of the PRPL. The description of "PRPL" appearing in the present implementation example can be replaced with "RPL".

The server 10 specifies the smaller MDBV of the first MDBV and the second MDBV (step S1505).

The server 10 sets the resolution and/or codec in accordance with the calculated upper limit value of PRPL and the specified MDBV (step S1506).

With the above control, before the base station is switched by handover, the terminal apparatus 40 acquires the Maximum Data Burst Volume and the PDB of the QoS flow provided by the target base station to the terminal apparatus 40, and the server 10 sets the resolution and the codec based on the larger PDB and the smaller Maximum Data Burst Volume, so that it can be expected to reduce the visual discontinuity of the moving image displayed before and after the base station is switched.

## <<6. Modification>>

The above-described embodiment is an example, and various modifications and applications are possible.

### <6-1. Modification related to delivery of XR media content>

The above-described embodiment has described an example of delivering one moving image as an example of XR media content delivery. However, the present embodiment is not limited thereto. For example, in a case where the terminal apparatus 40 is a glass-type wearable device, the server 10 may deliver two different moving images for the left and right eyes. Here, the server 10 may handle the two different moving images as synchronized moving images.

At this time, the core network CN may discern whether the terminal apparatus 40 has capability of receiving two synchronized moving images in the XR media content delivery service based on the UE Radio Capability ID held by the UCMF 550.

The PCF 545 may hold a PCC rule for receiving two synchronized moving images. In addition, the PCF 545 may apply this PCC rule to a PDU session established for a device having a capability of receiving two synchronized moving images. In this PCC rule, a TSC QoS flow is assigned to an established PDU session. Subsequently, in this PCC rule, at least two PDU sets are set for one data burst in order to transmit data of two synchronized moving images. A packet of frame image data for the left eye may be assigned to each PDU of one PDU set. A packet of frame image data for the right eye may be assigned to each PDU of the other PDU set.

The server 10 may have a function of separating left-eye frame image data and right-eye frame image data into three moving image data, namely, the same moving image data between the left-eye frame image data and the right-eye frame image data (hereinafter, referred to as first moving image data), difference data between the first moving image data and the left-eye frame image data (hereinafter, referred to as second moving image data), and difference data between the first moving image data and the right-eye frame image data (hereinafter, referred to as third moving image data). In this case, the PCF 545 may hold a PCC rule for receiving three synchronized moving image data.

The server 10 may request the setup of three PDU sets for one data burst from the core network CN via the AF 548 to transmit three pieces of synchronized moving image data. In addition, the server 10 may assign the first moving image data to the PDU of the first PDU set, the second moving image data to the PDU of the second PDU set, and the third moving image data to the PDU of the third PDU set, and may transmit the data in a same data burst. This reduces the data amount of the frame image to be transmitted.

The server 10 may request setup of the three PDU sets for one TSC QoS flow. In addition, the server 10 may request setup of each PDU set for each of three TSC QoS flows in which TSC Assistance Information including the same parameter is set.

In a case where each frame image is divided into a plurality of images having different priorities, the server 10 may assign, in accordance with the priority of the image, different priorities to the PDUs in each PDU set that is set for the plurality of PDUs constituting one data burst. The server 10 may assign PDUs of different priorities to the packets of the data of the divided frame image in accordance with the priority of the image.

Alternatively, when each frame image is divided into a plurality of images having different priorities, the server 10 may set a plurality of PDU sets instead of setting one PDU set for a plurality of PDUs constituting one data burst. Subsequently, the server 10 may assign different priorities to the plurality of PDU sets in accordance with the priority of the image. For example, the server 10 may assign packets of divided frame images to PDUs of PDU sets of different priorities in accordance with the priorities of the images.

Here, various procedures described in the above-described implementation examples can also be applied to transmission of data of two synchronized moving images.

<6-2. Modification related to system configuration/device configuration>

The server 10 need not necessarily be formed with one information processing apparatus. The server 10 may be formed with a plurality of information processing apparatuses. A part or all of the procedures in the server 10 may be distributed to a plurality of apparatuses including a cloud server, an application server, and an edge server.

Some procedures in the server 10 may be implemented in an Edge Application Server. In this case, the Edge Application Server may be connected to a session including a cloud server or an application server via a Local PDU Session Anchor (L-PSA) UPF 520 in a connection form of Session Breakout.

When all procedures of the server 10 are implemented in the Edge Application Server, the Edge Application Server may be connected to the session via the L-PSA UPF 520 in a connection form of a Distributed Anchor Point.

For example, the SMF 546 may launch a procedure of implementing a part or all of the procedures performed by the server 10 in an Edge Application Server in accordance with a request from the AF 548. Alternatively, a procedure of implementing a part or all of the process of the server 10 in the Edge Application Server may be launched in accordance with the information identifying the network slice included in the PDU session establishment request. In this case, for example, the SMF 546 may acquire, from the PCF 545, a policy corresponding to the information identifying the network slice. Subsequently, the SMF 546 may launch a procedure of implementing a part or all of the procedure of the server 10 in the Edge Application Server in accordance with the acquired policy.

Note that when the 5QI of the QoS flow assigned to the PDU session to be established is a specific 5QI, the apparatus that processes the acquired policy may indicate implementation of a part or all of the procedures of the server 10 onto the Edge Application Server.

When having judged that the 5QI CN PDB assigned to the PDU session is not satisfied, the SMF 546 may launch a procedure of implementing a part or all of the procedures of the server 10 in the Edge Application Server. In this case, the SMF 546 may acquire, from the base station 30, a report that the CN PDB is not satisfied. Alternatively, the SMF 546 may sense, via QoS monitoring, that the CN PDB is not satisfied.

The SMF 546 may specify the UPF 520 serving as the L-PSA and the Edge Application Server based on the location information of the terminal apparatus 40 and/or the base station 30. Alternatively, the L-PSA UPF 520 and the Edge Application Server corresponding to the base station 30 may be preset in the core network CN.

Here, the SMF 546 may identify the connection between the L-PSA UPF 520 and the Edge Application Server by Data Network Access Identifier (DNAI). Note that one or more DNAIs may be set for a combination of an application or DNN and S-NSSAI.

The SMF 546 may select one DNAI based on the information regarding the position of the terminal apparatus 40 or the information identifying the base station 30 to which the terminal apparatus 40 is connected. The SMF 546 may specify a connection between the L-PSA UPF 520 and the Edge Application Server corresponding to the selected DNAI.

<6-3. Other modifications>

The control apparatus that controls the server 10, the management apparatus 20, the base station 30, or the terminal apparatus 40 of the present embodiment may be implemented by a dedicated computer system or by a general-purpose computer system.

For example, a program for executing the above-described operations is stored in a computer-readable recording medium such as an optical disk, semiconductor memory, a magnetic tape, or a flexible disk and distributed. For example, the program is installed on a computer and the above procedure is executed to achieve the configuration of the control apparatus. At this time, the control apparatus may be an apparatus (for example, a personal computer) external to the server 10, the management apparatus 20, the base station 30, or the terminal apparatus 40. Furthermore, the control apparatus may be an apparatus (for example, the control unit 13, the control unit 23, the control unit 33, or the control unit 43) inside the server 10, the management apparatus 20, the base station 30, or the terminal apparatus 40.

Furthermore, the communication program can be stored in a disk apparatus included in a server apparatus on a network such as the Internet so as to be able to be downloaded to a computer, for example. Furthermore, the functions described above may be implemented by using operating system (OS) and application software in cooperation. In this case, the portions other than the OS may be stored in a medium for distribution, or the portions other than the OS may be stored in a server apparatus so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be flexibly altered unless otherwise specified. For example, various types of information illustrated in each of the drawings are not limited to the information illustrated.

In addition, each constituent of each apparatus is provided as a functional concept and thus does not necessarily need to be physically constituted as illustrated. That is, the specific mode of distribution/integration of each of the apparatuses is not limited to those illustrated in the drawings, and all or a part thereof can be functionally or physically distributed or integrated into arbitrarily chosen units in accordance with various loads and use status.

Furthermore, the above-described embodiments can be appropriately combined within a range implementable without contradiction of processes. Furthermore, the order of individual steps illustrated in the sequence diagram or the flowchart of the present embodiment can be changed as appropriate.

Furthermore, for example, the present embodiment can be implemented as any configuration constituting an apparatus or a system, for example, a processor as a large scale integration (LSI) or the like, a module using a plurality of processors or the like, a unit using a plurality of modules or the like, and a set obtained by further adding other functions to the unit, or the like (that is, a configuration of a part of the apparatus).

In the present embodiment, a system represents a set of a plurality of components (devices, modules (parts), or the like), and whether all the components are in the same housing would not be a big issue. For example, a plurality of apparatuses housed in separate housings and connected via a network or the like, and one apparatus in which a plurality of modules is housed in one housing, are both systems.

Furthermore, for example, the present embodiment can adopt a composition of cloud computing in which one function is cooperatively shared and processed by a plurality of devices via a network.

<<7. Conclusion>>

As described above, according to the present embodiment, the server 10 specifies the latency requirement information related to the reflection of the user's operation on the XR media. For example, the server 10 specifies, as the latency requirement information, a requirement value selected in accordance with an application related to XR media (hereinafter, referred to as an XR application) from among a plurality of requirement values of Pose to Render to Photon Latency (PRPL) or Render to Photon Latency (RPL). In addition, the server 10 acquires acceptability information (for example, the Packet Delay Budget (PDB)) related to a transmission delay of a Quality of Service (QoS) flow assigned to a session established for the XR application. The XR server makes a decision related to generation of XR media content to be transmitted to the terminal apparatus 40 (decision of resolution and/or codec of XR media content) based on the latency requirement information and the acceptability information.

With this configuration, the server 10 can selectively set the resolution and/or codec suitable for each of the plurality of XR applications having different latency requirement (PRPL or RPL requirement) related to the reflection of the user's operation. As a result, the server 10 can generate the XR media content corresponding to the QoS flow assigned to the session. As a result, stable low latency wireless transmission of XR media content is achieved even in a dynamically changing wireless environment.

In addition, the server 10 acquires information of Maximum Data Burst Volume (MDBV) of the downlink QoS flow assigned to a session established for the XR application. Subsequently, the server 10 decides the resolution and/or codec of the XR media content to be transmitted to the terminal apparatus 40 based on the latency requirement information, the acceptability information, and the Maximum Data Burst Volume information. With this configuration, the server 10 can set a more appropriate resolution and/or codec in accordance with the Maximum Data Burst Volume of the assigned QoS flow.

In addition, the server 10 specifies the image region to be the transmission data to the terminal apparatus 40 in consideration of the display region moved in the duration of the PDB (at least one of the $PDB_{UL}$ and the $PDB_{DL}$). Subsequently, the server 10 decides the resolution and/or codec to be applied to the transmission data (image region) based on the Maximum Data Burst Volume of the downlink. This makes it possible for the server 10 to set more appropriate resolution and/or codec.

In addition, the server 10 specifies the requirement value of the PRPL or the RPL in accordance with the magnitude/speed of the change in the moving image related to the XR media, the change in the 2D/3D content multiplexed in the moving image with respect to the moving image, or the magnitude of the movement. This makes it possible for the server 10 to achieve Motion to Photon Latency (MPL) necessary for satisfying QoE of the user.

In addition, the server 10 controls the transmission frequency of the sensor information of the terminal apparatus 40 in accordance with the magnitude/speed of the change in the moving image related to the XR media, the change in the 2D/3D content multiplexed in the moving image with respect to the moving image, or the magnitude of the movement. For example, the server 10 requests another network apparatus (for example, base station 30/core network CN) to assign a Configured Grant (CG) having the periodicity corresponding to the transmission frequency to the QoS flow assigned for transmission of the sensor information. This improves reliability in acquisition of sensor information. Furthermore, the server 10 may control the inactive duration of DTX that is set in the XR device in accordance with the control of the transmission frequency of the sensor information. This achieves low power consumption.

In addition, the server 10 sets, for the terminal apparatus 40, the periodicity different from the frame periodicity of the XR media on the display unit 451 as the update frequency (transmission frequency) of the sensor information and the update frequency (reception frequency) of the XR media content. For example, in a case where the requirement for the PRPL or the RPL can be relaxed in accordance with the type of the XR application and/or the XR media content, the server 10 lowers the update frequency (transmission frequency) of the sensor information and the update frequency (reception frequency) of the XR media content. This reduces the power consumption of the terminal apparatus 40.

Furthermore, the server 10 sets the resolution corresponding to the actual uplink and downlink packet delays with respect to the resolution set based on the $PDB_{UL}$ being the upper limit of the uplink packet delay and the $PDB_{DL}$ being the upper limit of the downlink packet delay. This makes it possible to generate XR media with dynamically optimal resolution.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technology can also have the following configurations.

(1) An information processing apparatus including:

a specifying unit that specifies latency requirement information related to reflection of an operation of a user on moving image content of Extended Reality (XR);
an acquisition unit that acquires acceptability information related to a transmission delay of a Quality of Service (QoS) flow assigned to a session established for an application related to the moving image content; and
a decision unit that makes a decision related to generation of data regarding the moving image content to be transmitted to a terminal apparatus used by the user, based on the latency requirement information and the acceptability information.

(2) The information processing apparatus according to (1),

in which the acceptability information includes at least one of a first Packet Delay Budget (first PDB) of an uplink QoS flow assigned to a session established for the application and a second Packet Delay Budget (second PDB) of a downlink QoS flow assigned to a session established for the application, and
the decision unit makes the decision related to generation of data regarding the moving image content, based on the latency requirement information and at least one of the first PDB and the second PDB.

(3) The information processing apparatus according to (1) or (2),
in which the decision unit makes a decision related to at least one of resolution and codec of the moving image content, as the decision related to generation of data regarding the moving image content.
(4) The information processing apparatus according to any one of (1) to (3),
in which the specifying unit specifies a requirement value selected in accordance with the application from among a plurality of requirement values of Pose to Render to Photon Latency (PRPL) or Render to Photon Latency (RPL), as latency requirement information.
(5) The information processing apparatus according to any one of (1) to (4),

in which the acquisition unit acquires information of a Maximum Data Burst Volume of a downlink QoS flow assigned to the session established for the application, and
the decision unit makes the decision related to generation of data regarding the moving image content to be transmitted to the terminal apparatus, based on the latency requirement information, the acceptability information, and the Maximum Data Burst Volume information.

(6) The information processing apparatus according to any one of (1) to (4), further including

a division unit that divides a first image of the moving image content into a plurality of second images having a smaller number of pixels than the first image,
in which the decision unit assigns a priority related to communication to each of the plurality of second images.

(7) The information processing apparatus according to (6), further including

a setting unit that sets a plurality of Protocol Data Unit (PDU) sets to which different priorities related to communication are assigned,
in which the decision unit assigns the second image to the PDU set based on the priority assigned to each of the plurality of second images and the priority assigned to each of the plurality of PDU sets.

(8) The information processing apparatus according to any one of (1) to (4),

in which the decision unit
decides a region of an image regarding the moving image content to be transmitted to the terminal apparatus, based on the acceptability information, and
makes the decision related to generation of data regarding the moving image content to be transmitted to the terminal apparatus, based on the latency requirement information, the acceptability information, and information regarding the region.

(9) The information processing apparatus according to (8),

in which the acquisition unit acquires information of a Maximum Data Burst Volume of a downlink QoS flow assigned to the session established for the application, and
the decision unit makes the decision related to generation of data regarding the moving image content to be transmitted to the terminal apparatus, based on the latency requirement information, the acceptability information, the information on the region, and the Maximum Data Burst Volume information.

(10) The information processing apparatus according to (8) or (9),

in which the acquisition unit acquires sensor information obtained by a sensor included in the terminal apparatus, and
the decision unit decides the region of the image based on the sensor information and the acceptability information.

(11) The information processing apparatus according to (10), further including

a generation unit that generates an Artificial Intelligence (AI) model or a Machine Learning (ML) model by using the sensor information detected in a plurality of different time points,
in which the decision unit decides the region of the image based on information obtained by inputting the sensor information to the AI model or the ML model.

(12) The information processing apparatus according to any one of (1) to (4), further including

a detection unit that detects a magnitude or a speed of a change in a moving image included in the moving image content,
in which the specifying unit specifies the latency requirement information based on the magnitude or the speed of the change in the moving image, and
the decision unit makes the decision related to generation of data regarding the moving image content, based on the latency requirement information and the acceptability information.

(13) The information processing apparatus according to (12), in which the decision unit makes a decision related to a transmission frequency of an I frame of a Group of Picture (GOP) of the moving image content, in accordance with the magnitude or the speed of the change in the moving image.

(14) The information processing apparatus according to (12) or (13), in which the decision unit makes a decision related to a frame rate of the data regarding the moving image content, in accordance with the magnitude or the speed of the change in the moving image.

(15) The information processing apparatus according to any one of (12) to (14), further including a request unit that requests the terminal apparatus to increase or decrease a transmission frequency to the information processing apparatus, of sensor information obtained by a sensor included in the terminal apparatus, in a case where the latency requirement information satisfies a predetermined standard.

(16) The information processing apparatus according to (15), in which the request unit requests another network apparatus to set or update a Configured Grant (CG) having a periodicity corresponding to the transmission frequency, in accordance with the request to the terminal apparatus to increase or decrease the transmission frequency of the sensor information.

(17) The information processing apparatus according to any one of (1) to (4), further including

a notification unit that notifies the terminal apparatus of periodicity information related to sensor information used for a procedure for reflecting an operation of a user in the moving image content,
in which the decision unit
decides a first periodicity that is a periodicity in which the terminal apparatus detects sensor information based on information on a frame periodicity in which the moving image content is displayed,
decides a second periodicity that is a periodicity in which the terminal apparatus transmits the sensor information based on the latency requirement information, and
decides a third periodicity that is a periodicity of transmitting data regarding the moving image content to the terminal apparatus based on the latency requirement information, and
the notification unit notifies the terminal apparatus of the information related to the first periodicity, the information related to the second periodicity, and the information related to the third periodicity, as the periodicity information.

(18)
The information processing apparatus according to (17), further including a request unit that requests another network apparatus to set, in the terminal apparatus, at least one of Discontinuous Transmission in the second periodicity and Discontinuous Reception in the third periodicity.

(19) The information processing apparatus according to any one of (1) to (4), further including

a request unit that requests another network apparatus to set QoS monitoring,
in which the acquisition unit acquires a measurement result of a first packet delay of an uplink QoS flow assigned to a session established for the application and a measurement result of a second packet delay of a downlink QoS flow assigned to a session established for the application, and
the decision unit executes one of procedures:

a first procedure of making a decision related to generation of data regarding the moving image content to be transmitted to the terminal apparatus, based on the latency requirement information and the acceptability information; and
a second procedure of making a decision related to generation of data regarding the moving image content to be transmitted to the terminal apparatus based on the latency requirement information and at least one of the measurement result of the first packet delay and the measurement result of the second packet delay.

(20) An information processing method including:

specifying latency requirement information related to reflection of an operation of a user on moving image content of Extended Reality (XR);
acquiring acceptability information related to a transmission delay of a Quality of Service (QoS) flow assigned to a session established for an application related to the moving image content; and
making a decision related to generation of data regarding the moving image content to be transmitted to a terminal apparatus used by the user, based on the latency requirement information and the acceptability information.

<XR server>

Note that the present technology can also have the following configurations.

(A1) An information processing apparatus including:

a specifying unit that specifies latency requirement information related to reflection of an operation of a user on moving image content of Extended Reality (XR);
an acquisition unit that acquires acceptability information related to a transmission delay of a Quality of Service (QoS) flow assigned to a session established for an application related to the moving image content; and
a decision unit that makes a decision related to generation of data regarding the moving image content to be transmitted to a terminal apparatus used by the user, based on the latency requirement information and the acceptability information.

(A2) The information processing apparatus according to (A1),

in which the acceptability information includes at least one of a first Packet Delay Budget (first PDB) of an uplink QoS flow assigned to a session established for the application and a second Packet Delay Budget (second PDB) of a downlink QoS flow assigned to a session established for the application, and
the decision unit makes the decision related to generation of data regarding the moving image content, based on the latency requirement information and at least one of the first PDB and the second PDB.

(A3) The information processing apparatus according to (A1) or (A2),
in which the decision unit makes a decision related to at least one of resolution and codec of the moving image content, as the decision related to generation of data regarding the moving image content.
(A4) The information processing apparatus according to any one of (A1) to (A3),
in which the specifying unit specifies a requirement value selected in accordance with the application from among a plurality of requirement values of Pose to Render to Photon Latency (PRPL) or Render to Photon Latency (RPL), as latency requirement information.
(A5) The information processing apparatus according to any one of (A1) to (A4),

in which the acquisition unit acquires information of a Maximum Data Burst Volume of a downlink QoS flow assigned to the session established for the application, and
the decision unit makes the decision related to generation of data regarding the moving image content to be transmitted to the terminal apparatus, based on the latency requirement information, the acceptability information, and the Maximum Data Burst Volume information.

(A6) The information processing apparatus according to any one of (A1) to (A4), further including:

a division unit that divides a first image of the moving image content into a plurality of second images having a smaller number of pixels than the first image,
in which the decision unit assigns a priority related to communication to each of the plurality of second images.

(A7) The information processing apparatus according to (A6), further including

a setting unit that sets a plurality of Protocol Data Unit (PDU) sets to which different priorities related to communication are assigned,
in which the decision unit assigns the second image to the PDU set based on the priority assigned to each of the plurality of second images and the priority assigned to each of the plurality of PDU sets.

(A8) The information processing apparatus according to any one of (A1) to (A4), further including

a division unit that divides data regarding the moving image content into multicast transmission data and unicast transmission data,
in which the decision unit makes a decision related to generation of the multicast transmission data and the unicast transmission data, being data to be transmitted to the terminal apparatus, based on the latency requirement information and the acceptability information.

(A9) The information processing apparatus according to (A8),
in which the decision unit decides one resolution and one codec to be used for generating the multicast transmission data for a plurality of terminal apparatuses including the terminal apparatus, as the decision related to generation of the multicast transmission data.
(A10) The information processing apparatus according to (A8) or (A9),
in which the decision unit performs the decision in a case where a base station connected with the terminal apparatus can support Point-to-Multipoint (PTM) transmission.
(A11) The information processing apparatus according to (A9),
in which the plurality of terminal apparatuses is a terminal apparatus included in a set group.
(A12) The information processing apparatus according to any one of (A1) to (A4),

in which the decision unit
decides a region of an image regarding the moving image content to be transmitted to the terminal apparatus, based on the acceptability information, and
makes the decision related to generation of data regarding the moving image content to be transmitted to the terminal apparatus, based on the latency requirement information, the acceptability information, and information on the region.

(A13) The information processing apparatus according to (A12),

in which the acquisition unit acquires information of a Maximum Data Burst Volume of a downlink QoS flow assigned to the session established for the application, and
the decision unit makes the decision related to generation of data regarding the moving image content to be transmitted to the terminal apparatus, based on the latency requirement information, the acceptability information, the information on the region, and the Maximum Data Burst Volume information.

(A14) The information processing apparatus according to (A12) or (A13),

in which the acquisition unit acquires sensor information obtained by a sensor included in the terminal apparatus, and
the decision unit decides the region of the image based on the sensor information and the acceptability information.

(A15) The information processing apparatus according to (A14), further including

a generation unit that generates an Artificial Intelligence (AI) model (AI model) or a Machine Learning (ML) model (ML model) by using the sensor information detected in a plurality of different time points,
in which the decision unit decides the region of the image based on information obtained by inputting the sensor information to the AI model or the ML model.

(A16) The information processing apparatus according to any one of (A1) to (A4), further including

a detection unit that detects a magnitude or a speed of a change in a moving image included in the moving image content,
in which the specifying unit specifies the latency requirement information based on the magnitude or the speed of the change in the moving image, and
the decision unit makes the decision related to generation of data regarding the moving image content, based on the latency requirement information and the acceptability information.

(A17) The information processing apparatus according to (A16),
in which the decision unit makes a decision related to a transmission frequency of an I frame of a Group of Picture (GOP) of the moving image content, in accordance with the magnitude or the speed of the change in the moving image.
(A18) The information processing apparatus according to (A17),
in which the decision unit assigns a Protocol Data Unit (PDU) set having a higher priority to the I frame, than to a P frame and a B frame.
(A19) The information processing apparatus according to any one of (A16) to (A18),
in which the decision unit makes a decision related to a frame rate of the data regarding the moving image content, in accordance with the magnitude or the speed of the change in the moving image.

(A20) The information processing apparatus according to any one of (A16) to (A19),

in which the detection unit detects the magnitude or the speed of the change in the moving image by inputting information on a pixel of the moving image to an AI model or an ML model.

(A21) The information processing apparatus according to any one of (A16) to (A19),

in which the detection unit detects the magnitude or the speed of the change in the moving image based on sensor information obtained by a sensor included in the terminal apparatus.

(A22) The information processing apparatus according to any one of (A16) to (A21), further including

a request unit that requests the terminal apparatus to increase or decrease a transmission frequency of sensor information obtained by a sensor included in the terminal apparatus, to the information processing apparatus, in a case where the latency requirement information satisfies a predetermined standard.

(A23) The information processing apparatus according to (A22),

in which the request unit requests the terminal apparatus to increase the transmission frequency of the sensor information when the latency requirement information is a first threshold or less, or less than the first threshold.

(A24) The information processing apparatus according to (A22) or (A23),

in which the request unit requests the terminal apparatus to decrease the transmission frequency of the information regarding the sensor when the latency requirement information is a second threshold or more, or exceeds the second threshold.

(A25) The information processing apparatus according to any one of (A22) to (A24),

in which the request unit requests another network apparatus to set or update a Configured Grant (CG) having a periodicity corresponding to the transmission frequency, in accordance with the request to the terminal apparatus to increase or decrease the transmission frequency of the sensor information.

(A26) The information processing apparatus according to any one of (A1) to (A4), further including

a notification unit that notifies the terminal apparatus of periodicity information related to sensor information used for a procedure for reflecting an operation of a user in the moving image content,

in which the decision unit

decides a first periodicity that is a periodicity in which the terminal apparatus detects sensor information based on information on a frame periodicity in which the moving image content is displayed,

decides a second periodicity that is a periodicity in which the terminal apparatus transmits the sensor information based on the latency requirement information, and

decides a third periodicity that is a periodicity of transmitting data regarding the moving image content to the terminal apparatus based on the latency requirement information, and

the notification unit notifies the terminal apparatus of the information related to the first periodicity, the information related to the second periodicity, and the information related to the third periodicity, as the periodicity information.

(A27) The information processing apparatus according to (A26),

in which the notification unit notifies an indication to generate a frame image for interpolating the moving image content at a predetermined timing of the frame periodicity when the third periodicity is greater than the frame periodicity.

(A28) The information processing apparatus according to (A26) or (A27), further including

a request unit that requests another network apparatus to set, in the terminal apparatus, at least one of Discontinuous Transmission in the second periodicity and Discontinuous Reception in the third periodicity.

(A29) The information processing apparatus according to (A28),

in which the request unit requests another network apparatus to set Discontinuous Transmission of the second periodicity, and requests the another network apparatus to set a Configured Grant (CG) of the second periodicity for a QoS flow assigned for transmission of the sensor information.

(A30) The information processing apparatus according to (A28) or (A29),

in which the request unit requests the another network apparatus to set Discontinuous Reception in the third periodicity, and requests the another network apparatus to set Configured Scheduling (CS) in the third periodicity for a QoS flow assigned for receiving data regarding the moving image content.

(A31) The information processing apparatus according to any one of (A1) to (A4), further including

a request unit that requests another network apparatus to set QoS monitoring,

in which the acquisition unit acquires a measurement result of a first packet delay of an uplink QoS flow assigned to a session established for the application and a measurement result of a second packet delay of a downlink QoS flow assigned to a session established for the application, and

the decision unit executes one of procedures:

a first procedure of making a decision related to generation of data regarding the moving image content to be transmitted to the terminal apparatus, based on the latency requirement information and the acceptability information; and
a second procedure of making a decision related to generation of data regarding the moving image content to be transmitted to the terminal apparatus based on the latency requirement information and at least one of the measurement result of the first packet delay and the measurement result of the second packet delay.

(A32) The information processing apparatus according to (A31),
in which, when having acquired a notification regarding a start of handover of the terminal apparatus, the decision unit switches from the second procedure to the first procedure.
(A33) The information processing apparatus according to (A32),
in which the notification regarding the start of handover is a notification that the terminal apparatus has launched reporting a measurement result launched on an event triggered basis.
(A34) The information processing apparatus according to any one of (A31) to (A33),
in which, when having acquired a notification regarding completion of handover of the terminal apparatus, the decision unit switches from the first procedure to the second procedure.
(A35) An information processing method including:

specifying latency requirement information related to reflection of an operation of a user on moving image content of Extended Reality (XR);
acquiring acceptability information related to a transmission delay of a Quality of Service (QoS) flow assigned to a session established for an application related to the moving image content; and
making a decision related to generation of data regarding the moving image content to be transmitted to a terminal apparatus used by the user, based on the latency requirement information and the acceptability information.

(A36) A program causing a computer to function as:

a specifying unit that specifies latency requirement information related to reflection of an operation of a user on moving image content of Extended Reality (XR);
an acquisition unit that acquires acceptability information related to a transmission delay of a Quality of Service (QoS) flow assigned to a session established for an application related to the moving image content; and
a decision unit that makes a decision related to generation of data regarding the moving image content to be transmitted to a terminal apparatus used by the user, based on the latency requirement information and the acceptability information.

<XR device>

Note that the present technology can also have the following configurations.

(B1) A terminal apparatus including:

a reception unit that receives data related to moving image content of Extended Reality (XR);
a transmission unit that transmits sensor information detected by a sensor; and
a display control unit that displays the moving image content on a display unit,
in which the reception unit receives a notification including a frame periodicity in which the moving image content is displayed on the display unit, a first periodicity in which the sensor detects the sensor information, a second periodicity in which the transmission unit transmits the sensor information, and a third periodicity in which data regarding the moving image content is received.

(B2) The terminal apparatus according to (B1),
in which the notification includes an indication to set Discontinuous Transmission in the second periodicity.
(B3) The terminal apparatus according to (B1) or (B2),
in which the notification includes an indication to set Discontinuous Reception in the third periodicity.
(B4) The terminal apparatus according to any one of (B1) to (B3),
in which the notification includes information regarding setting of a Configured Grant (CG) in the second periodicity.
(B5) The terminal apparatus according to (B4),

in which the notification includes an indication to set Discontinuous Transmission in the second periodicity, and

the active duration of the Discontinuous Transmission includes a duration of a resource to which the CG is assigned.

(B6) The terminal apparatus according to any one of (B1) to (B5),
in which the notification includes information regarding the setting of Configured Scheduling (CS) in the third periodicity.
(B7) The terminal apparatus according to (B6),

in which the notification includes an indication to set Discontinuous Reception in the third periodicity, and
the active duration of the Discontinuous Reception includes a resource to which the CS is assigned.

(B8) The terminal apparatus according to any one of (B1) to (B7),
in which the notification includes an indication to generate a frame image for interpolating the moving image content at a predetermined timing of the frame periodicity when the third periodicity is greater than the frame periodicity.
(B9) The terminal apparatus according to (B8),

in which, in a case where an indication to generate the image to be interpolated has been received, the display control unit, after the reception unit has received the data regarding the moving image content,
performs a first rendering procedure onto the moving image content by using first sensor information detected by the sensor at a first detection timing, and displays, at a first frame timing, a first frame image obtained by the first rendering procedure, and
performs a second rendering procedure onto the moving image content by using second sensor information detected by the sensor at a second detection timing, and displays, at a second frame timing, a second frame image obtained by the second rendering procedure.

(B10) An information processing method including:

a reception step of receiving data related to moving image content of Extended Reality (XR);
a transmission step of transmitting sensor information detected by a sensor; and
a display control step of displaying the moving image content on a display unit,
in which the reception step receives a notification including a frame periodicity in which the moving image content is displayed on the display unit, a first periodicity in which the sensor detects the sensor information, a second periodicity in which the transmission unit transmits the sensor information, and a third periodicity in which data regarding the moving image content is received.

(B11) A program causing a computer to function as:

a reception unit that receives data related to moving image content of Extended Reality (XR);
a transmission unit that transmits sensor information detected by a sensor; and
a display control unit that displays the moving image content on a display unit,
in which the reception unit receives a notification including a frame periodicity in which the moving image content is displayed on the display unit, a first periodicity in which the sensor detects the sensor information, a second periodicity in which the transmission unit transmits the sensor information, and a third periodicity in which data regarding the moving image content is received.

<Base station>

Note that the present technology can also have the following configurations.

(C1) A base station including:

an acquisition unit that acquires periodicity information including information on a first periodicity of Discontinuous Transmission and information on a second periodicity of Discontinuous Reception;
a first setting unit that sets a first start time of the Discontinuous Transmission and a first active duration in accordance with a duration of a first resource for transmitting an uplink data flow; and
a second setting unit that sets a second active duration of the Discontinuous Reception in accordance with a duration of a second resource for transmitting a downlink data flow,
in which, in a case where the first periodicity and the second periodicity are equivalent, the periodicity information includes information regarding an offset duration between the Discontinuous Transmission and the Discontinuous Reception, and
the second setting unit sets a second start time of the Discontinuous Reception in accordance with the information regarding the offset duration.

(C2) The base station according to (C1),

in which the acquisition unit acquires an indication of setting a Configured Grant (CG) for transmitting the uplink data flow, and
the first setting unit sets CG of the duration of the first resource in accordance with the indication of the CG setting.

(C3) The base station according to (C1),

in which the acquisition unit acquires an indication of setting a Configured Scheduling (CS) for receiving the downlink data flow, and
the second setting unit sets CS of the duration of the second resource in accordance with the indication of the setting of the CS.

(C4) The base station according to (C1),

in which the acquisition unit acquires information regarding a second offset duration in accordance with a change in a first Packet Delay Budget (first PDB) of a first Quality of Service (QoS) flow assigned to the uplink data flow, and
the second setting unit changes the first start time of the Discontinuous Transmission in accordance with the information regarding the second offset duration.

(C5) The base station according to (C1) or (C4),

in which the acquisition unit acquires information regarding a third offset duration in accordance with a change of a second Packet Delay Budget (second PDB) of a second Quality of Service (QoS) flow assigned to the downlink data flow, and
the second setting unit changes the second start time of the Discontinuous Reception in accordance with the information regarding the third offset duration.

(C6) The base station according to (C1),

in which the acquisition unit acquires information regarding a second offset duration that has been changed based on a first measurement result of a packet delay of a first QoS flow assigned to the uplink data flow, and
the second setting unit changes the first start time of the Discontinuous Transmission in accordance with the information regarding the second offset duration.

(C7) The base station according to (C1) or (C6),

in which the acquisition unit acquires information regarding a third offset duration that has been changed based on a second measurement result of a packet delay of a second QoS flow assigned to the downlink data flow, and
the second setting unit changes the second start time of the Discontinuous Reception in accordance with the information regarding the third offset duration.

(C8) The base station according to (C1), further including:

a reception unit that receives a notification of an End PDU of a Protocol Data Unit (PDU) set assigned to the downlink data flow; and
a transmission unit that transmits the notification of the End PDU to a terminal apparatus.

(C9) The base station according to (C1), further including:

a reception unit that receives a notification of an End PDU of a Protocol Data Unit (PDU) set assigned to the downlink data flow; and

a transmission unit that transmits an early transition indication of the Discontinuous Reception to a terminal apparatus.

(C10) A base station including:

an acquisition unit that acquires, for one Protocol Data Unit (PDU) session corresponding to a terminal apparatus, one piece of Time Sensitive Communication (TSC) Assistance Information and a plurality of pieces of PDU set information; and
a decision unit that makes a decision related to assignment of radio resources to a PDU set based on the TSC Assistance Information and the plurality of pieces of PDU set information.

(C11) The base station according to (C10),
in which the decision unit preferentially assigns the radio resource to a PDU of a first PDU set having a highest importance of a PDU set of the PDU set information among a plurality of the PDU sets within a duration indicated by the TSC Assistance Information.
(C12) The base station according to (C11),
in which the duration is decided by a Burst Arrival Time and periodicity of the TSC Assistance Information.
(C13) The base station according to (C10),

in which the acquisition unit acquires PDU Set Integrated Handling Information, and
the decision unit decides assignment of the radio resources within a duration indicated by the TSC Assistance Information based on the PDU Set Integrated Handling Information.

(C14) The base station according to (C13),

in which the PDU Set Integrated Handling Information includes information indicating a percentage of required PDUs among all PDUs of the PDU set, and
the decision unit assigns the radio resources to the PDUs corresponding to the percentage among all the PDUs of the PDU set.

(C15) The base station according to (C14),
in which a procedure discarding the PDUs exceeding the percentage is executed.
(C16) The base station according to (C15),
in which a procedure of transmitting an early transition indication of Discontinuous Reception to the terminal apparatus is executed after finishing transmission of the radio resources assigned to the PDU of the percentage.
(C17) The base station according to (C13),

in which mutually different priorities are attached to PDUs of the PDU set, and
the decision unit assigns the radio resource to the PDU having a priority higher than a predetermined priority in preference to other PDUs.

(C18) The base station according to (C17), further including:

a determination unit that determines a congestion state; and
a discarding unit that discards the PDU having a predetermined lower priority in a duration determined by the determination unit to be the congestion state.

(C19) The base station according to (C10),

in which the acquisition unit further acquires a request for setting a PDU Set Delivery Deadline, and
the decision unit decides an assignment of the radio resources to the PDU set based on the PDU Set Delivery Deadline.

(C20) A base station including:

an acquisition unit that acquires information regarding a group including two or more terminal apparatuses;
a reception unit that receives multicast transmission data and unicast transmission data for the two or more terminal apparatuses included in the group;

a first transmission unit that transmits the multicast transmission data to the two or more terminal apparatuses via a Point-to-Multipoint (PTM) transmission; and
a second transmission unit that transmits the unicast transmission data for each of the two or more terminal apparatuses to each of the corresponding terminal apparatuses.

(C21) The base station according to (C20),
in which the acquisition unit further includes a procedure of acquiring common Time Sensitive Communication (TSC) Assistance Information corresponding to the multicast transmission data and the unicast transmission data.
(C22) The base station according to (C21),
in which the TSC Assistance Information is information indicating that the multicast transmission data and the unicast transmission data are assigned to a same data burst.
(C23) The base station according to (C22),

in which the acquisition unit further includes a procedure of acquiring first Protocol Data Unit (PDU) set information of the multicast transmission data and second Protocol Data Unit (PDU) set information of the unicast transmission data, and
importance of a first PDU set included in the first PDU set information and importance of a second PDU set included in the second PDU set information have mutually different priorities.

(C24) A base station including:

an acquisition unit that acquires first Time Sensitive Communication (TSC) Assistance Information including a first Burst Arrival Time;
a detection unit that detects an offset of the first Burst Arrival Time; and
a feedback unit that sends feedback of the detected offset to a function of managing a session,
in which the acquisition unit acquires, from the function of managing the session, an indication to update the first TSC Assistance Information with second Time Sensitive Communication (TSC) Assistance Information including a second Burst Arrival Time corrected by the offset.

(C25) The base station according to (C24), further including

a setting unit that sets Discontinuous Reception based on the first TSC Assistance Information,
in which, when updating the first TSC Assistance Information with the second TSC Assistance Information, the setting unit changes a start time of a periodic active duration of the Discontinuous Reception based on the second Burst Arrival Time included in the second TSC Assistance Information.

(C26) The base station according to (C24), further including

a setting unit that sets a Configured Grant (CG) for transmitting an uplink data flow, based on the first TSC Assistance Information,
in which, when updating the first TSC Assistance Information with the second TSC Assistance Information, the setting unit changes the position of a head radio resource of the CG based on the second Burst Arrival Time included in the second TSC Assistance Information.

(C27) The base station according to (C24), further including

a setting unit that sets a Configured Scheduling (CS) for transmitting a downlink data flow, based on the first TSC Assistance Information,
in which, when updating the first TSC Assistance Information with the second TSC Assistance Information, the setting unit changes the position of a head radio resource of the CS based on the second Burst Arrival Time included in the second TSC Assistance Information.

(C28) An information processing method including:

an acquisition step of acquiring periodicity information including information regarding a first periodicity of Discontinuous Transmission and information regarding a second periodicity of Discontinuous Reception;
a first setting step of setting a first start time of the Discontinuous Transmission and a first active duration in accordance with a duration of a first resource for transmitting an uplink data flow; and

a second setting step of setting a second active duration of the Discontinuous Reception in accordance with a duration of a second resource for transmitting a downlink data flow,
in which, in a case where the first periodicity and the second periodicity are equivalent, the periodicity information includes information regarding an offset duration between the Discontinuous Transmission and the Discontinuous Reception, and
the second setting step sets a second start time of the Discontinuous Reception in accordance with the information regarding the offset duration.

(C29) An information processing method including:

an acquisition step of acquiring, for one Protocol Data Unit (PDU) session corresponding to a terminal apparatus, one piece of Time Sensitive Communication (TSC) Assistance Information and a plurality of pieces of PDU set information; and
a decision step of making a decision related to assignment of radio resources to a PDU set based on the TSC Assistance Information and a plurality of pieces of PDU set information.

(C30) An information processing method including:

an acquisition step of acquiring information regarding a group including two or more terminal apparatuses;
a reception step of receiving multicast transmission data and unicast transmission data for the two or more terminal apparatuses included in the group;
a first transmission step of transmitting the multicast transmission data to the two or more terminal apparatuses via a Point-to-Multipoint (PTM) transmission; and
a second transmission step of transmitting the unicast transmission data for each of the two or more terminal apparatuses to each of the corresponding terminal apparatuses.

(C31) An information processing method including:

an acquisition step of acquiring first Time Sensitive Communication (TSC) Assistance Information including a first Burst Arrival Time;
a detection step of detecting an offset of the first Burst Arrival Time; and
a feedback step of sending feedback of the detected offset to a function of managing a session,
in which the acquisition step acquires, from the function of managing the session, an indication to update the first TSC Assistance Information with second Time Sensitive Communication (TSC) Assistance Information including a second Burst Arrival Time corrected by the offset.

(C32) A program causing a computer to function as:

an acquisition unit that acquires periodicity information including information regarding a first periodicity of Discontinuous Transmission and information regarding a second periodicity of Discontinuous Reception;
a first setting unit that sets a first start time of the Discontinuous Transmission and a first active duration in accordance with a duration of a first resource for transmitting an uplink data flow; and
a second setting unit that sets a second active duration of the Discontinuous Reception in accordance with a duration of a second resource for transmitting a downlink data flow,
in which, in a case where the first periodicity and the second periodicity are equivalent, the periodicity information includes information regarding an offset duration between the Discontinuous Transmission and the Discontinuous Reception, and
the second setting unit sets a second start time of the Discontinuous Reception in accordance with the information regarding the offset duration.

(C33) A program causing a computer to function as:

an acquisition unit that acquires, for one Protocol Data Unit (PDU) session corresponding to a terminal apparatus, one piece of Time Sensitive Communication (TSC) Assistance Information and a plurality of pieces of PDU set information; and
a decision unit that makes a decision related to assignment of radio resources to a PDU set based on the TSC Assistance Information and a plurality of pieces of PDU set information.

(C34) A program causing a computer to function as:

an acquisition unit that acquires information regarding a group including two or more terminal apparatuses;
a reception unit that receives multicast transmission data and unicast transmission data for the two or more terminal apparatuses included in the group;
a first transmission unit that transmits the multicast transmission data to the two or more terminal apparatuses via a Point-to-Multipoint (PTM) transmission; and
a second transmission unit that transmits the unicast transmission data for each of the two or more terminal apparatuses to each of the corresponding terminal apparatuses.

(C35) A program causing a computer to function as:

an acquisition unit that acquires first Time Sensitive Communication (TSC) Assistance Information including a first Burst Arrival Time;
a detection unit that detects an offset of the first Burst Arrival Time; and
a feedback unit that sends feedback of the detected offset to a function of managing a session,
in which the acquisition unit acquires, from the function of managing the session, an indication to update the first TSC Assistance Information with second Time Sensitive Communication (TSC) Assistance Information including a second Burst Arrival Time corrected by the offset.

<5GC>

Note that the present technology can also have the following configurations.

(D1) An information processing apparatus including:

a confirmation unit that confirms that a terminal apparatus capable of displaying moving image content of Extended Reality (XR) has capability of receiving two synchronous periodic data flows; and
an assignment unit that assigns a policy rule to a session established for the terminal apparatus in a case where the terminal apparatus has the capability of receiving the two synchronous periodic data flows,
in which the policy rule includes a rule of assigning at least two sets of Protocol Data Units (PDUs) for periodic data bursts that are set in the session for receiving the two synchronous periodic data flows.

(D2) The information processing apparatus according to (D1),
in which, in a case where packets assigned to the two periodic data flows have a plurality of different priorities, the policy rule includes a rule of setting the plurality of different priorities to PDUs included in the two PDU sets.
(D3) The information processing apparatus according to (D1),
in which, in a case where packets assigned to the two periodic data flows have a plurality of different priorities, the policy rule includes a rule of assigning a plurality of PDU sets corresponding to a quantity of the plurality of different priorities instead of each of the two PDU sets and setting the plurality of different priorities to the plurality of PDU sets.
(D4) The information processing apparatus according to (D1),
in which the policy rule includes a request for setting a PDU Set Delivery Deadline instead of a PDU Set Delay Budget, as a PDU set Quality of Service (QoS) parameter.
(D5) An information processing apparatus including:

a first reception unit that receives a multi-modal service ID;
a second reception unit that receives a request for establishment of a session; and
an acquisition unit that acquires information regarding a plurality of data flows handled in the session in a case where the session corresponds to the multi-modal service ID.

(D6) The information processing apparatus according to (D5),
in which the information regarding the plurality of data flows includes flow directions for each flow of the plurality of data flows, a quantity of the data flows for each flow direction, or information for identifying data to be assigned to the data flow for each of the flow directions.
(D7) The information processing apparatus according to (D5),
in which the information regarding the plurality of data flows includes a Quality of Service (QoS) ID requested for each flow of the plurality of data flows.
(D8) The information processing apparatus according to (D7),

in which the information regarding the plurality of data flows includes information of a request for assigning a Time Sensitive Communication (TSC) flow to the plurality of data flows and applying TSC Assistance Information constituted with same parameter to the TSC flow.

(D9) The information processing apparatus according to (D8),
in which, when the QoS ID to be requested is a TSC flow, information regarding the plurality of data flows includes information of a request for setting a Protocol Data Unit (PDU) set for a data flow corresponding to the TSC flow.

(D10) The information processing apparatus according to (D9),
in which the information of the request for setting the PDU set includes a quantity of PDU sets to be set for one data burst for each data flow or information for identifying data to be assigned to the data flow.

(D11) The information processing apparatus according to (D10),
in which, when setting of a plurality of the PDU sets is requested for one data burst, the information of a request for setting the PDU sets includes information of a relative priority for each of the PDU sets.

(D12) The information processing apparatus according to (D10),
in which, when setting of a plurality of the PDU sets is requested for one data burst, the information of a request for setting the PDU sets includes information of a relative acceptable delay time between the PDU sets.

(D13) The information processing apparatus according to (D10),
in which, when setting of a plurality of the PDU sets is requested for one data burst, the information of a request for setting the PDU sets includes QoS monitoring setting for each of the PDU sets.

(D14) The information processing apparatus according to (D13),
in which the QoS monitoring setting is a PDU set delay time for each of the PDU sets.

(D15) The information processing apparatus according to (D13),
in which the QoS monitoring setting is a PDU set relative delay time with respect to designated other PDU sets for each of the PDU sets.

(D16) The information processing apparatus according to any one of (D5) to (D15),
in which the information regarding the plurality of data flows includes a Setup Request for setting a data flow for multicast transmission and a data flow for unicast transmission.

(D17) The information processing apparatus according to (D16),
in which the Setup Request is a request for applying the same setting as a periodic data burst for the data flow for the multicast transmission, to the data flow for the unicast transmission.

(D18) The information processing apparatus according to (D16),
in which the Setup Request is a request for assigning a TSC flow to the data flow for the multicast transmission and the data flow for the unicast transmission, and applying Time Sensitive Communication (TSC) Assistance Information constituted with a same parameter to the TSC flow.

(D19) The information processing apparatus according to (D8),
in which the information regarding the plurality of data flows includes Transaction Reference ID of a Ntsctsf_QoSandTSCAssistance_Create service.

(D20) The information processing apparatus according to (D19),
in which the Transaction Reference ID is information included in a response to a request for generation of TSC Assistance Information using the Ntsctsf_QoSandTSCAssistance_Create service.

(D21) The information processing apparatus according to (D20),
in which the information regarding the request for generating the TSC Assistance Information includes information regarding a traffic pattern of the data flow.

(D22) The information processing apparatus according to (D21),
in which the information regarding the traffic pattern includes at least one piece of information out of a flow direction, a Burst Arrival Time, periodicity, a time domain, a Survival Time, a BAT window, capability of adaptive control of Burst Arrival Time, and a Periodicity Range.

(D23) The information processing apparatus according to (D5),
in which information regarding the plurality of data flows includes information on a request for a round-trip delay for designated uplink and downlink data flows of the plurality of data flows.

(D24) The information processing apparatus according to (D5),
in which the information regarding the plurality of data flows includes information on a request regarding synchronization between the plurality of data flows of an uplink of the plurality of data flows.

(D25) The information processing apparatus according to (D5),
in which the information regarding the plurality of data flows includes information on a request regarding synchronization between the plurality of data flows of a downlink of the plurality of data flows.

(D26) An information processing apparatus including:

an acquisition unit that acquires information regarding a percentage of required PDUs in all PDUs of a Protocol Data Unit (PDU) set;
a decision unit that decides PDU Set Integrated Handling Information based on the information; and
a forwarding processing unit that executes forwarding processing of a user plane,
in which the forwarding processing unit attaches a high priority to the percentage of PDUs among all the PDUs of the PDU set and attaches a lower priority to the other PDUs based on the information.

(D27) An information processing apparatus including:

an acquisition unit that acquires, from a base station, feedback of an offset with respect to first Burst Arrival Time included in first Time Sensitive Communication (TSC) Assistance Information;
a comparison unit that compares the offset, sent as feedback, with a threshold;
a generation unit that generates a second Burst Arrival Time obtained by correcting the first Burst Arrival Time included in the first TSC Assistance Information with the offset when it is determined that the offset exceeds the threshold; and
a transmission unit that transmits, to the base station, an indication to update the first Time Sensitive Communication (TSC) Assistance Information with second TSC Assistance Information including the second Burst Arrival Time.

(D28) An information processing method including:

a confirmation step of confirming that a terminal apparatus that displays moving image content of Extended Reality (XR) has capability of receiving two synchronous periodic data flows; and
an assignment step of assigning a policy rule to a session established for the terminal apparatus in a case where the terminal apparatus has the capability of receiving the two synchronous periodic data flows,
in which the policy rule includes a rule of assigning at least two sets of Protocol Data Units (PDUs) for periodic data bursts that are set in the session for receiving the two synchronous periodic data flows.

(D29) An information processing method including:

a first reception step of receiving a multi-modal service ID;
a second reception step of receiving a request for establishment of a session; and
an acquisition step of acquiring information regarding a plurality of data flows handled in the session in a case where the session corresponds to the multi-modal service ID.

(D30) An information processing method including:

an acquisition step of acquiring information regarding a percentage of required PDUs in all PDUs of a Protocol Data Unit (PDU) set;
a decision step of deciding PDU Set Integrated Handling Information based on the information; and
a forwarding processing step of executing forwarding processing of a user plane,
in which the forwarding processing step attaches a high priority to the percentage of PDUs among all the PDUs of the PDU set and attaches a lower priority to the other PDUs based on the information.

(D31) An information processing method including:

an acquisition step of acquiring, from a base station, feedback of an offset with respect to first Burst Arrival Time included in first Time Sensitive Communication (TSC) Assistance Information;
a comparison step of comparing the offset, sent as feedback, with a threshold;
a generation step of generating a second Burst Arrival Time obtained by correcting the first Burst Arrival Time included in the first TSC Assistance Information with the offset when it is determined that the offset exceeds the threshold; and
a transmission step of transmitting, to the base station, an indication to update the first Time Sensitive Communication (TSC) Assistance Information with second TSC Assistance Information including the second Burst Arrival Time.

(D32) A program causing a computer to function as:

a confirmation unit that confirms that a terminal apparatus that displays moving image content of Extended Reality (XR) has capability of receiving two synchronous periodic data flows; and
an assignment unit that assigns a policy rule to a session established for the terminal apparatus in a case where the terminal apparatus has the capability of receiving the two synchronous periodic data flows,
in which the policy rule includes a rule of assigning at least two sets of Protocol Data Units (PDUs) for periodic data bursts that are set in the session for receiving the two synchronous periodic data flows.

(D33) A program causing a computer to function as:

a first reception unit that receives a multi-modal service ID;
a second reception unit that receives a request for establishment of a session; and
an acquisition unit that acquires information regarding a plurality of data flows handled in the session in a case where the session corresponds to the multi-modal service ID.

(D34) A program causing a computer to function as:

an acquisition unit that acquires information regarding a percentage of required PDUs in all PDUs of a Protocol Data Unit (PDU) set;
a decision unit that decides PDU Set Integrated Handling Information based on the information; and
a forwarding processing unit that executes forwarding processing of a user plane,
in which the forwarding processing unit attaches a high priority to the percentage of PDUs among all the PDUs of the PDU set and attaches a lower priority to the other PDUs based on the information.

(D35) A program causing a computer to function as:

an acquisition unit that acquires, from a base station, feedback of an offset with respect to first Burst Arrival Time included in first Time Sensitive Communication (TSC) Assistance Information;
a comparison unit that compares the offset, sent as feedback, with a threshold;
a generation unit that generates a second Burst Arrival Time obtained by correcting the first Burst Arrival Time included in the first TSC Assistance Information with the offset when it is determined that the offset exceeds the threshold; and
a transmission unit that transmits, to the base station, an indication to update the first Time Sensitive Communication (TSC) Assistance Information with second TSC Assistance Information including the second Burst Arrival Time.

Reference Signs List

| | |
|---|---|
| 1 | COMMUNICATION SYSTEM |
| 10 | SERVER |
| 20 | MANAGEMENT APPARATUS |
| 30 | BASE STATION |
| 40 | TERMINAL APPARATUS |
| 60 | XR SERVER |
| 70 | XR DEVICE |
| 11, 21 | COMMUNICATION UNIT |
| 31, 41 | WIRELESS COMMUNICATION UNIT |
| 12, 22, 32, 42 | STORAGE UNIT |
| 13, 23, 33, 43 | CONTROL UNIT |
| 44 | INPUT UNIT |
| 45 | OUTPUT UNIT |
| 46 | SENSOR UNIT |
| 311, 411 | TRANSMISSION PROCESSING UNIT |
| 312, 412 | RECEPTION PROCESSING UNIT |
| 313, 413 | ANTENNA |
| 451 | DISPLAY UNIT |
| 131 | SPECIFYING UNIT |
| 132 | ACQUISITION UNIT |

| | |
|---|---|
| 133 | DECISION UNIT |
| 134 | DIVISION UNIT |
| 135 | SETTING UNIT |
| 136 | GENERATION UNIT |
| 137 | DETECTION UNIT |
| 138 | REQUEST UNIT |
| 139 | NOTIFICATION UNIT |
| 431 | RECEPTION UNIT |
| 432 | TRANSMISSION UNIT |
| 433 | DISPLAY CONTROL UNIT |
| 510 | RAN/AN |
| 520 | UPF |
| 530 | DN |
| 540 | CONTROL PLANE FUNCTION GROUP |
| 541 | AMF |
| 542 | NEF |
| 543 | NRF |
| 544 | NSSF |
| 545 | PCF |
| 546 | SMF |
| 547 | UDM |
| 548 | AF |
| 549 | AUSF |
| 550 | UCMF |
| 551 | TSCTSF |
| 552 | BSF |
| 61 | XR MEDIA GENERATION UNIT |
| 62 | XR DISPLAY REGION PRE-RENDERING UNIT |
| 63 | 2D/3D MEDIA ENCODING UNIT |
| 64 | XR RENDERING METADATA PROCESSING UNIT |
| 65 | XR MEDIA CONTENT DELIVERY UNIT |
| 66 | 5GS DELIVERY UNIT |
| 71 | XR SENSOR UNIT |
| 72 | XR MEDIA CONTENT DELIVERY UNIT |
| 73 | 5GS DELIVERY UNIT |
| 74 | 2D/3D MEDIA DECODING UNIT |
| 75 | XR RENDERING METADATA PROCESSING UNIT |
| 76 | XR DISPLAY REGION RENDERING UNIT |
| 77 | DISPLAY UNIT |
| CN | CORE NETWORK |

## Claims

**1.** An information processing apparatus comprising:

a specifying unit that specifies latency requirement information related to reflection of an operation of a user on moving image content of Extended Reality (XR);
an acquisition unit that acquires acceptability information related to a transmission delay of a Quality of Service (QoS) flow assigned to a session established for an application related to the moving image content; and
a decision unit that makes a decision related to generation of data regarding the moving image content to be transmitted to a terminal apparatus used by the user, based on the latency requirement information and the acceptability information.

**2.** The information processing apparatus according to claim 1,

wherein the acceptability information includes at least one of a first Packet Delay Budget (first PDB) of an uplink QoS flow assigned to a session established for the application and a second Packet Delay Budget (second PDB) of a downlink QoS flow assigned to a session established for the application, and

the decision unit makes the decision related to generation of data regarding the moving image content, based on the latency requirement information and at least one of the first PDB and the second PDB.

3. The information processing apparatus according to claim 1, wherein the decision unit makes a decision related to at least one of resolution and codec of the moving image content, as the decision related to generation of data regarding the moving image content.

4. The information processing apparatus according to claim 1, wherein the specifying unit specifies a requirement value selected in accordance with the application from among a plurality of requirement values of Pose to Render to Photon Latency (PRPL) or Render to Photon Latency (RPL), as latency requirement information.

5. The information processing apparatus according to claim 1,

wherein the acquisition unit acquires information of a Maximum Data Burst Volume of a downlink QoS flow assigned to the session established for the application, and
the decision unit makes the decision related to generation of data regarding the moving image content to be transmitted to the terminal apparatus, based on the latency requirement information, the acceptability information, and the Maximum Data Burst Volume information.

6. The information processing apparatus according to claim 1, further comprising

a division unit that divides a first image of the moving image content into a plurality of second images having a smaller number of pixels than the first image,
wherein the decision unit assigns a priority related to communication to each of the plurality of second images.

7. The information processing apparatus according to claim 6, further comprising

a setting unit that sets a plurality of Protocol Data Unit (PDU) sets to which different priorities related to communication are assigned,
wherein the decision unit assigns the second image to the PDU set based on the priority assigned to each of the plurality of second images and the priority assigned to each of the plurality of PDU sets.

8. The information processing apparatus according to claim 1,

wherein the decision unit
decides a region of an image regarding the moving image content to be transmitted to the terminal apparatus, based on the acceptability information, and
makes the decision related to generation of data regarding the moving image content to be transmitted to the terminal apparatus, based on the latency requirement information, the acceptability information, and information regarding the region.

9. The information processing apparatus according to claim 8,

wherein the acquisition unit acquires information of a Maximum Data Burst Volume of a downlink QoS flow assigned to the session established for the application, and
the decision unit makes the decision related to generation of data regarding the moving image content to be transmitted to the terminal apparatus, based on the latency requirement information, the acceptability information, the information on the region, and the Maximum Data Burst Volume information.

10. The information processing apparatus according to claim 8,

wherein the acquisition unit acquires sensor information obtained by a sensor included in the terminal apparatus, and
the decision unit decides the region of the image based on the sensor information and the acceptability information.

11. The information processing apparatus according to claim 10, further comprising

a generation unit that generates an Artificial Intelligence (AI) model or a Machine Learning (ML) model by using the sensor information detected in a plurality of different time points,
wherein the decision unit decides the region of the image based on information obtained by inputting the sensor information to the AI model or the ML model.

**12.** The information processing apparatus according to claim 1, further comprising

a detection unit that detects a magnitude or a speed of a change in a moving image included in the moving image content,
wherein the specifying unit specifies the latency requirement information based on the magnitude or the speed of the change in the moving image, and
the decision unit makes the decision related to generation of data regarding the moving image content, based on the latency requirement information and the acceptability information.

**13.** The information processing apparatus according to claim 12,
wherein the decision unit makes a decision related to a transmission frequency of an I frame of a Group of Picture (GOP) of the moving image content, in accordance with the magnitude or the speed of the change in the moving image.

**14.** The information processing apparatus according to claim 12,
wherein the decision unit makes a decision related to a frame rate of the data regarding the moving image content, in accordance with the magnitude or the speed of the change in the moving image.

**15.** The information processing apparatus according to claim 12, further comprising
a request unit that requests the terminal apparatus to increase or decrease a transmission frequency to the information processing apparatus, of sensor information obtained by a sensor included in the terminal apparatus, in a case where the latency requirement information satisfies a predetermined standard.

**16.** The information processing apparatus according to claim 15,
wherein the request unit requests another network apparatus to set or update a Configured Grant (CG) having a periodicity corresponding to the transmission frequency, in accordance with the request to the terminal apparatus to increase or decrease the transmission frequency of the sensor information.

**17.** The information processing apparatus according to claim 1, further comprising

a notification unit that notifies the terminal apparatus of periodicity information related to sensor information used for a procedure for reflecting an operation of a user in the moving image content,
wherein the decision unit
decides a first periodicity that is a periodicity in which the terminal apparatus detects sensor information based on information on a frame periodicity in which the moving image content is displayed,
decides a second periodicity that is a periodicity in which the terminal apparatus transmits the sensor information based on the latency requirement information, and
decides a third periodicity that is a periodicity of transmitting data regarding the moving image content to the terminal apparatus based on the latency requirement information, and
the notification unit notifies the terminal apparatus of the information related to the first periodicity, the information related to the second periodicity, and the information related to the third periodicity, as the periodicity information.

**18.** The information processing apparatus according to claim 17, further comprising
a request unit that requests another network apparatus to set, in the terminal apparatus, at least one of Discontinuous Transmission in the second periodicity and Discontinuous Reception in the third periodicity.

**19.** The information processing apparatus according to claim 1, further comprising

a request unit that requests another network apparatus to set QoS monitoring,
wherein the acquisition unit acquires a measurement result of a first packet delay of an uplink QoS flow assigned to a session established for the application and a measurement result of a second packet delay of a downlink QoS flow assigned to a session established for the application, and
the decision unit executes one of procedures:

a first procedure of making a decision related to generation of data regarding the moving image content to be transmitted to the terminal apparatus, based on the latency requirement information and the acceptability information; and

a second procedure of making a decision related to generation of data regarding the moving image content to be transmitted to the terminal apparatus based on the latency requirement information and at least one of the measurement result of the first packet delay and the measurement result of the second packet delay.

**20.** An information processing method comprising:

specifying latency requirement information related to reflection of an operation of a user on moving image content of Extended Reality (XR);

acquiring acceptability information related to a transmission delay of a Quality of Service (QoS) flow assigned to a session established for an application related to the moving image content; and

making a decision related to generation of data regarding the moving image content to be transmitted to a terminal apparatus used by the user, based on the latency requirement information and the acceptability information.

FIG.1

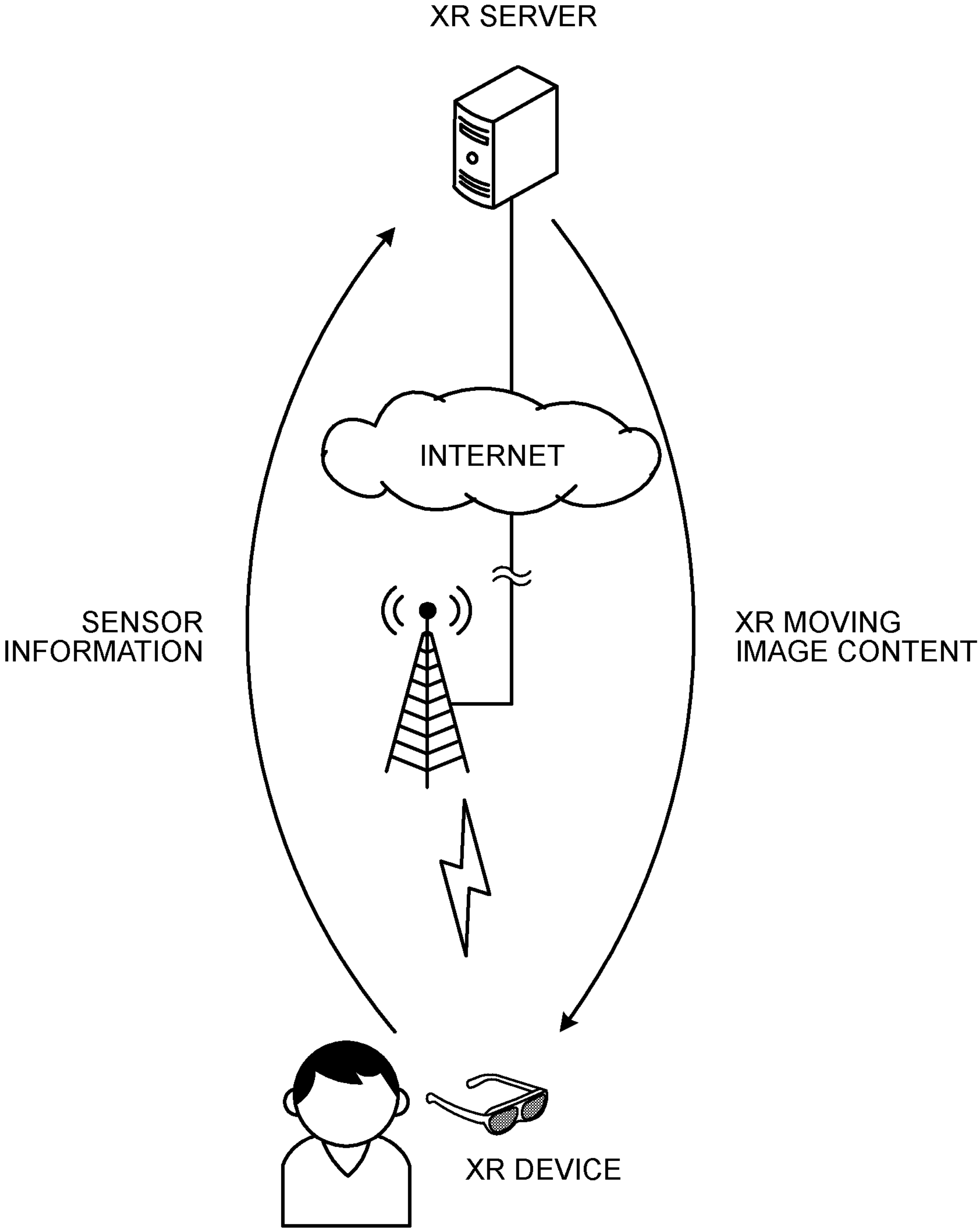
XR SERVER
INTERNET
SENSOR INFORMATION
XR MOVING IMAGE CONTENT
XR DEVICE

FIG.2

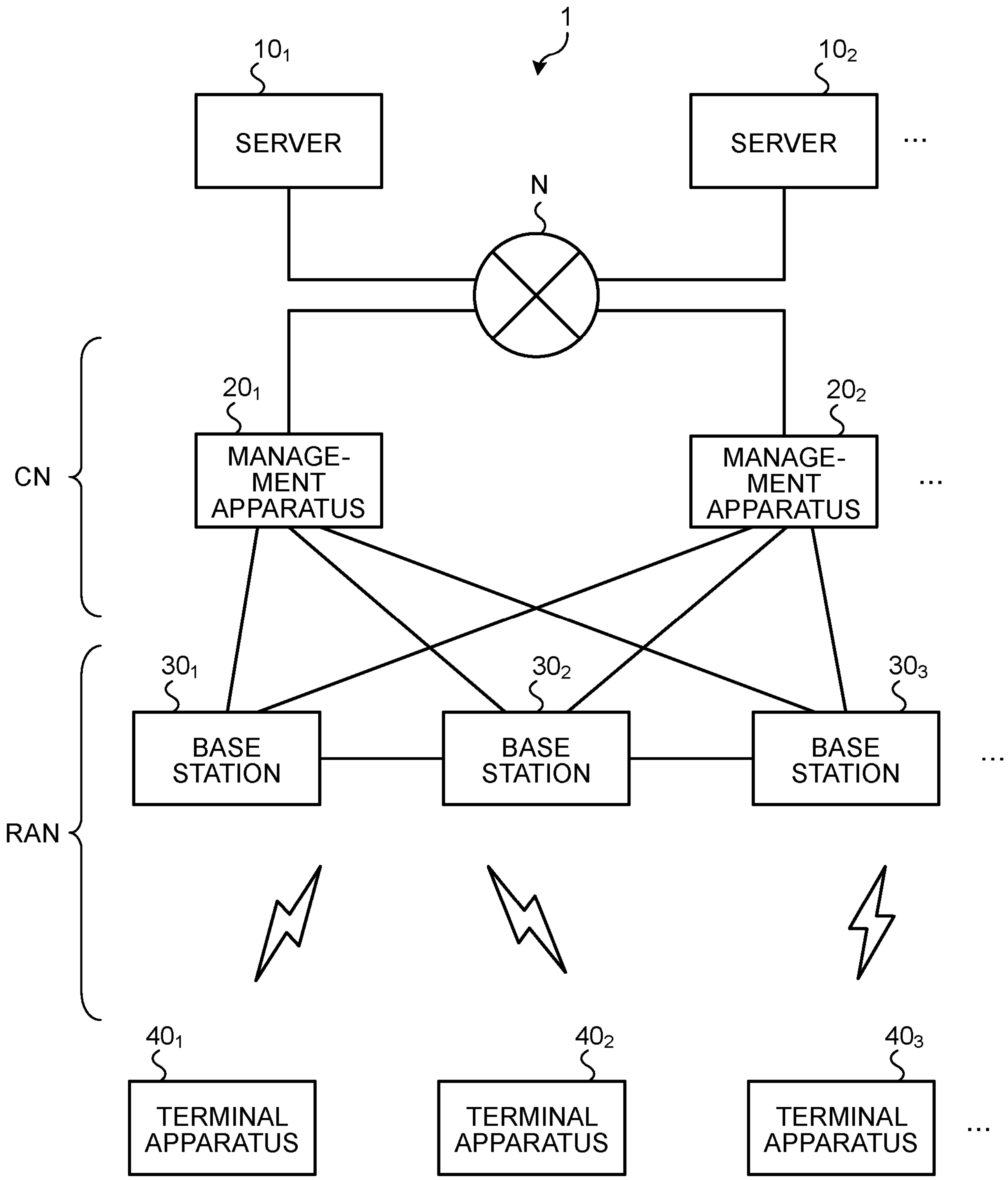
1
$10_1$
SERVER
$10_2$
SERVER
...
N
CN
$20_1$
MANAGE-MENT APPARATUS
$20_2$
MANAGE-MENT APPARATUS
...
RAN
$30_1$
BASE STATION
$30_2$
BASE STATION
$30_3$
BASE STATION
...
$40_1$
TERMINAL APPARATUS
$40_2$
TERMINAL APPARATUS
$40_3$
TERMINAL APPARATUS
...

FIG.3

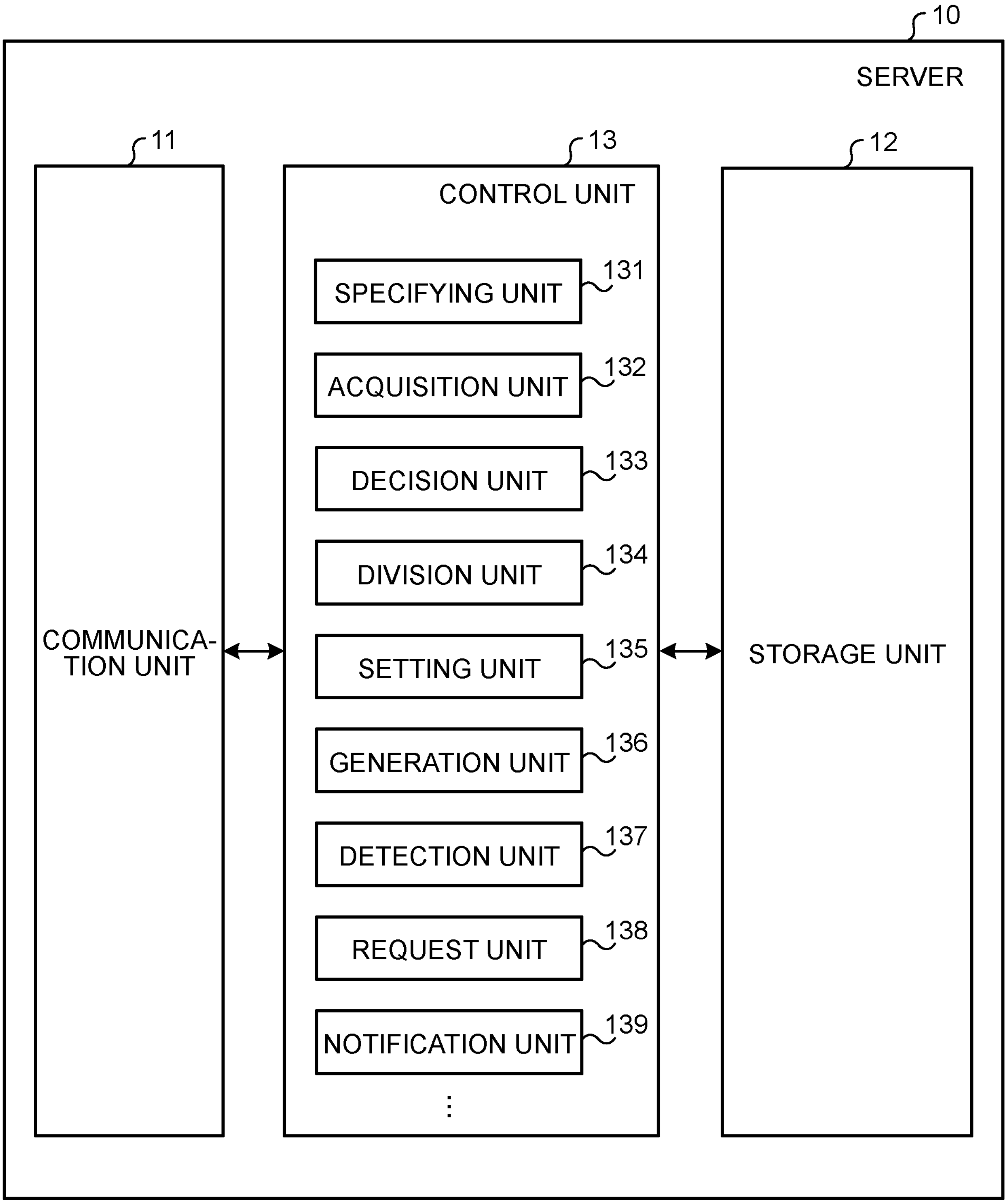
10
SERVER
11
COMMUNICA-
TION UNIT
13
CONTROL UNIT
SPECIFYING UNIT
131
ACQUISITION UNIT
132
DECISION UNIT
133
DIVISION UNIT
134
SETTING UNIT
135
GENERATION UNIT
136
DETECTION UNIT
137
REQUEST UNIT
138
NOTIFICATION UNIT
139
12
STORAGE UNIT

FIG.4

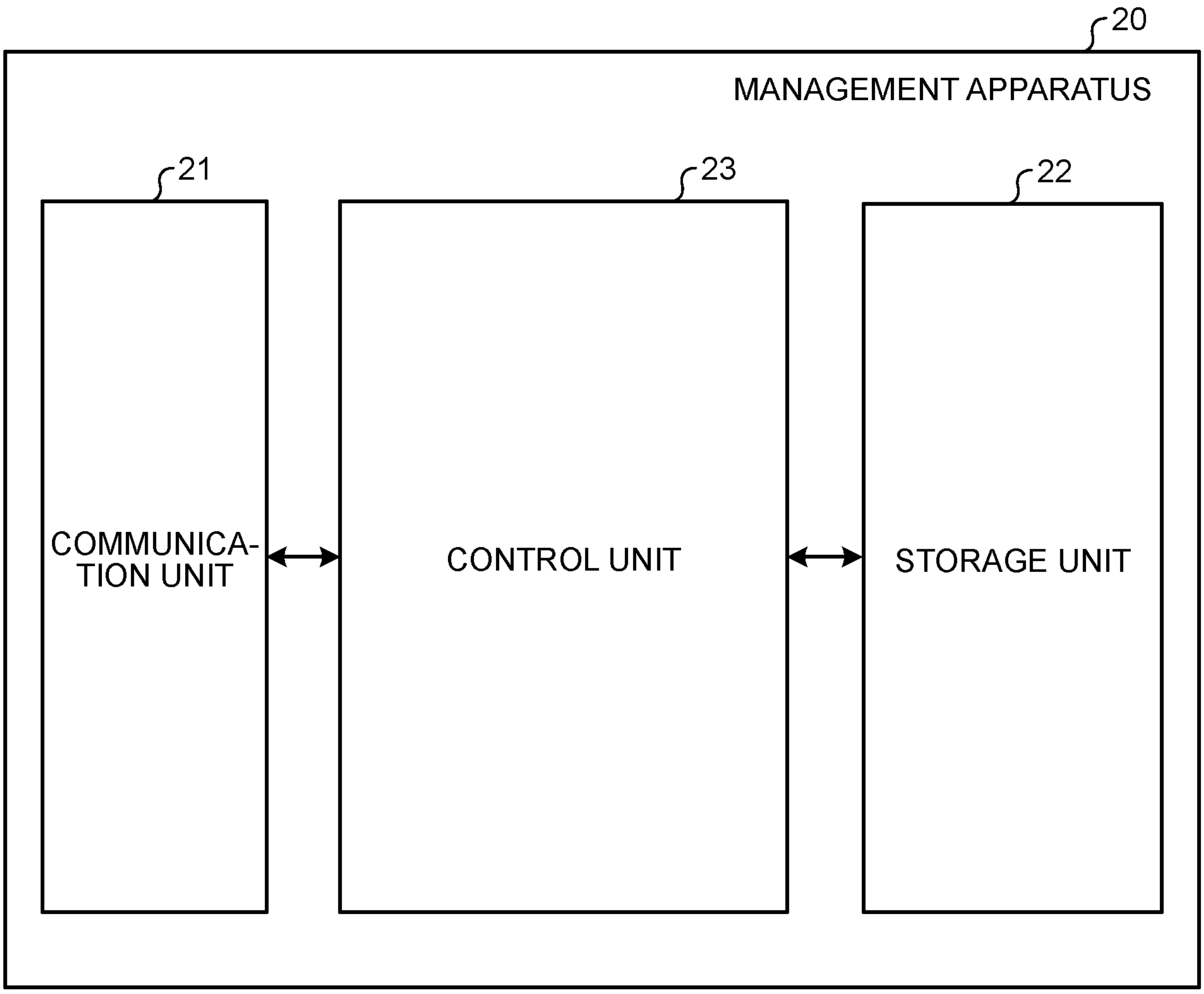
20
MANAGEMENT APPARATUS
21
23
22
COMMUNICA-
TION UNIT
CONTROL UNIT
STORAGE UNIT

FIG.5

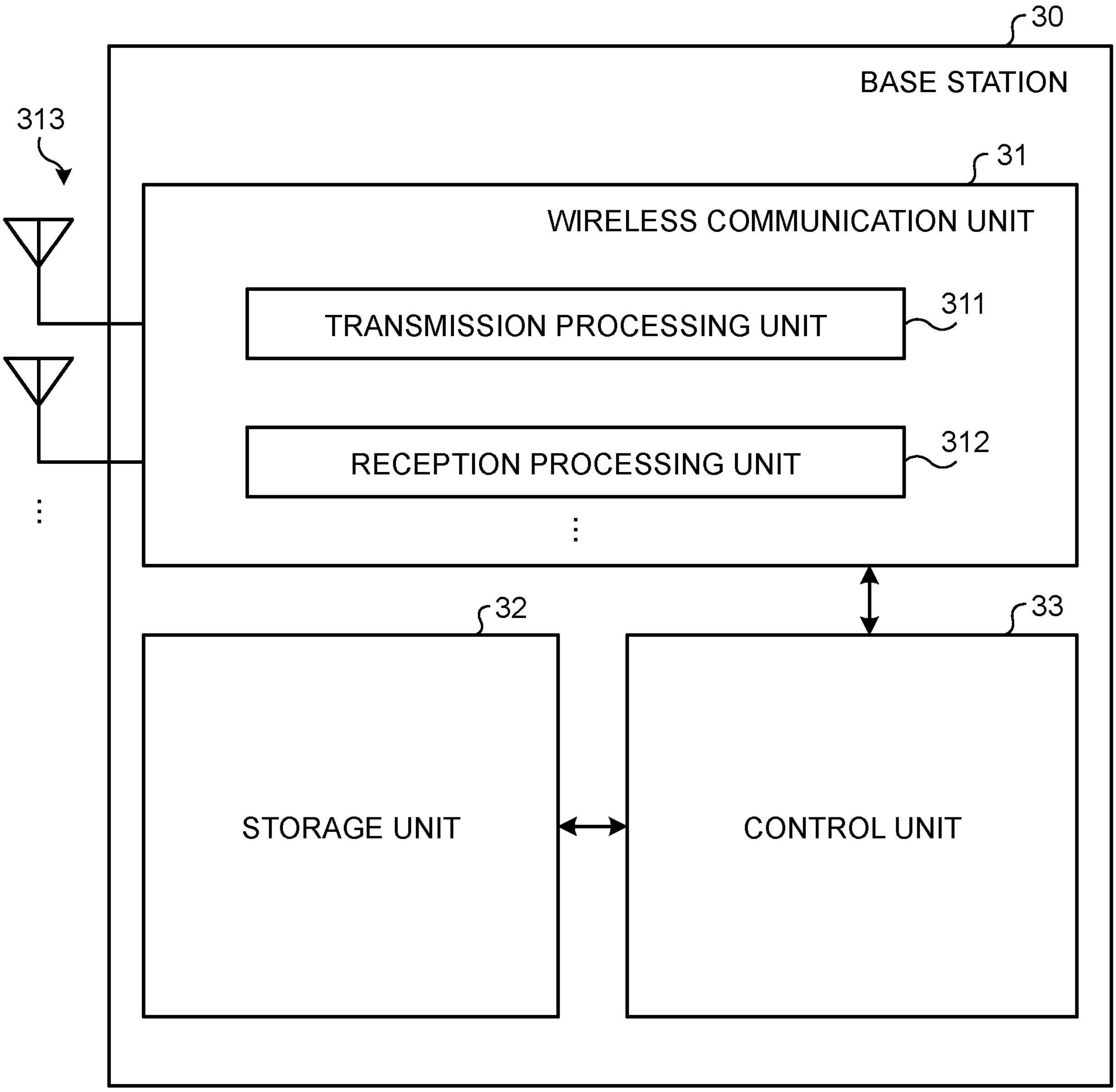
30
BASE STATION
313
31
WIRELESS COMMUNICATION UNIT
TRANSMISSION PROCESSING UNIT
311
RECEPTION PROCESSING UNIT
312
32
33
STORAGE UNIT
CONTROL UNIT

FIG.6

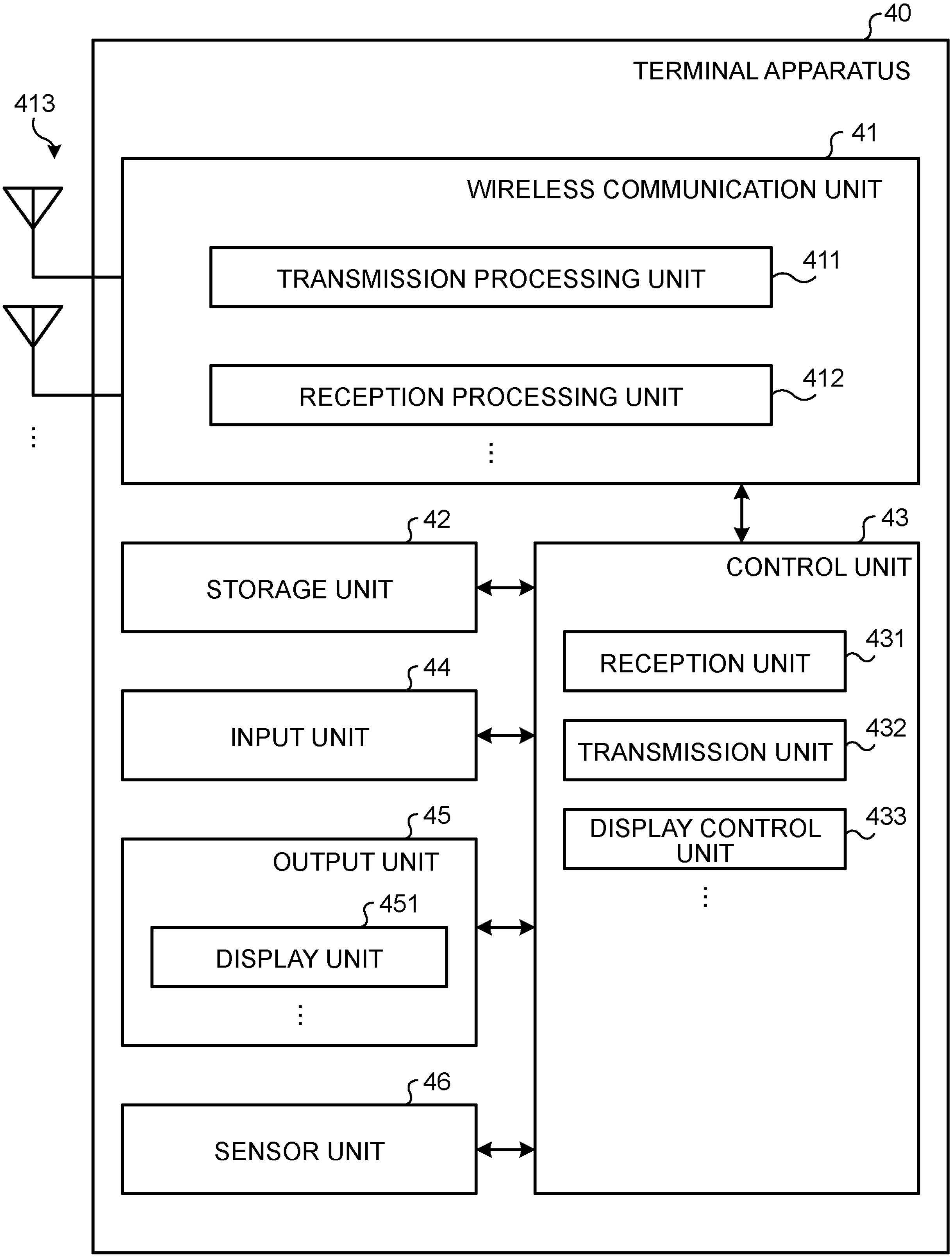
40
TERMINAL APPARATUS
413
41
WIRELESS COMMUNICATION UNIT
TRANSMISSION PROCESSING UNIT
411
RECEPTION PROCESSING UNIT
412
42
STORAGE UNIT
43
CONTROL UNIT
RECEPTION UNIT
431
TRANSMISSION UNIT
432
DISPLAY CONTROL UNIT
433
44
INPUT UNIT
45
OUTPUT UNIT
451
DISPLAY UNIT
46
SENSOR UNIT

FIG.7

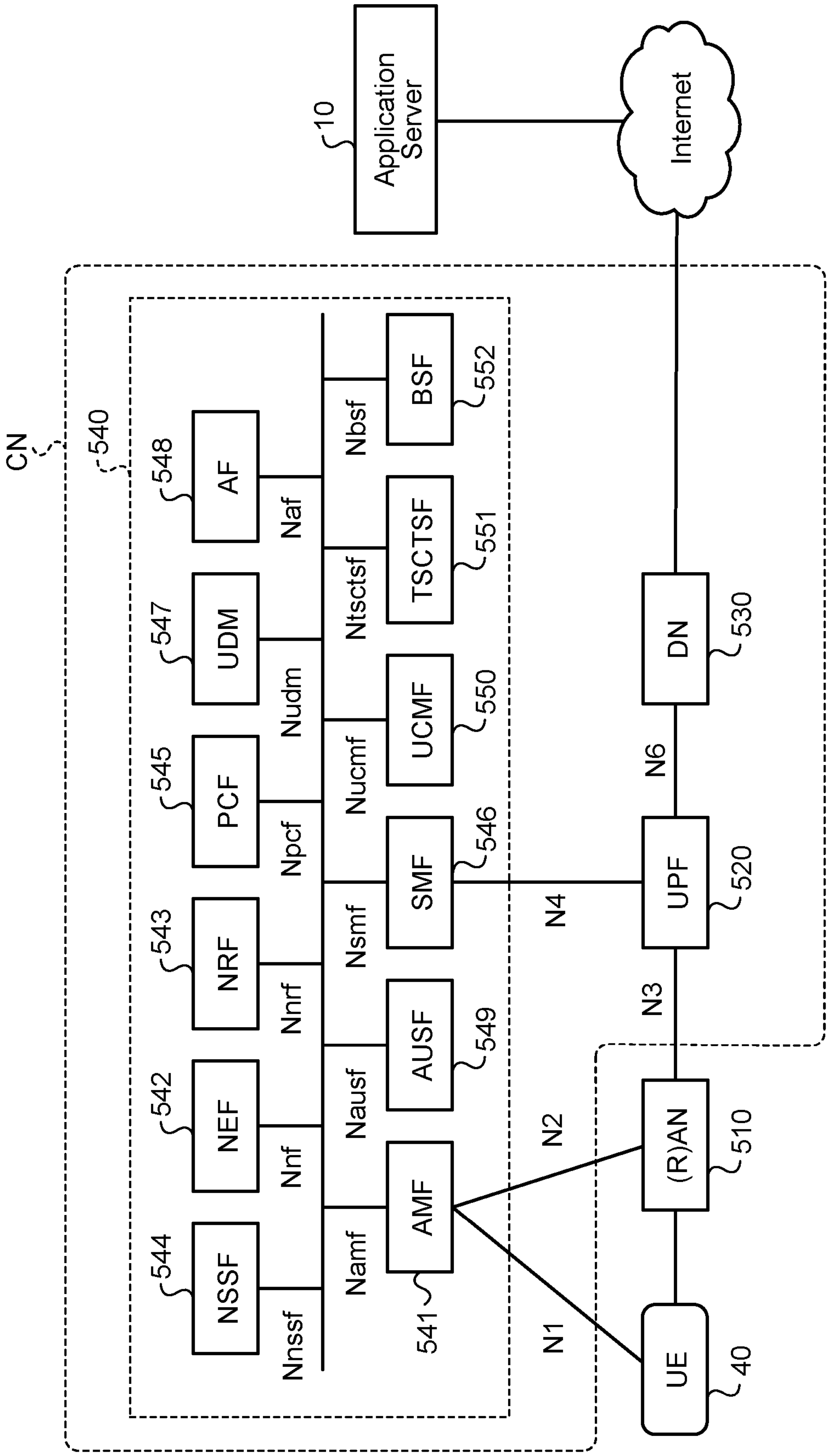
10
Application Server
Internet
CN
540
548
AF
Naf
547
UDM
Nudm
545
PCF
Npcf
543
NRF
Nnrf
542
NEF
Nnf
544
NSSF
Nnssf
Nbsf
BSF
552
Ntsctsf
TSCTSF
551
Nucmf
UCMF
550
Nsmf
SMF
546
Nausf
AUSF
549
Namf
AMF
541
N1
N2
N3
N4
N6
UE
40
(R)AN
510
UPF
520
DN
530

FIG.8

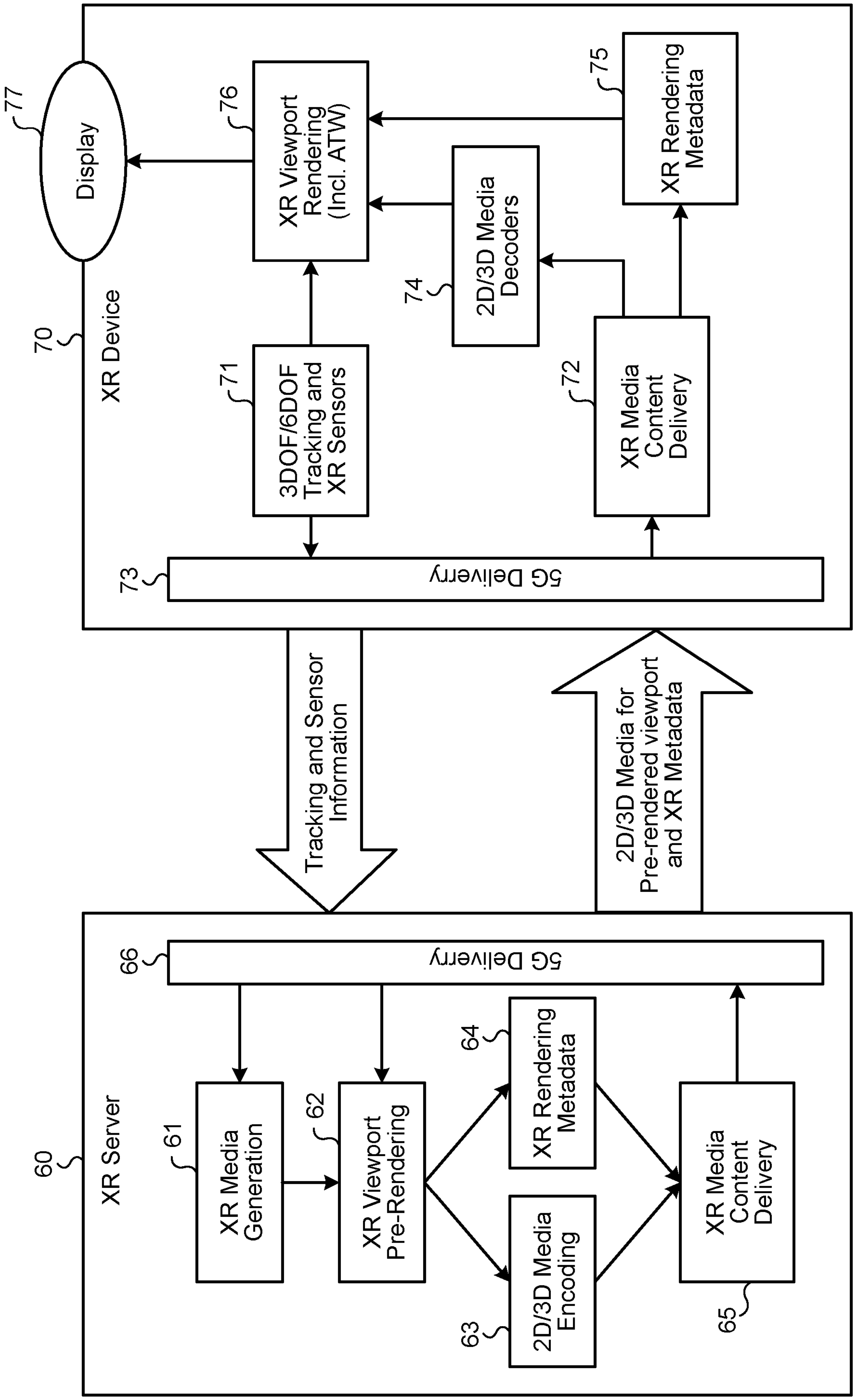

70
XR Device
77
Display
76
XR Viewport Rendering (Incl. ATW)
75
XR Rendering Metadata
74
2D/3D Media Decoders
71
3DOF/6DOF Tracking and XR Sensors
72
XR Media Content Delivery
73
5G Delivery
Tracking and Sensor Information
2D/3D Media for Pre-rendered viewport and XR Metadata
60
XR Server
66
5G Delivery
61
XR Media Generation
62
XR Viewport Pre-Rendering
64
XR Rendering Metadata
63
2D/3D Media Encoding
65
XR Media Content Delivery

FIG.9

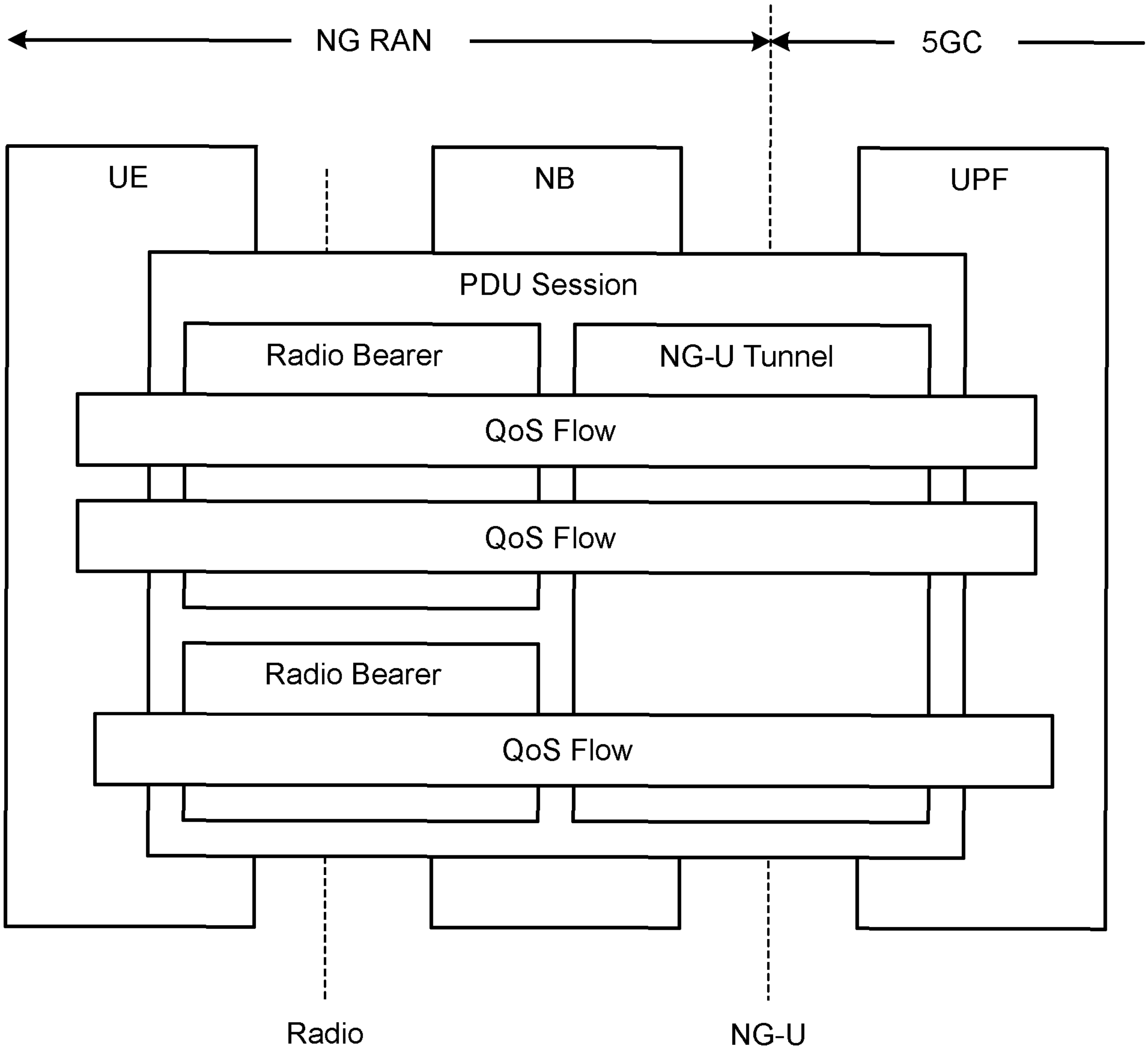
NG RAN
5GC
UE
NB
UPF
PDU Session
Radio Bearer
NG-U Tunnel
QoS Flow
QoS Flow
Radio Bearer
QoS Flow
Radio
NG-U

FIG.10

| Slice/Service Type | SST value | Characteristics |
|---|---|---|
| eMBB | 1 | Slice suitable for the handling of 5G enhanced Mobile Broadband. |
| URLLC | 2 | Slice suitable for the handling of ultra- reliable low latency communications. |
| MIoT | 3 | Slice suitable for the handling of massive IoT. |
| V2X | 4 | Slice suitable for the handling of V2X services. |
| HMTC | 5 | Slice suitable for the handling of High-Performance Machine-Type Communications. |
| HDLLC | 6 | Slice suitable for the handling of High Data rate and Low Latency Communications. |
| ... | ... | ... |

FIG.11

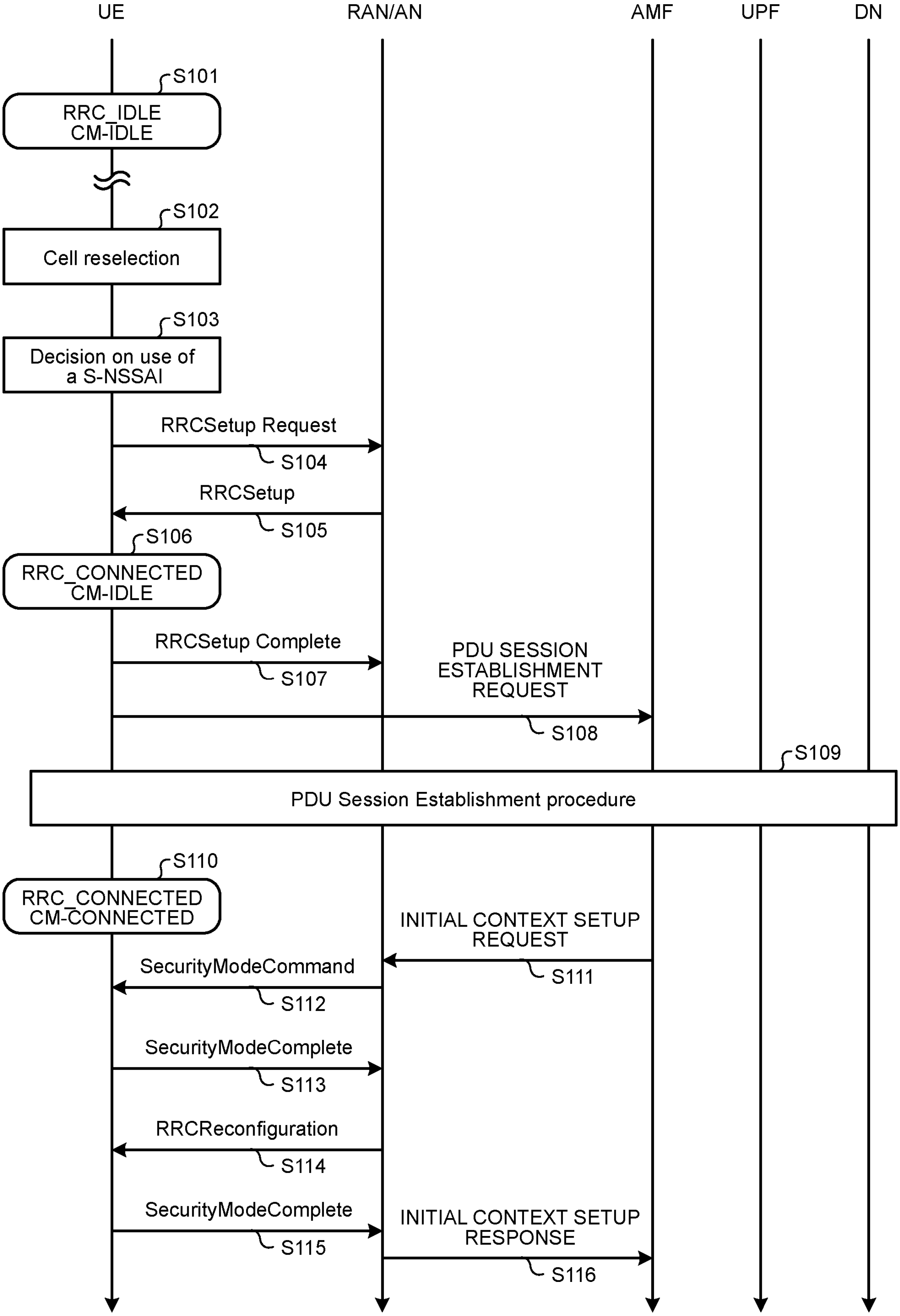
UE
RAN/AN
AMF
UPF
DN
S101
RRC_IDLE
CM-IDLE
S102
Cell reselection
S103
Decision on use of
a S-NSSAI
RRCSetup Request
S104
RRCSetup
S105
S106
RRC_CONNECTED
CM-IDLE
RRCSetup Complete
S107
PDU SESSION
ESTABLISHMENT
REQUEST
S108
S109
PDU Session Establishment procedure
S110
RRC_CONNECTED
CM-CONNECTED
INITIAL CONTEXT SETUP
REQUEST
S111
SecurityModeCommand
S112
SecurityModeComplete
S113
RRCReconfiguration
S114
SecurityModeComplete
S115
INITIAL CONTEXT SETUP
RESPONSE
S116

FIG.12A

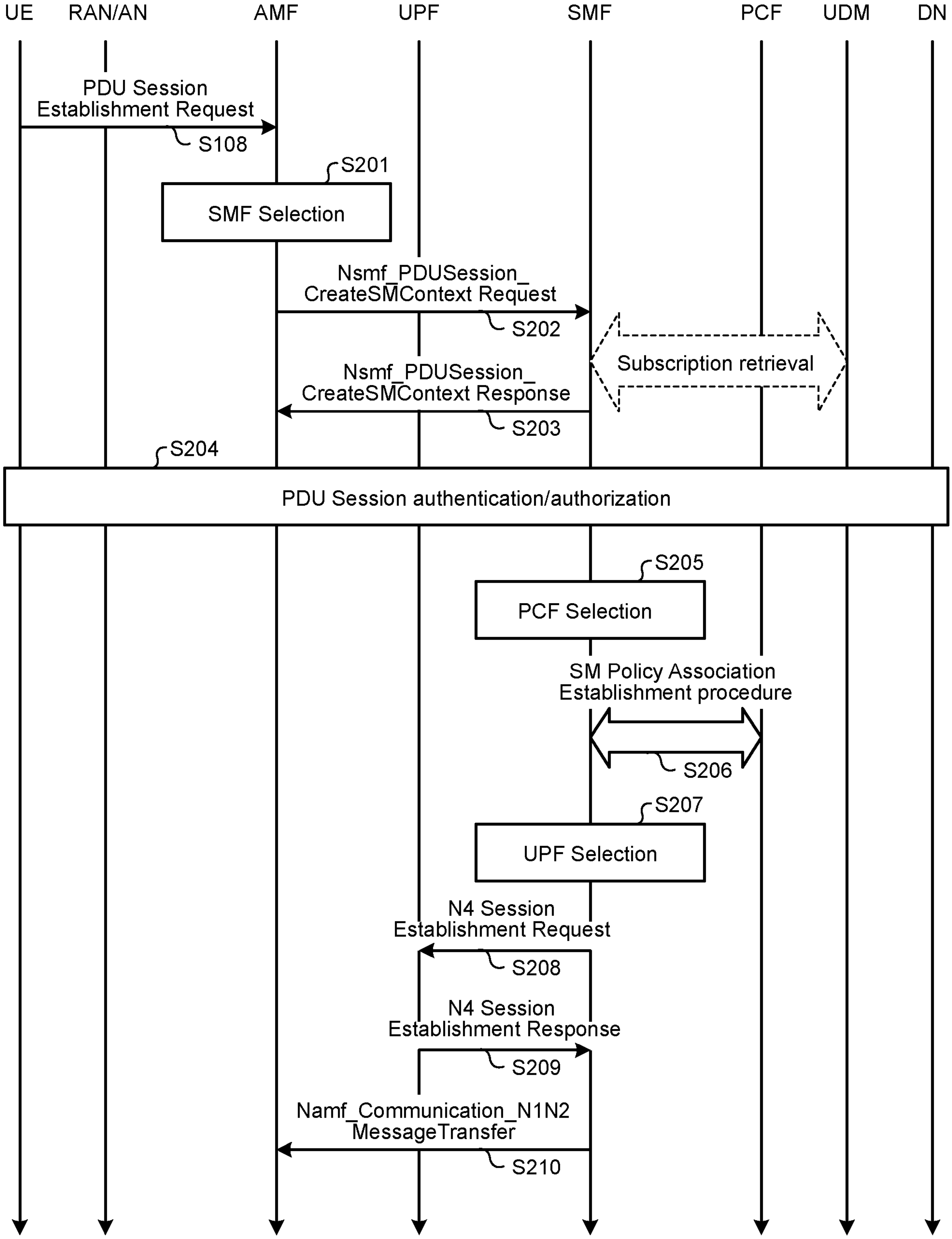
UE
RAN/AN
AMF
UPF
SMF
PCF
UDM
DN
PDU Session
Establishment Request
S108
S201
SMF Selection
Nsmf_PDUSession_
CreateSMContext Request
S202
Subscription retrieval
Nsmf_PDUSession_
CreateSMContext Response
S203
S204
PDU Session authentication/authorization
S205
PCF Selection
SM Policy Association
Establishment procedure
S206
S207
UPF Selection
N4 Session
Establishment Request
S208
N4 Session
Establishment Response
S209
Namf_Communication_N1N2
MessageTransfer
S210

FIG.12B

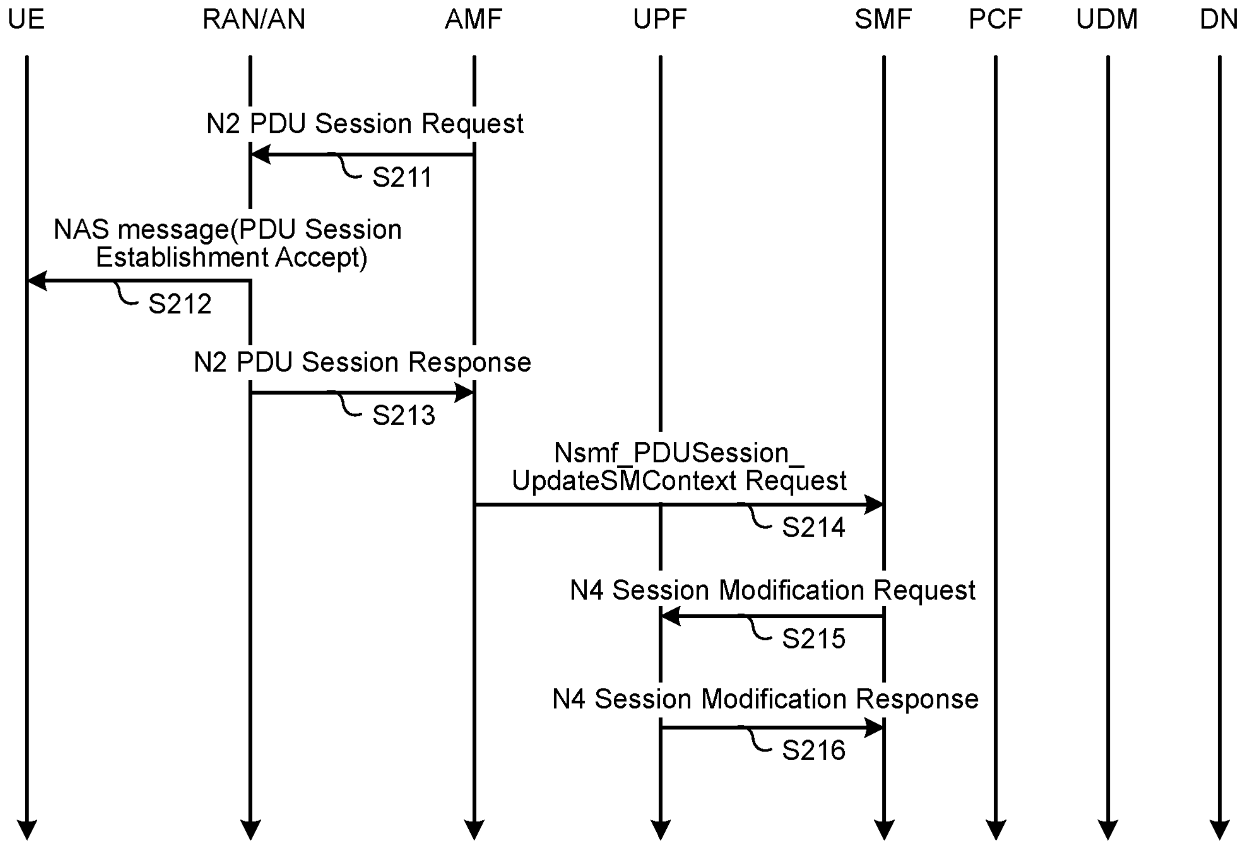
UE
RAN/AN
AMF
UPF
SMF
PCF
UDM
DN
N2 PDU Session Request
S211
NAS message(PDU Session Establishment Accept)
S212
N2 PDU Session Response
S213
Nsmf_PDUSession_ UpdateSMContext Request
S214
N4 Session Modification Request
S215
N4 Session Modification Response
S216

FIG.13

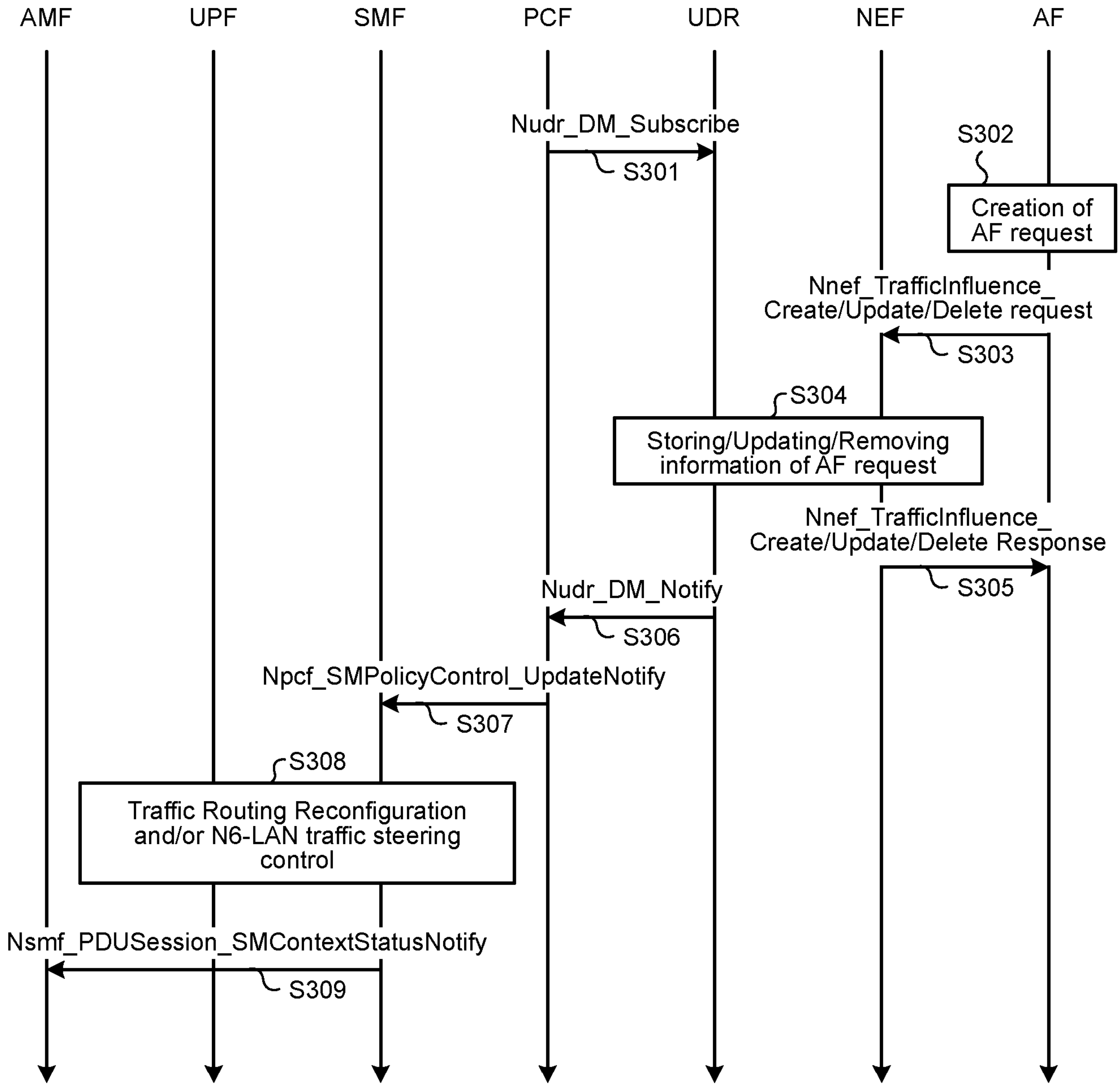
AMF
UPF
SMF
PCF
UDR
NEF
AF
Nudr_DM_Subscribe
S301
S302
Creation of AF request
Nnef_TrafficInfluence_ Create/Update/Delete request
S303
S304
Storing/Updating/Removing information of AF request
Nnef_TrafficInfluence_ Create/Update/Delete Response
S305
Nudr_DM_Notify
S306
Npcf_SMPolicyControl_UpdateNotify
S307
S308
Traffic Routing Reconfiguration and/or N6-LAN traffic steering control
Nsmf_PDUSession_SMContextStatusNotify
S309

FIG.14

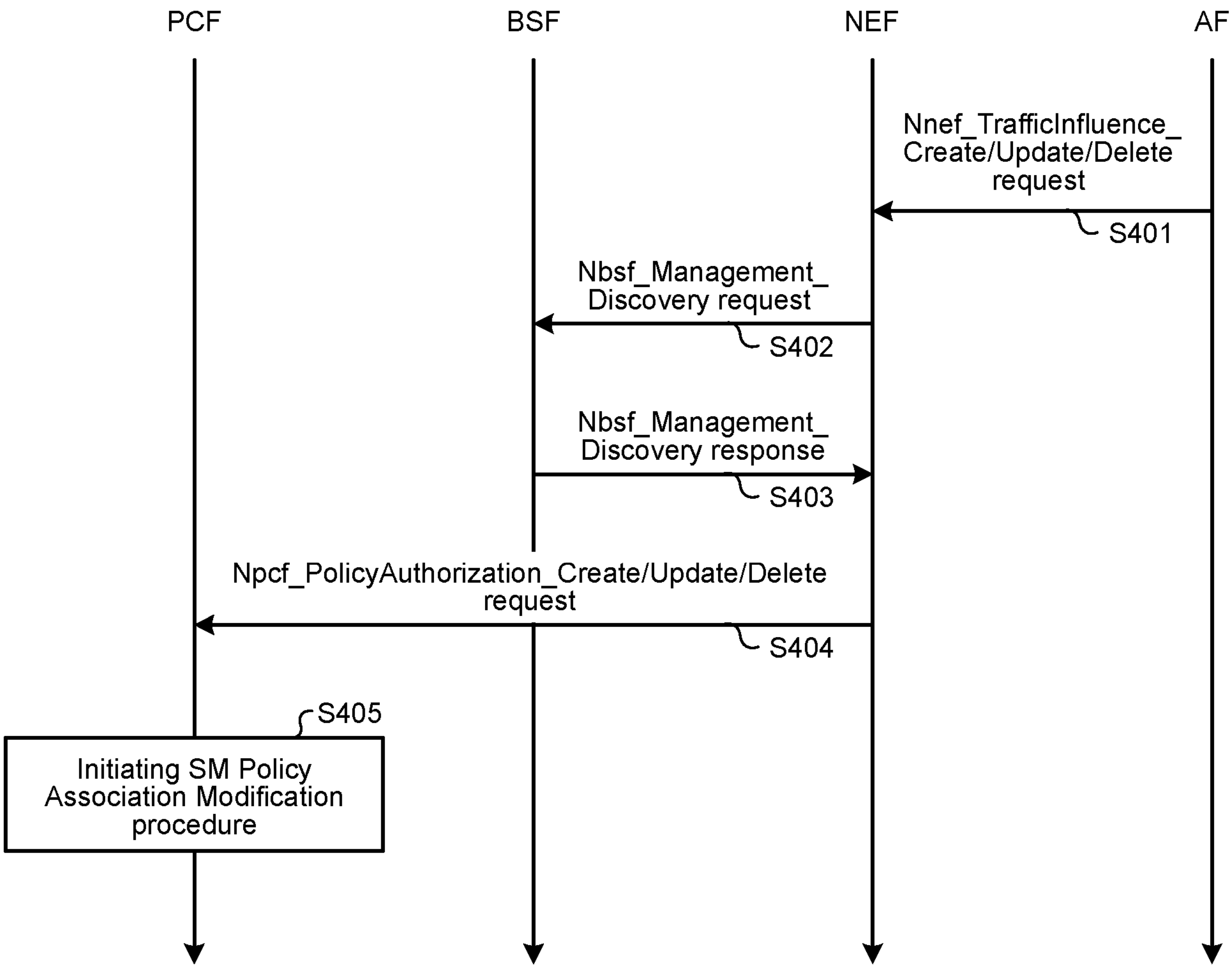
PCF
BSF
NEF
AF
Nnef_TrafficInfluence_Create/Update/Delete request
S401
Nbsf_Management_Discovery request
S402
Nbsf_Management_Discovery response
S403
Npcf_PolicyAuthorization_Create/Update/Delete request
S404
S405
Initiating SM Policy Association Modification procedure

FIG.15

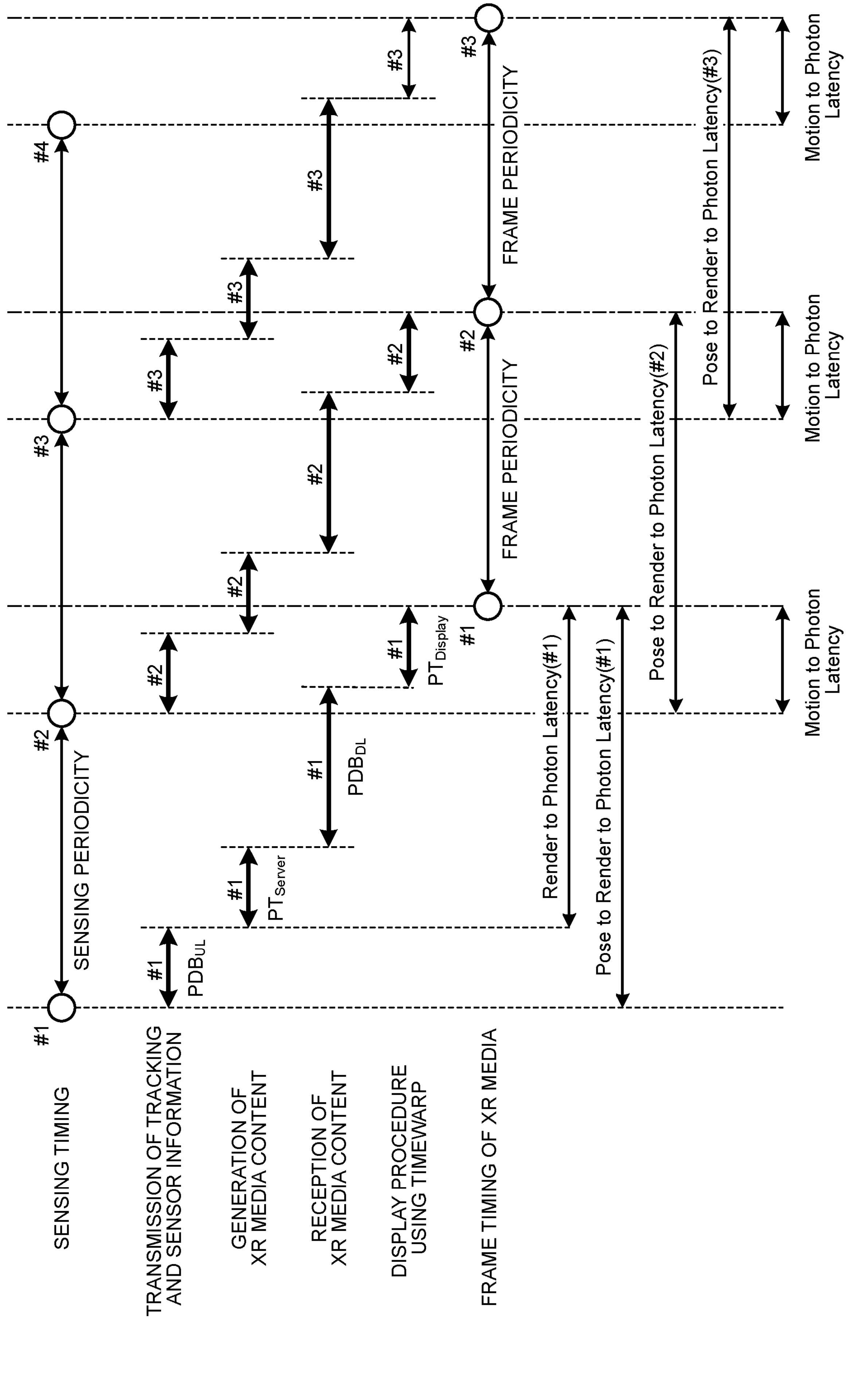
SENSING TIMING
TRANSMISSION OF TRACKING AND SENSOR INFORMATION
GENERATION OF XR MEDIA CONTENT
RECEPTION OF XR MEDIA CONTENT
DISPLAY PROCEDURE USING TIMEWARP
FRAME TIMING OF XR MEDIA
#1
#2
#3
#4
SENSING PERIODICITY
$PDB_{UL}$
$PT_{Server}$
$PDB_{DL}$
$PT_{Display}$
FRAME PERIODICITY
FRAME PERIODICITY
Render to Photon Latency(#1)
Pose to Render to Photon Latency(#1)
Pose to Render to Photon Latency(#2)
Pose to Render to Photon Latency(#3)
Motion to Photon Latency
Motion to Photon Latency
Motion to Photon Latency
Motion to Photon Latency

FIG.16

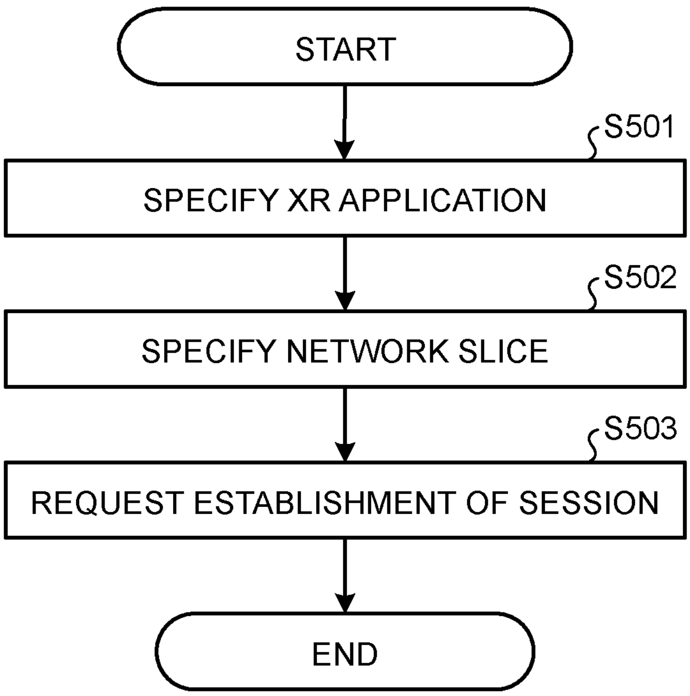
START
S501
SPECIFY XR APPLICATION
S502
SPECIFY NETWORK SLICE
S503
REQUEST ESTABLISHMENT OF SESSION
END

FIG.17

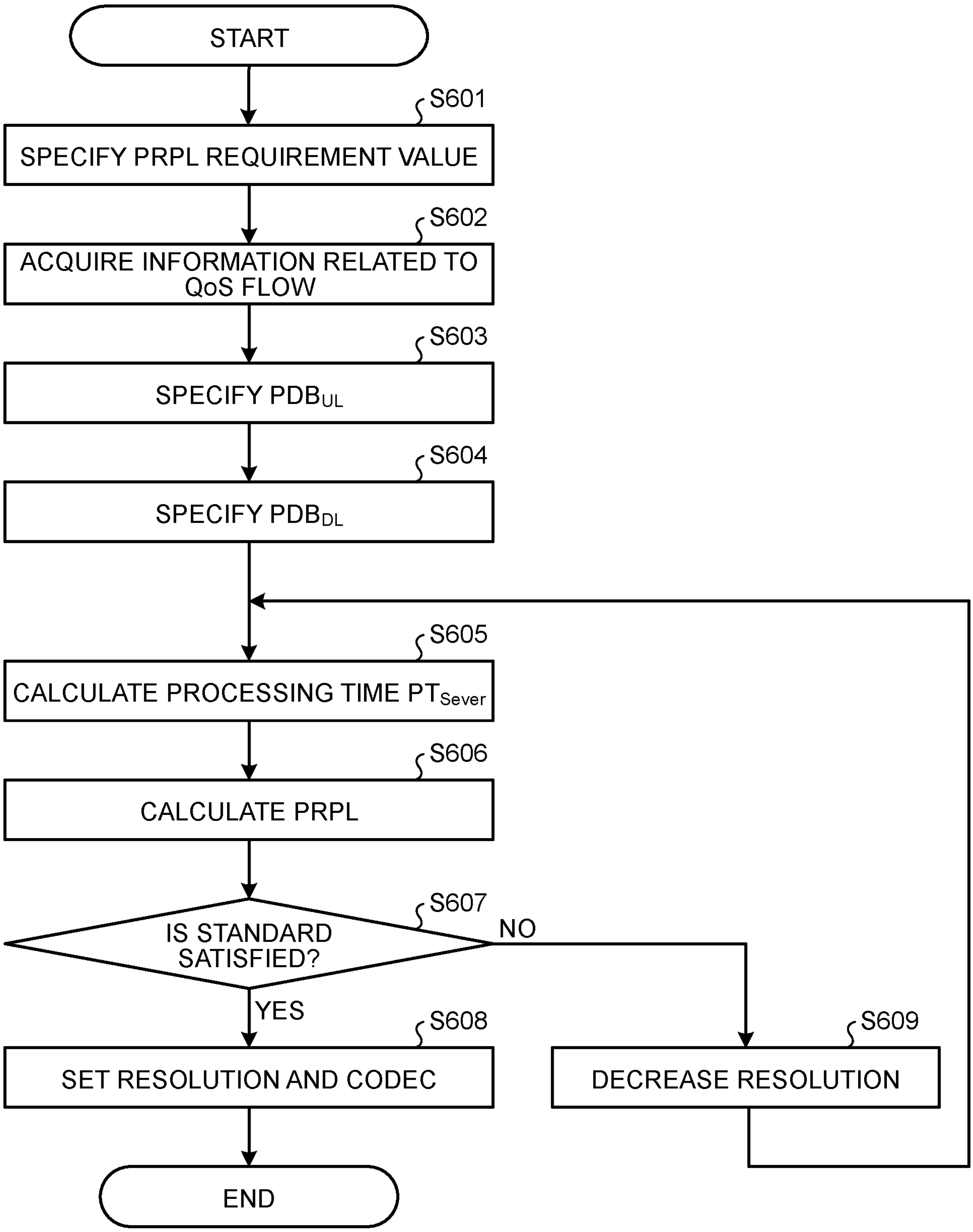
START
S601
SPECIFY PRPL REQUIREMENT VALUE
S602
ACQUIRE INFORMATION RELATED TO QoS FLOW
S603
SPECIFY $PDB_{UL}$
S604
SPECIFY $PDB_{DL}$
S605
CALCULATE PROCESSING TIME $PT_{Sever}$
S606
CALCULATE PRPL
S607
IS STANDARD SATISFIED?
NO
YES
S608
SET RESOLUTION AND CODEC
S609
DECREASE RESOLUTION
END

FIG.18

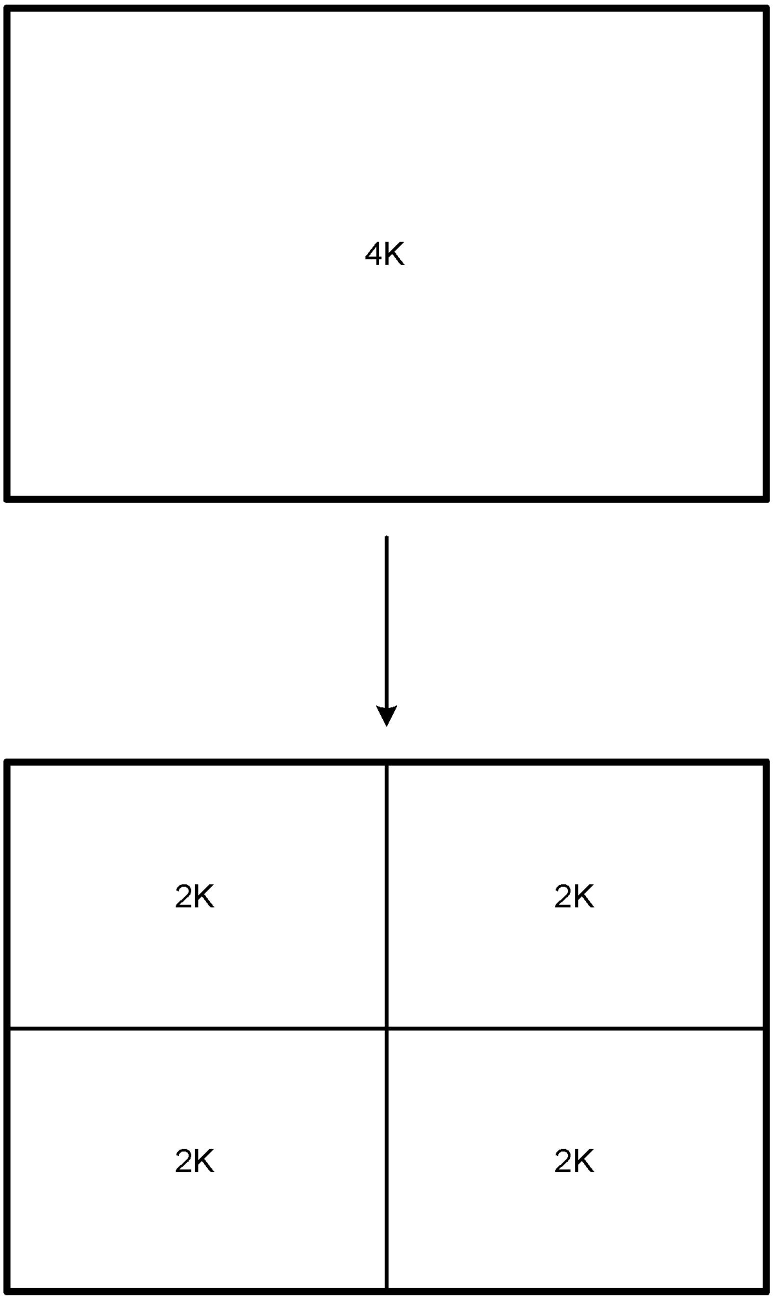

FIG.19

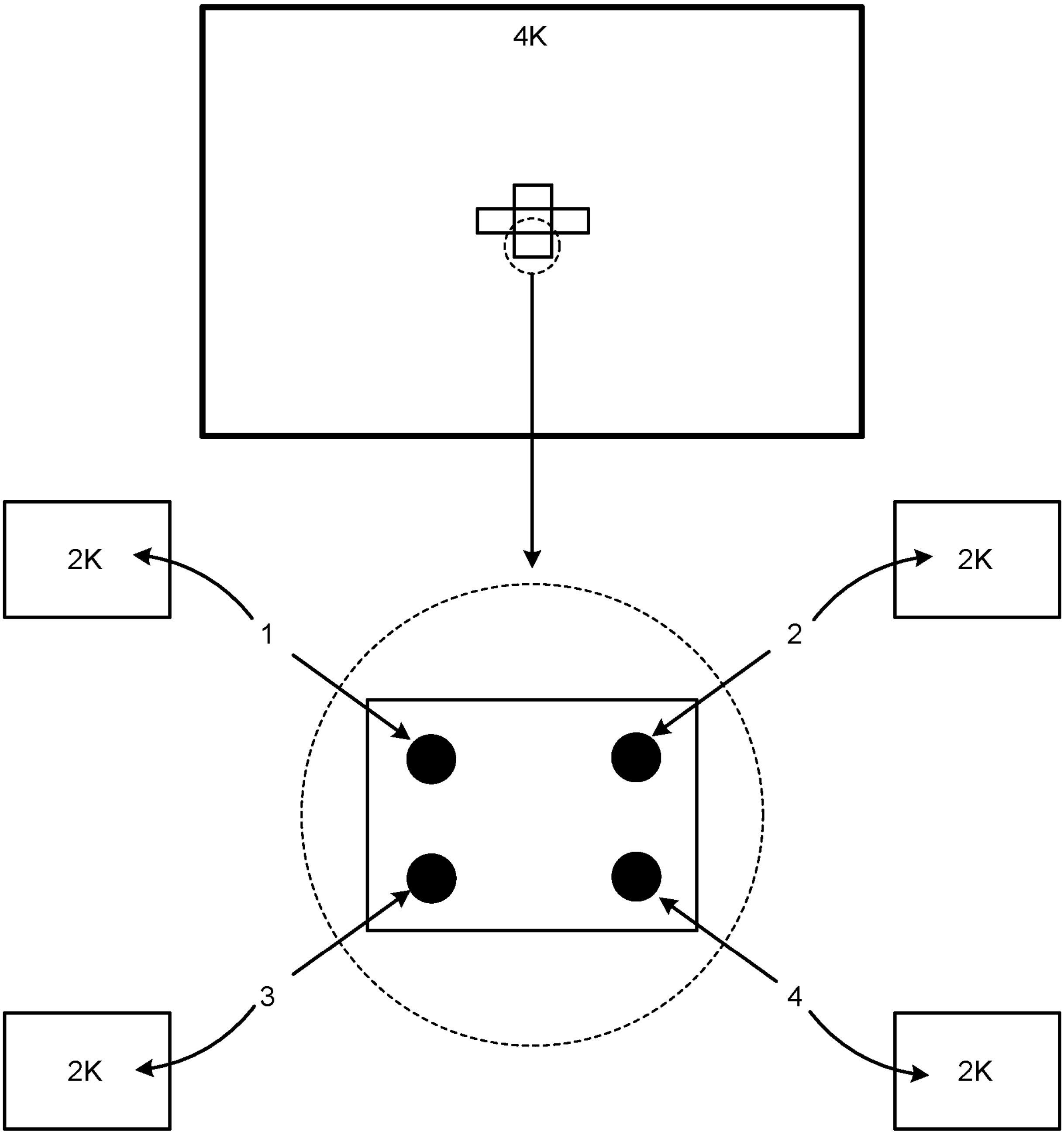

FIG.20

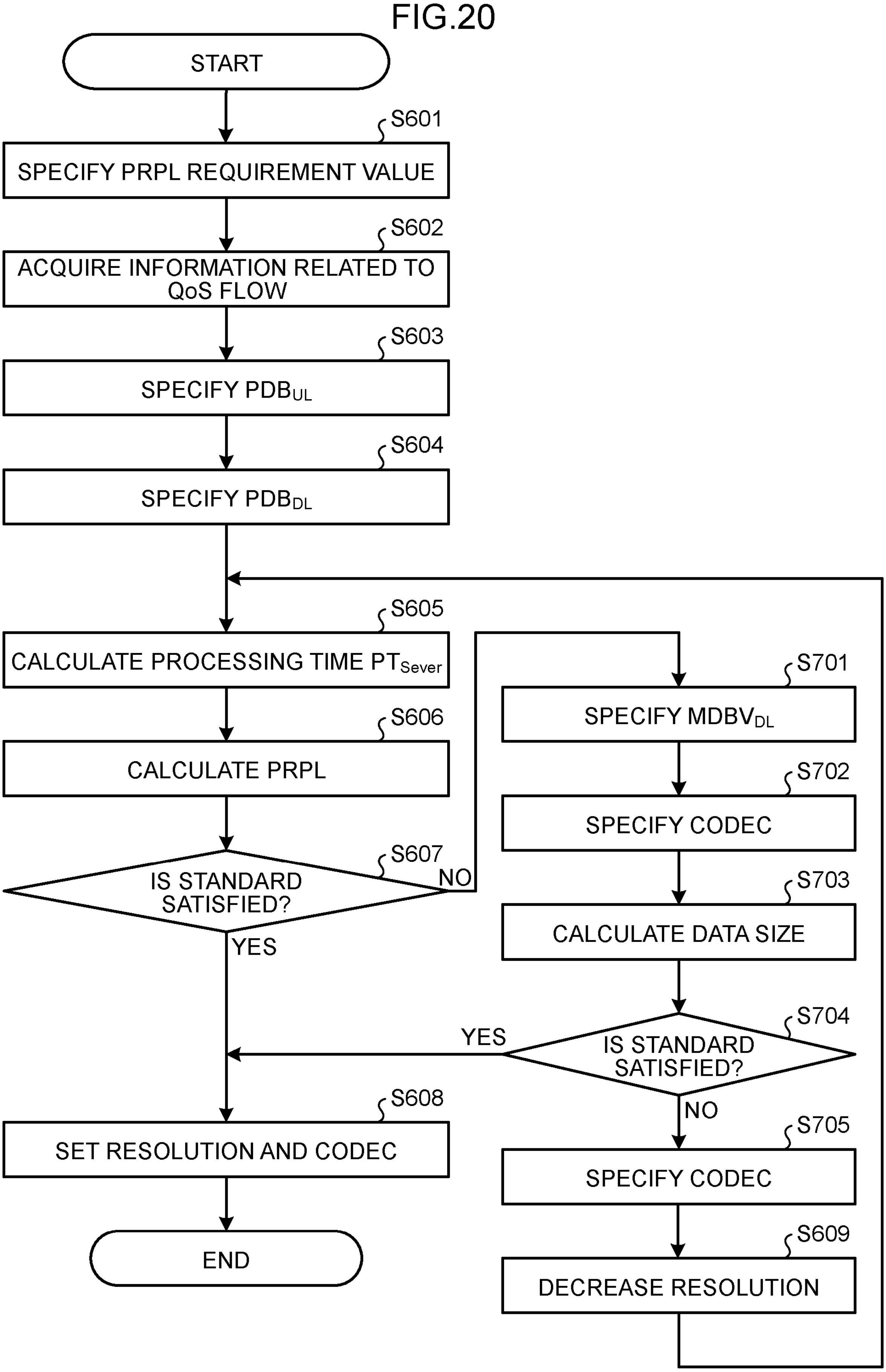
START
S601
SPECIFY PRPL REQUIREMENT VALUE
S602
ACQUIRE INFORMATION RELATED TO QoS FLOW
S603
SPECIFY $PDB_{UL}$
S604
SPECIFY $PDB_{DL}$
S605
CALCULATE PROCESSING TIME $PT_{Sever}$
S606
CALCULATE PRPL
S607
IS STANDARD SATISFIED?
NO
YES
S701
SPECIFY $MDBV_{DL}$
S702
SPECIFY CODEC
S703
CALCULATE DATA SIZE
S704
IS STANDARD SATISFIED?
YES
NO
S705
SPECIFY CODEC
S609
DECREASE RESOLUTION
S608
SET RESOLUTION AND CODEC
END

FIG.21

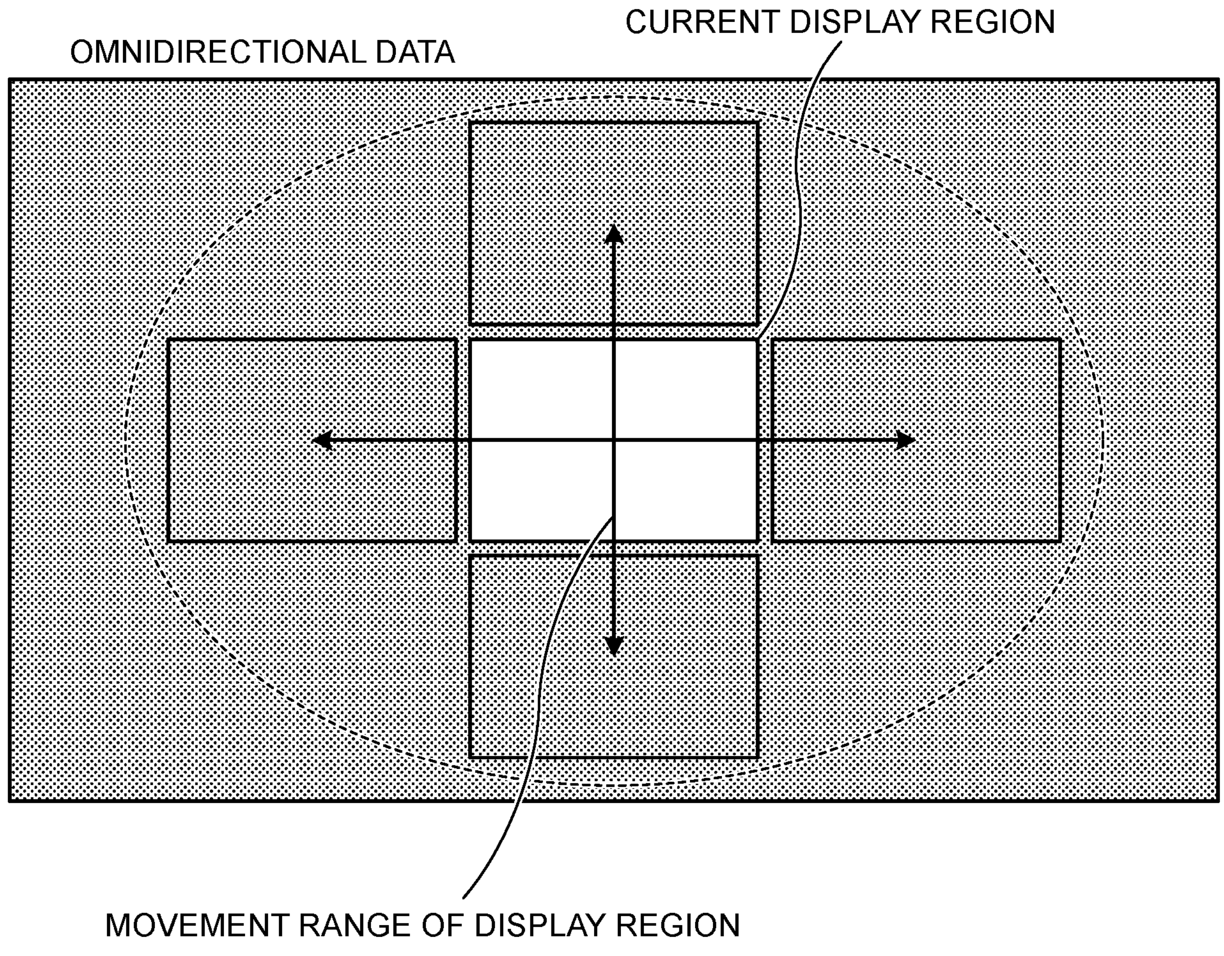
CURRENT DISPLAY REGION
OMNIDIRECTIONAL DATA
MOVEMENT RANGE OF DISPLAY REGION

FIG.22

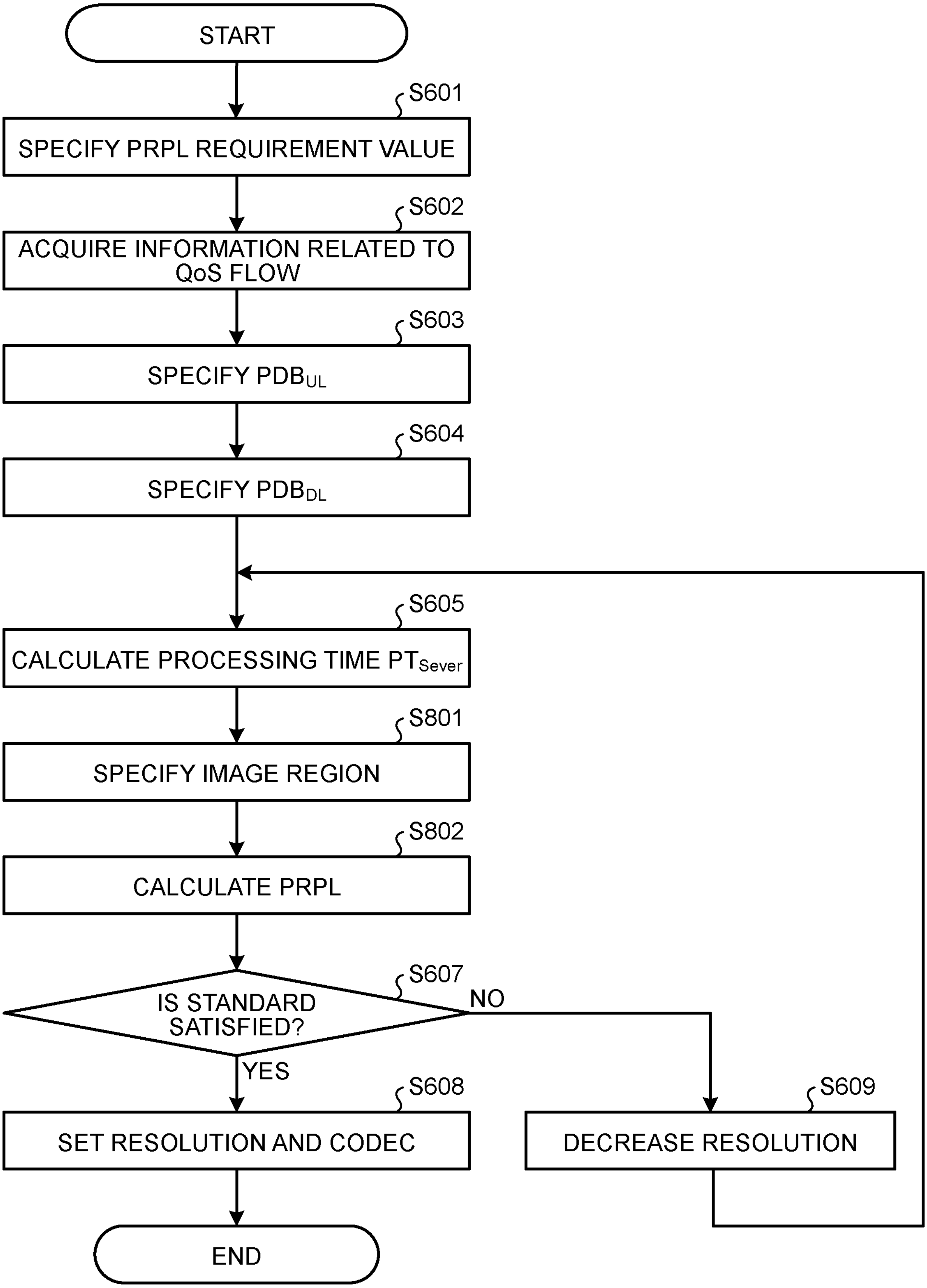
START
S601
SPECIFY PRPL REQUIREMENT VALUE
S602
ACQUIRE INFORMATION RELATED TO QoS FLOW
S603
SPECIFY PDB$_{UL}$
S604
SPECIFY PDB$_{DL}$
S605
CALCULATE PROCESSING TIME PT$_{Sever}$
S801
SPECIFY IMAGE REGION
S802
CALCULATE PRPL
S607
IS STANDARD SATISFIED?
NO
YES
S608
SET RESOLUTION AND CODEC
S609
DECREASE RESOLUTION
END

FIG.23

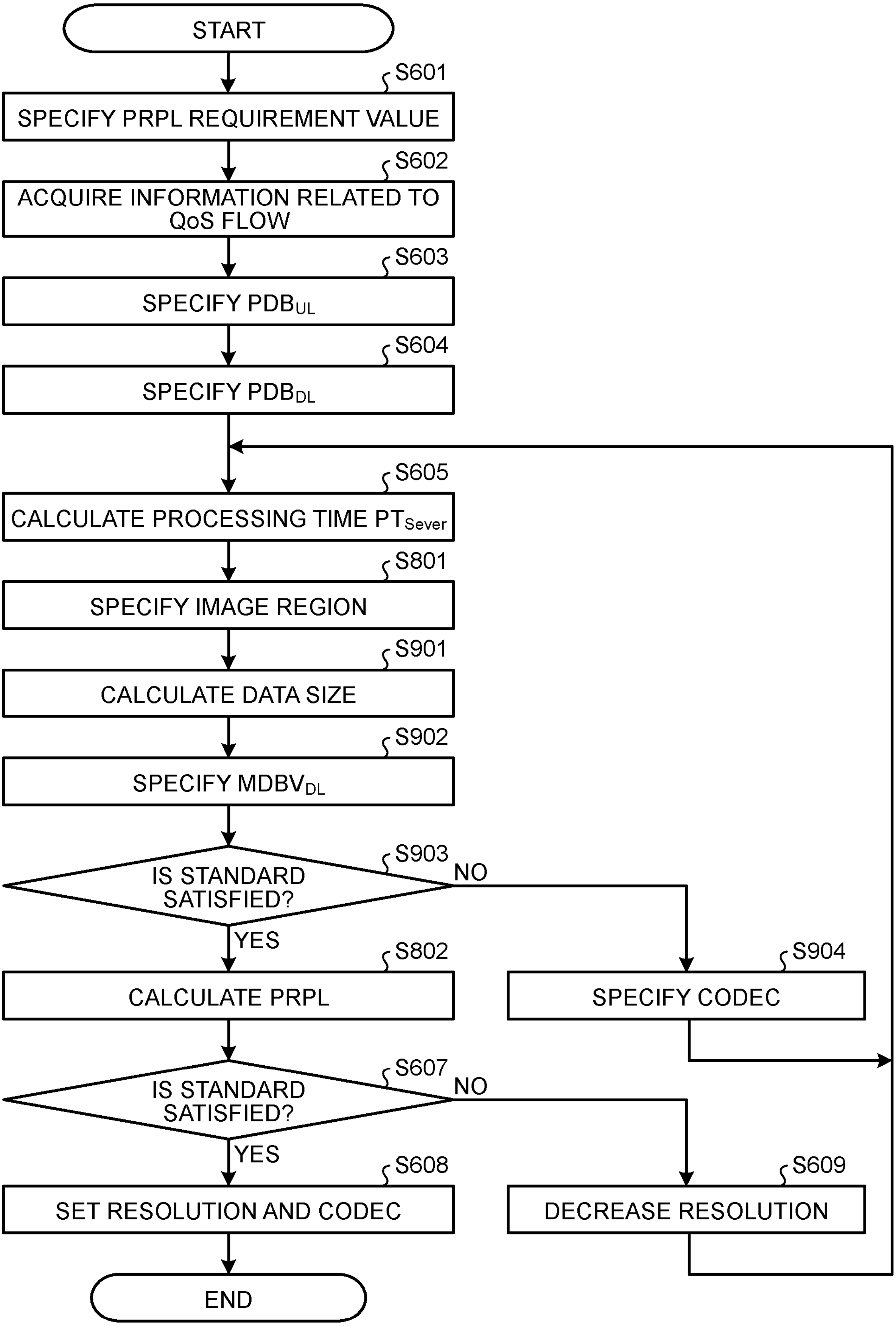
START
S601
SPECIFY PRPL REQUIREMENT VALUE
S602
ACQUIRE INFORMATION RELATED TO QoS FLOW
S603
SPECIFY PDB$_{UL}$
S604
SPECIFY PDB$_{DL}$
S605
CALCULATE PROCESSING TIME PT$_{Sever}$
S801
SPECIFY IMAGE REGION
S901
CALCULATE DATA SIZE
S902
SPECIFY MDBV$_{DL}$
S903
IS STANDARD SATISFIED?
NO
YES
S802
CALCULATE PRPL
S904
SPECIFY CODEC
S607
IS STANDARD SATISFIED?
NO
YES
S608
SET RESOLUTION AND CODEC
S609
DECREASE RESOLUTION
END

FIG.24

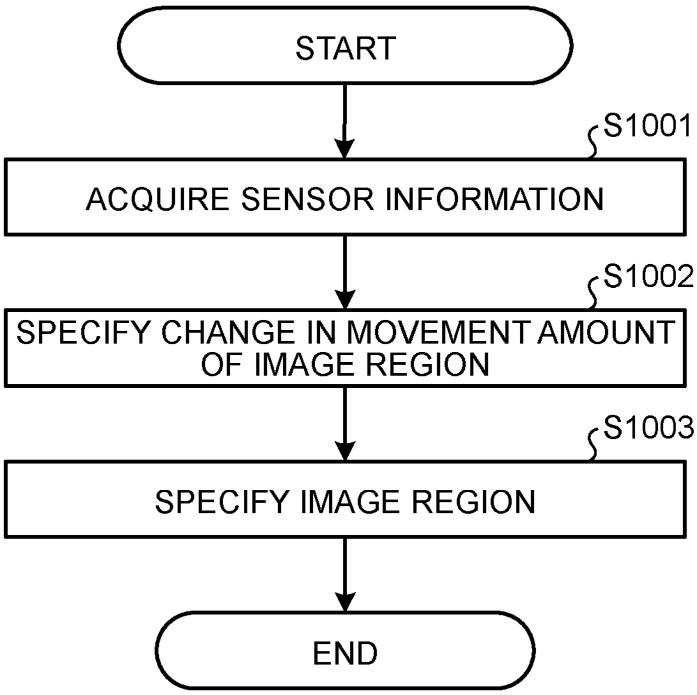
START
S1001
ACQUIRE SENSOR INFORMATION
S1002
SPECIFY CHANGE IN MOVEMENT AMOUNT OF IMAGE REGION
S1003
SPECIFY IMAGE REGION
END

FIG.25

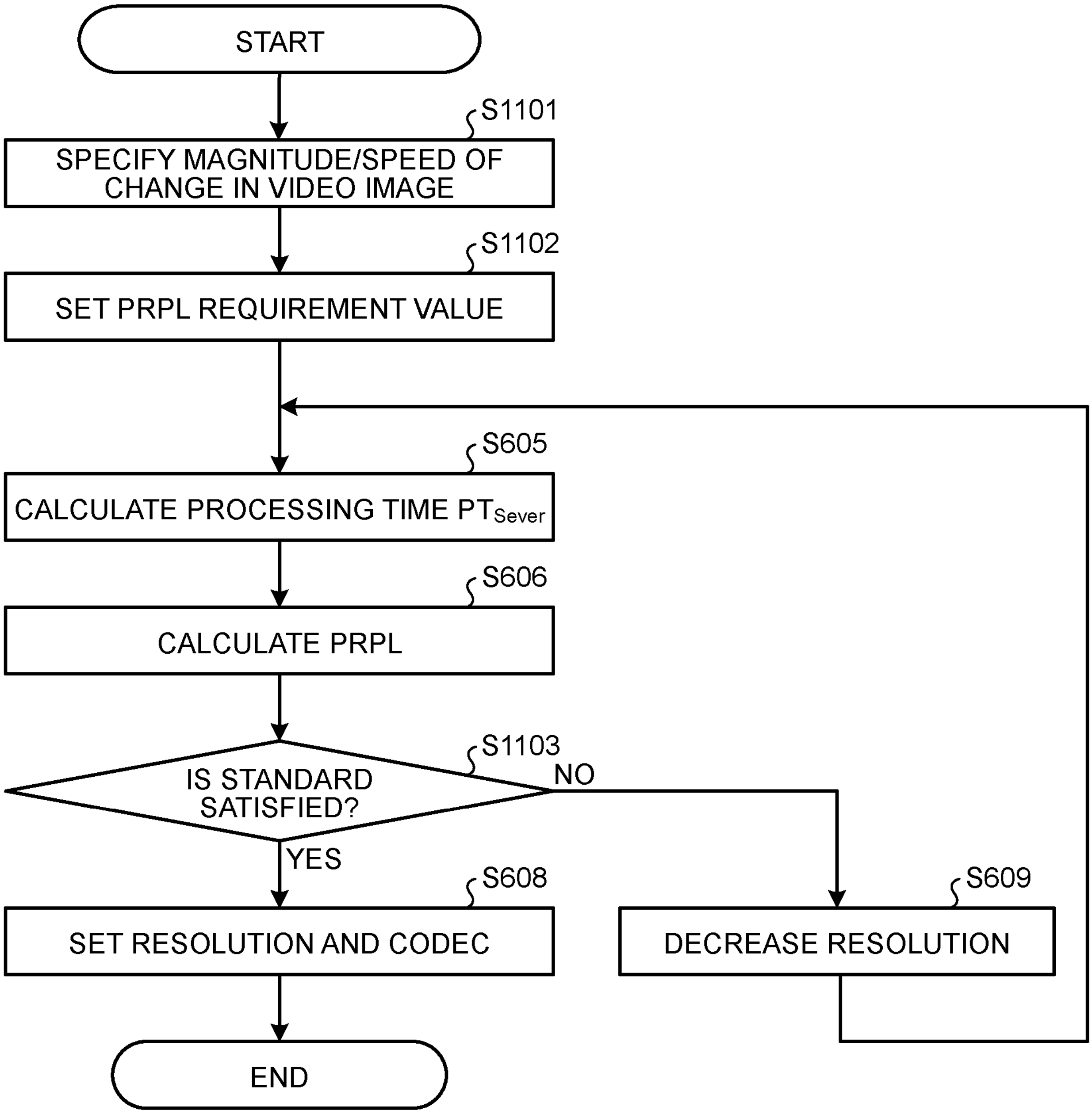
START
S1101
SPECIFY MAGNITUDE/SPEED OF CHANGE IN VIDEO IMAGE
S1102
SET PRPL REQUIREMENT VALUE
S605
CALCULATE PROCESSING TIME PTSever
S606
CALCULATE PRPL
S1103
IS STANDARD SATISFIED?
NO
YES
S608
SET RESOLUTION AND CODEC
S609
DECREASE RESOLUTION
END

FIG.26

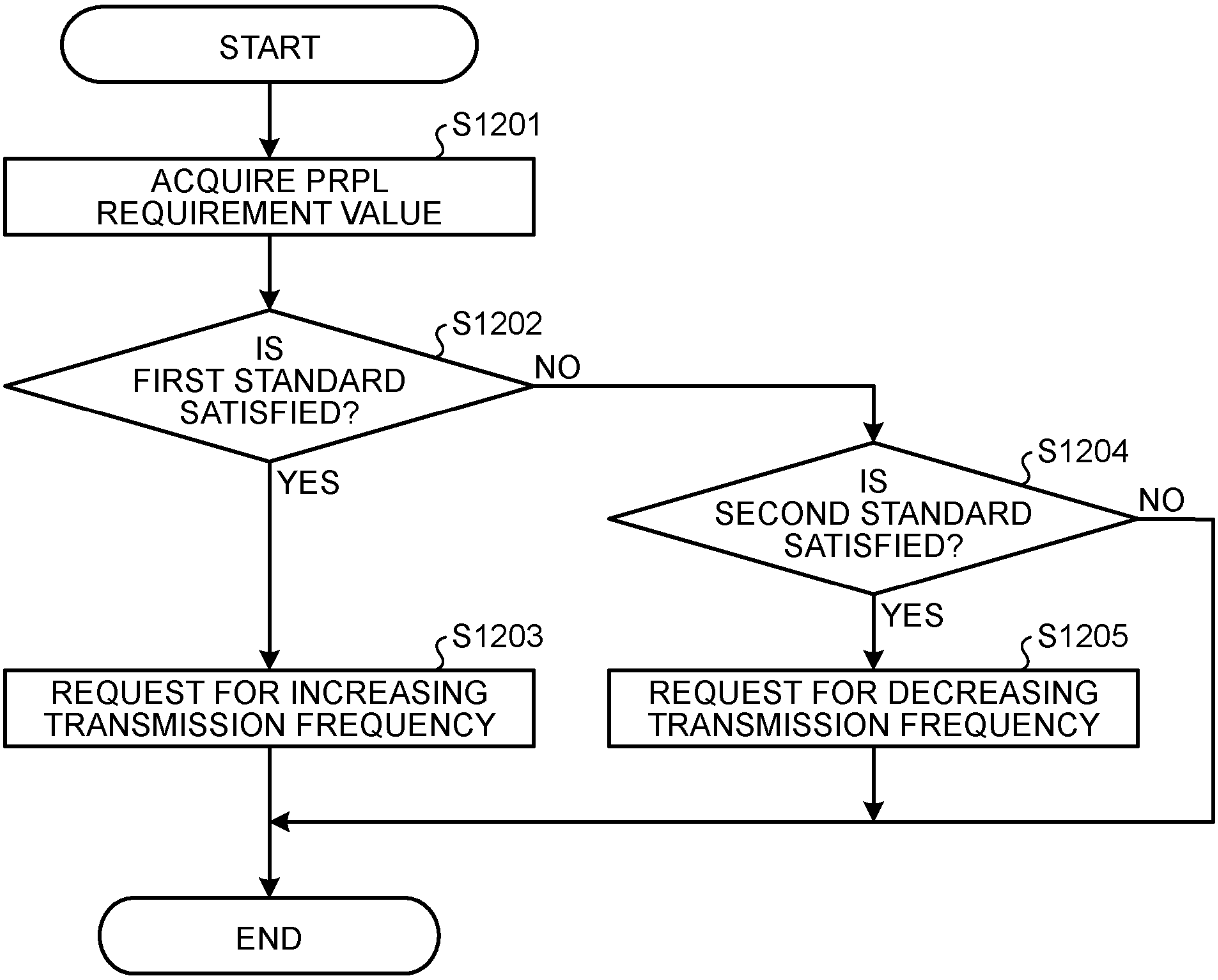
START
S1201
ACQUIRE PRPL REQUIREMENT VALUE
S1202
IS FIRST STANDARD SATISFIED?
NO
YES
S1204
IS SECOND STANDARD SATISFIED?
NO
YES
S1203
REQUEST FOR INCREASING TRANSMISSION FREQUENCY
S1205
REQUEST FOR DECREASING TRANSMISSION FREQUENCY
END

FIG.27

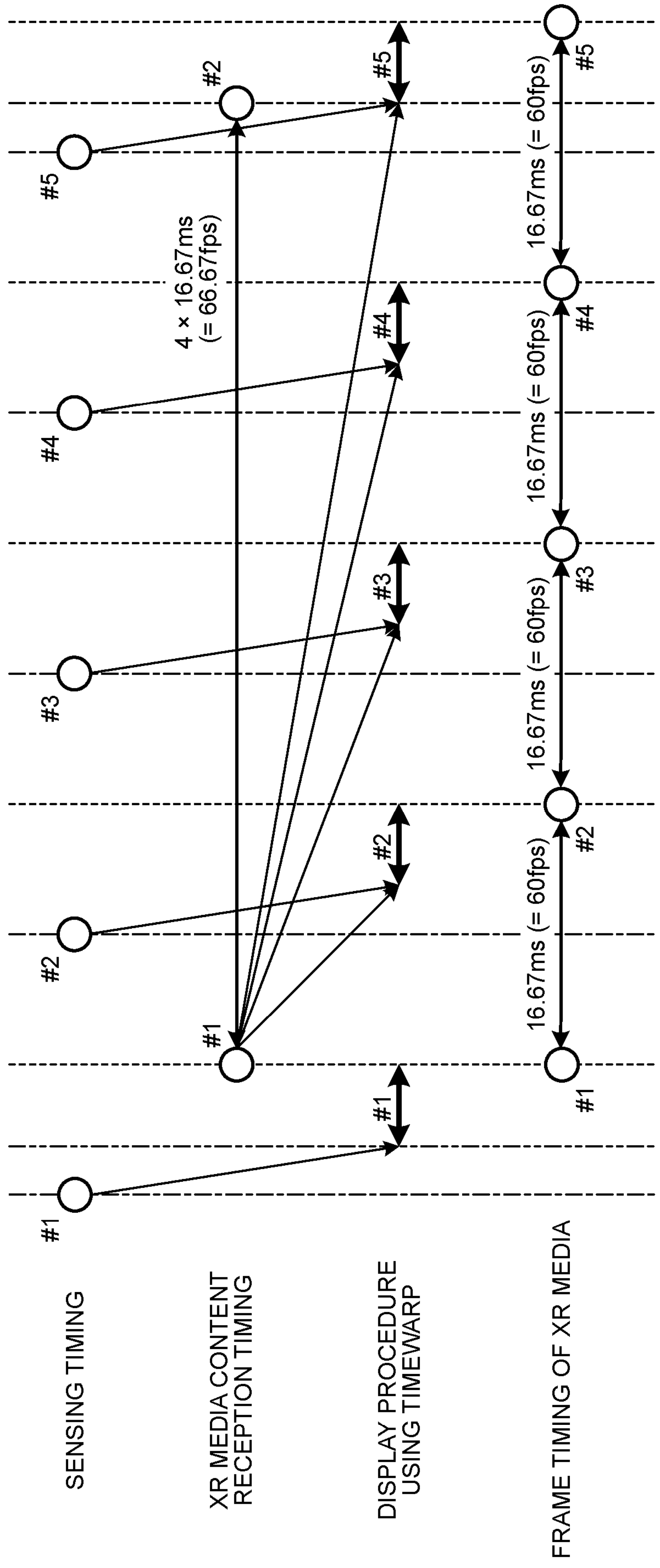
SENSING TIMING
XR MEDIA CONTENT RECEPTION TIMING
DISPLAY PROCEDURE USING TIMEWARP
FRAME TIMING OF XR MEDIA
#1
#2
#3
#4
#5
4 × 16.67ms (= 66.67fps)
16.67ms (= 60fps)

FIG.28

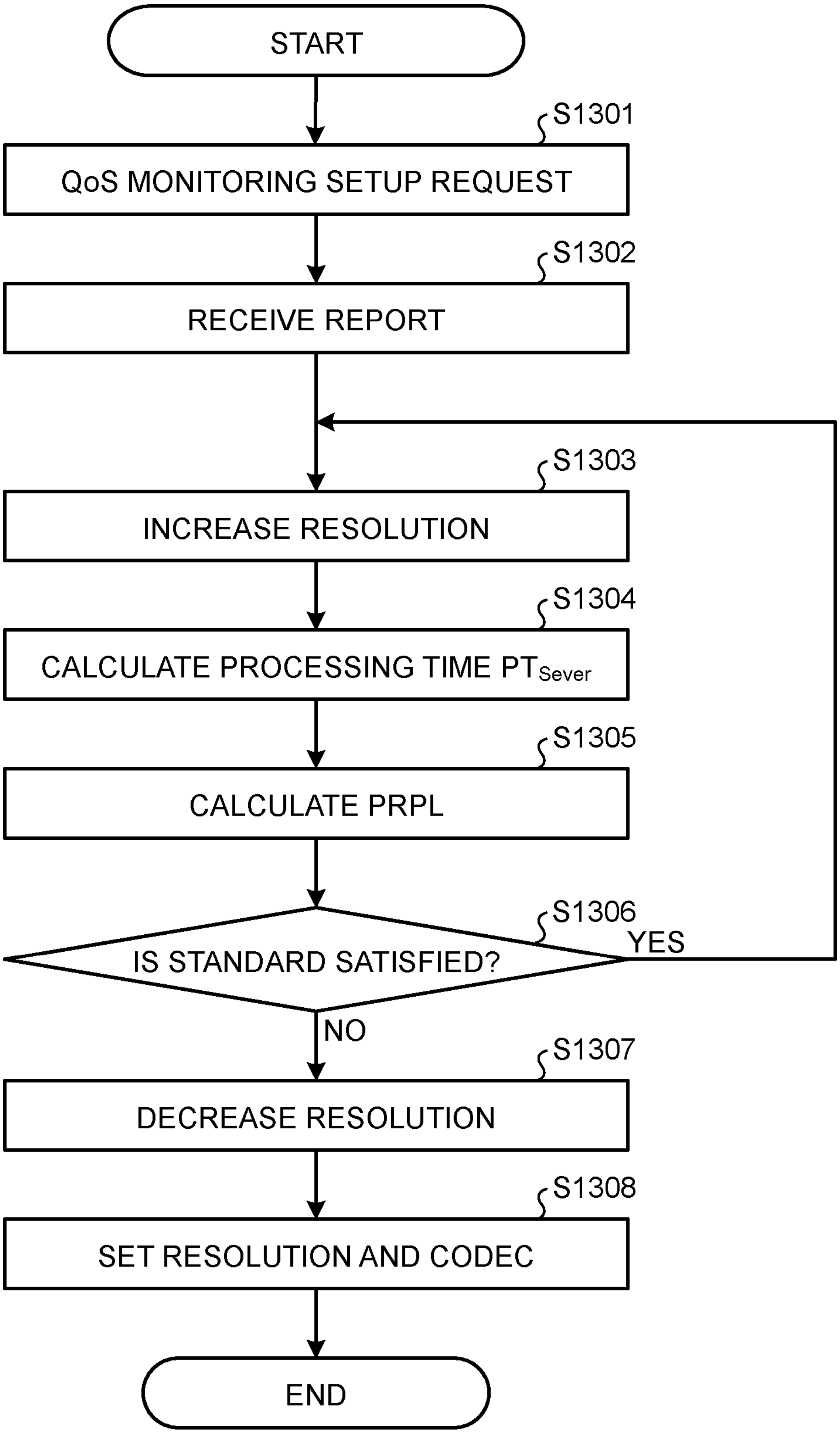
START
S1301
QoS MONITORING SETUP REQUEST
S1302
RECEIVE REPORT
S1303
INCREASE RESOLUTION
S1304
CALCULATE PROCESSING TIME $PT_{Sever}$
S1305
CALCULATE PRPL
S1306
IS STANDARD SATISFIED?
YES
NO
S1307
DECREASE RESOLUTION
S1308
SET RESOLUTION AND CODEC
END

FIG.29

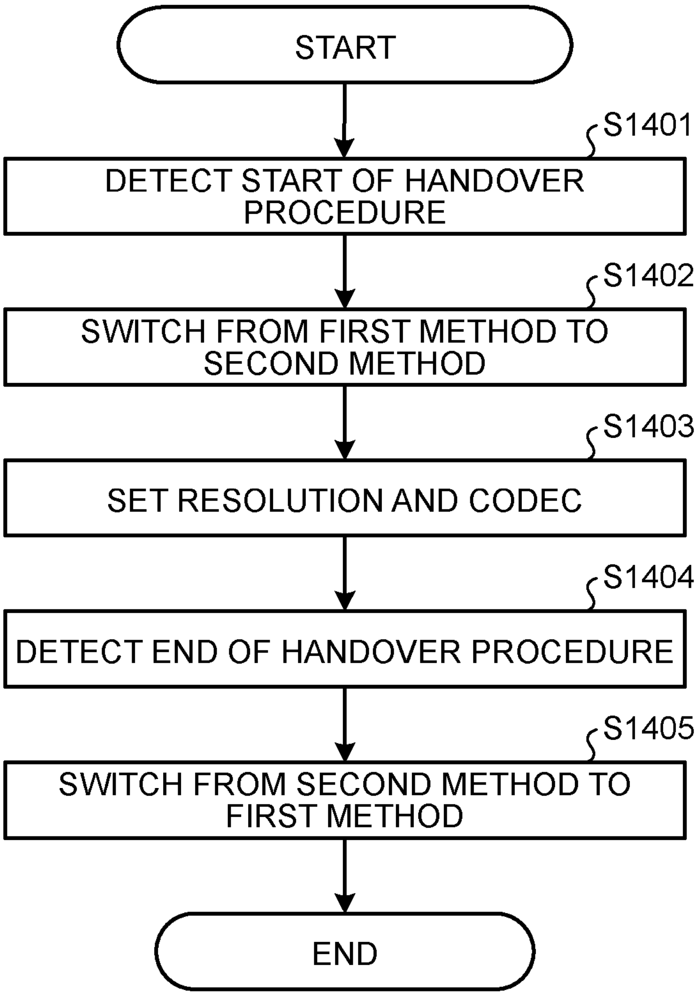
START
S1401
DETECT START OF HANDOVER PROCEDURE
S1402
SWITCH FROM FIRST METHOD TO SECOND METHOD
S1403
SET RESOLUTION AND CODEC
S1404
DETECT END OF HANDOVER PROCEDURE
S1405
SWITCH FROM SECOND METHOD TO FIRST METHOD
END

FIG.30

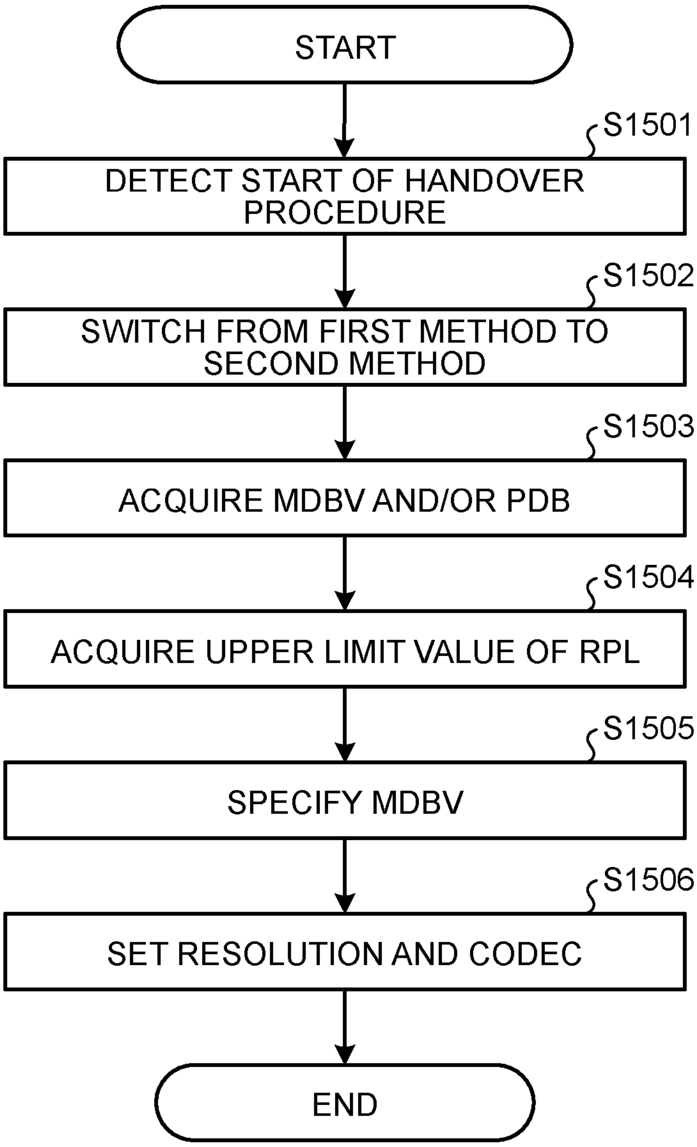
START
S1501
DETECT START OF HANDOVER PROCEDURE
S1502
SWITCH FROM FIRST METHOD TO SECOND METHOD
S1503
ACQUIRE MDBV AND/OR PDB
S1504
ACQUIRE UPPER LIMIT VALUE OF RPL
S1505
SPECIFY MDBV
S1506
SET RESOLUTION AND CODEC
END

**INTERNATIONAL SEARCH REPORT**

International application No.
**PCT/JP2024/026222**

**A. CLASSIFICATION OF SUBJECT MATTER**

***H04N 21/2662***(2011.01)i; ***G06T 19/00***(2011.01)i; ***H04N 21/24***(2011.01)i; ***H04W 28/24***(2009.01)i
FI: H04N21/2662; H04W28/24; G06T19/00 A; H04N21/24

According to International Patent Classification (IPC) or to both national classification and IPC

**B. FIELDS SEARCHED**

Minimum documentation searched (classification system followed by classification symbols)

H04N21/2662; G06T19/00; H04N21/24; H04W28/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/132187 A1 (SONY GROUP CORPORATION) 13 July 2023 (2023-07-13) entire text, all drawings | 1-20 |
| A | WO 2022/009745 A1 (SONY GROUP CORPORATION) 13 January 2022 (2022-01-13) entire text, all drawings | 1-20 |
| A | JP 2022-533734 A (FRAUNHOFER-GESELLSCHAFT ZUR FÖRDERUNG DER ANGEWANDTEN FORSCHUNG E.V.) 25 July 2022 (2022-07-25) entire text, all drawings | 1-20 |
| A | US 10706813 B1 (FACEBOOK TECHNOLOGIES, LLC) 07 July 2020 (2020-07-07) entire text, all drawings | 1-20 |
| A | JP 2022-525496 A (TENCENT TECHNOLOGY (SHENZHEN) COMPANY LIMITED) 17 May 2022 (2022-05-17) entire text, all drawings | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/026222**

| Patent document cited in search report | Publication date (day/month/year) | Patent family member(s) | Publication date (day/month/year) |
|---|---|---|---|
| WO 2023/132187 A1 | 13 July 2023 | (Family: none) | |
| WO 2022/009745 A1 | 13 January 2022 | US 2023/0239818 A1<br>entire text, all drawings | |
| JP 2022-533734 A | 25 July 2022 | US 2022/0078396 A1<br>entire text, all drawings<br>US 2022/0059234 A1<br>WO 2020/234373 A1<br>CN 113966600 A<br>KR 10-2022-0011688 A | |
| US 10706813 B1 | 07 July 2020 | US 2019/0244582 A1<br>US 2020/0118519 A1<br>WO 2019/152068 A1<br>WO 2019/152067 A1<br>EP 3521899 A1<br>EP 3522150 A2<br>CN 111902842 A<br>CN 111656433 A | |
| JP 2022-525496 A | 17 May 2022 | US 2021/0274389 A1<br>entire text, all drawings<br>WO 2020/199792 A1<br>EP 3952437 A1<br>CN 110062426 A<br>KR 10-2021-0109625 A | |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP 2021100256 A